(19) Europäisches Patentamt / European Patent Office / Office européen des brevets

(11) **EP 4 238 646 A1**

(12) **EUROPEAN PATENT APPLICATION**

(43) Date of publication:
**06.09.2023 Bulletin 2023/36**

(21) Application number: **22159972.3**

(22) Date of filing: **03.03.2022**

(51) International Patent Classification (IPC):
***B01J 23/00*** *(2006.01)* ***B01J 23/78*** *(2006.01)*
***B01J 37/18*** *(2006.01)* ***B01J 27/236*** *(2006.01)*
***C01B 21/00*** *(2006.01)* ***C01C 1/00*** *(2006.01)*

(52) Cooperative Patent Classification (CPC):
(C-Sets available)
**B01J 23/005; B01J 23/78; B01J 27/236;**
**B01J 37/18; C01C 1/00;** B01J 2523/00 (Cont.)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Fritz-Haber-Institut der Max-Planck-Gesellschaft**
**14195 Berlin (DE)**

(72) Inventors:
- **Ruland, Holger**
  **45470 Mülheim an der Ruhr (DE)**
- **Folke, Jan**
  **45470 Mülheim an der Ruhr (DE)**
- **Rein, Denise**
  **63457 Hanau (DE)**
- **Ortega, Klaus Friedel**
  **40477 Düsseldorf (DE)**
- **Behrens, Malte**
  **24159 Kiel (DE)**
- **Schlögl, Robert**
  **45470 Mülheim an der Ruhr (DE)**

(74) Representative: **Hoffmann Eitle**
**Patent- und Rechtsanwälte PartmbB**
**Arabellastraße 30**
**81925 München (DE)**

(54) **CATALYTICALLY ACTIVE MATERIAL FOR AMMONIA SYNTHESIS OBTAINABLE BY REDUCTION OF A PRECURSOR MATERIAL HAVING A PHASE PURE SPINEL STRUCTURE**

(57) The present invention relates to a catalytically active material for ammonia synthesis obtainable by reducing a precursor material having a phase pure spinel structure which itself is obtainable by heating an intermediate having a layered double hydroxide (LDH) structure. The present invention is also directed to a method of forming the catalytically active material and to a method of synthesizing ammonia, decomposing ammonia or both when using the catalytically active material. Moreover, the present invention is concerned with the use of the catalytically active material in the synthesis of ammonia, decomposition of ammonia or both as well as the use of the intermediate and the precursor material in the preparation of the catalytically active material for ammonia synthesis.

Fig. 31

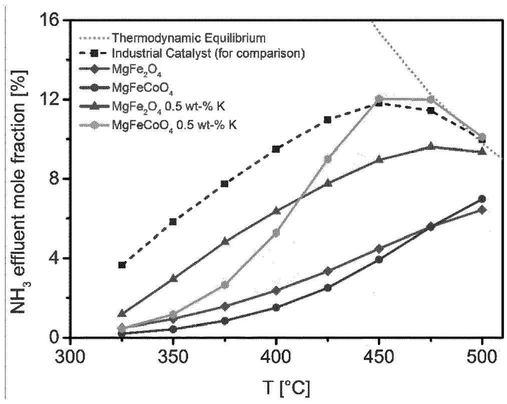


EP 4 238 646 A1

(52) Cooperative Patent Classification (CPC): (Cont.)

C-Sets
B01J 2523/00, B01J 2523/13, B01J 2523/22,
B01J 2523/842, B01J 2523/845;
B01J 2523/00, B01J 2523/22, B01J 2523/842,
B01J 2523/845

## Description

### Technical Field of the Invention

The present invention relates to a catalytically active material for ammonia synthesis obtainable by reducing a precursor material having a phase pure spinel structure which itself is obtainable by heating an intermediate having a layered double hydroxide (LDH) structure.

The present invention is also directed to a method of forming the catalytically active material and to a method of synthesizing ammonia, decomposing ammonia or both when using the catalytically active material. Moreover, the present invention is concerned with the use of the catalytically active material in the synthesis of ammonia, decomposition of ammonia or both as well as the use of the intermediate and the precursor material in the preparation of the catalytically active material for ammonia synthesis.

### Background Art

Ammonia synthesis over Fe-based catalysts by the Haber-Bosch-process is one of the most important processes in the chemical industry. Although the Haber-Bosch-process has been applied for more than 100 years and is one of the most investigated reactions in heterogeneous catalysis, there is still potential for optimization of the process and the catalyst.

The industrial ammonia synthesis catalyst is obtained by reduction of an iron oxide-based precursor to $\alpha$-iron. At present, two different iron oxide precursor materials are used industrially, as they have been proven to lead to a superior activity compared to other iron oxide phases. On the one hand, the classical Haber-Bosch precursor consisting of a magnetite ($Fe_3O_4$) main phase with small amounts of metastable wuestite ($Fe_{1-x}O$) and $\alpha$-iron incorporated in the structure is widely used. On the other hand, a more recently developed precursor consisting only of a wuestite phase (H. Liu, Catalysis Today 2017, 297, 276-291) has been used. Both precursors are synthesized using a fusion process requiring extremely high temperatures of >1600 °C with subsequent quenching. This process is considered necessary to obtain the specific iron oxide phase compositions and to add small amounts of different promoters to the precursor materials.

Plenty of elements (*e.g.* K, Al, Ca, Mg, Si and Cr) have been reported to have a promotional effect on ammonia synthesis catalysts and some of them are known to have a significant influence on the activity of the catalyst. The amount and number of promoters for industrial ammonia synthesis catalysts has been optimized for decades, and current industrial catalysts contain about a dozen promoters. Despite intensive studies, a full understanding of all effects of the different promoters is still missing. In particular, as they are introduced to the catalyst precursor during the high temperature fusion process, the distribution of the promoters is inhomogeneous and it remains unclear how much of the total content of the added promoter material actually contributes to the performance of the catalyst (P. Stoltze, Structure and Surface Chemistry of Industrial Ammonia Synthesis Catalysts, in Ammonia Catalysis and Manufacture, PA. Nielson (eds.), Springer, 1995).

Catalytic ammonia synthesis is a highly structural sensitive reaction, in which only a few specific surface structures of the catalyst show a significant catalytic activity. As an illustration of this point with regard to iron catalysts, some studies estimate that less than about 5% of the surface of an industrial iron catalyst is actually covered with catalytic active centers (R. Schlögl, in Handbook of Heterogeneous Catalysis, G. Ertl, H. Knötzinger, F. Schüth, J. Weitkamp (eds.), Wiley-VCH, second edition, 2008). This makes the development of improved catalysts difficult, as species capable of promoting the catalysis cannot easily be selectively positioned at the active sites. This makes it difficult to study the impact of any such promoters on the catalyst performance.

Although there is a general understanding of the underlying reaction mechanism, some open questions remain about the behaviour of the catalyst under reaction conditions. While the catalyst has a lifetime in the industrially applied process of up to 14 years, it is extremely sensitive to poisoning by oxygen-containing species (B. Fastrup, Catal. Lett. 1992, 14, 233-239; J. Folke, Chem. Ing. Tech. 2020, 92, 1567-1573). Even small amounts of oxygen-containing compounds in the ppm region will lead to a severe decrease in activity. For the iron-based catalyst this effect is reversible and the initial activity can be fully recovered by applying a thoroughly cleaned synthesis gas. This kind of dynamic self-generation indicates that the real active site under industrially applied process conditions is not yet fully understood and requires additional research efforts. This is particularly relevant for smaller reactors where such gas cleaning is not feasible or not efficient in terms of production.

Recently, magnesioferrite-derived spinels of the type $MgFe^{2+}Fe^{3+}O_4$ obtained from calcination of LDHs were investigated in ammonia decomposition and synthesis (K. Ortega, ChemCatChem 2017, 9, 659-671). However, besides the LDH structure a low fraction of magnetite was formed during co-precipitation in the presence of $Fe^{2+}$ and $Fe^{3+}$ species. Upon calcination of this magnetite phase together with the LDH structure a spinel phase accompanied by minor contributions ascribable to hematite is formed. Hence the spinel precursor material is not phase pure. The presence of

such a by-phase in the spinel precursor material leads to an increase in the number of inactive sites in the subsequent ammonia synthesis catalyst and reduces the activity of the catalyst. This inhomogeneity of the precursor material and the catalyst also makes it more difficult to assess the impact promoters have on the structure and activity of further catalysts, as the promoter cannot be assumed to be homogeneously distributed throughout the catalyst, and may not be present at the active sites.

## Technical Problem

Accordingly, in view of the prior art there is a demand for catalytically active materials having fewer inactive sites for ammonia synthesis, which as described above is highly sensitive to the structure of the catalysts. The catalytically active material should also have an improved potential for investigation of the overall behaviour of the catalyst with regard to the mechanism and role of the promoters. Further, there is a demand for providing a reliable and flexible method for forming such catalytically active materials with reduced energy consumption. There is also a demand for the use of such a catalytically active material in the synthesis of ammonia, the decomposition of ammonia or both.

## Summary of the Invention

The present invention solves the above problem by providing a catalytically active material for ammonia synthesis obtainable by reducing a phase pure spinel structure as a precursor material.

The phase pure spinel structure precursor material of the present invention is synthesized by heating an intermediate having a LDH structure, wherein this intermediate is obtained by co-precipitation and subsequent ageing of the co-precipitated product (steps 1 and 2 of the method according to the present invention, which is described below in further detail). Surprisingly, it has been found that the phase purity of the spinel structure precursor material can be altered by the ageing process used when preparing the LDH structure. Accordingly, an LDH structure can be obtained that contains no impurities except one or more by-phases of prematurely formed spinel precursor and therefore results in a phase pure spinel structure when it is heated. The intermediate also delivers a much higher homogeneity of the promoters in the precursor material compared to those obtained by the traditional fusion process. It has furthermore surprisingly been found that the enhanced phase purity of the precursor may deliver improved activity of the resulting catalyst.

Moreover, the simple co-precipitation process of the present invention is far less energy demanding than the high temperature fusion process. This energetically more favorable synthesis route in combination with the resulting high homogeneity allows an easy and controllable tuning of the present precursor material’s properties by insertion of various promoters. Thus, a selective and well-defined introduction of various promoters in a broad range of amounts and combinations in the catalyst of the present invention can be achieved.

The present invention accordingly provides a simple solution for achieving the same ammonia synthesis activity as for the multipromoted industrial catalyst while using far fewer promoters. The catalyst of the present invention is stable even under high pressure and temperature reaction conditions of the ammonia synthesis. The high activity in combination with the well-defined structure of the present catalyst allows detailed studies on the mechanism, the dynamic self-generation discussed above and the impact of different promoters on the overall behaviour of the catalyst. The well-defined structure can lead to a higher resistance against poisoning which may in turn allow the decentralized synthesis and decomposition of ammonia in small reactors, at industrial sites where severe gas cleaning is not feasible or not efficient in terms of production.

Finally, the catalytically active material of the present invention can be used in the synthesis of ammonia and additionally shows activity in the decomposition of ammonia.

The invention encompasses the following embodiments:

Embodiment 1. A catalytically active material for ammonia synthesis obtainable by reducing a precursor material;

wherein the precursor material has a phase pure spinel structure of the following chemical formula (1):

$$(AB_2O_4)_a\cdot(\text{Promoter cation})_b(\text{Promoter anion})_c \qquad (1);$$

wherein A is a divalent cation selected from one or more of the following:

A1 Fe, Co, Ru, and/or

A2 ammonia synthesis catalyst promoters selected from one or more transition metals and/or alkaline earth metals;

wherein B is a trivalent cation selected from one or more of the following:

B1 Fe, Co, Ru, and/or
B2 ammonia synthesis catalyst promoters selected from one or more transition metals and/or rare earth metals;

wherein the same or different elements can be selected for A and B with the proviso that in chemical formula (1) the total moles of A1 and B1 as a percentage of the total moles of cations in the precursor material is 5 - 95%, preferably 10 - 90%, more preferably 25 - 80%, most preferably 33 - 67%;
wherein the Promoter cation is selected from one or more ammonia synthesis catalyst promoters;
wherein the Promoter anion is selected from one or more monovalent or divalent anions;
wherein the molar ratio a:b is in the range 1:0 - 1:0.4;
wherein when b is 0, c is also 0,
wherein the molar ratio b:c is selected such that the charges of the Promoter cation and Promoter anion are balanced.

Embodiment 2. The catalytically active material of embodiment 1, wherein in the precursor material:

the transition metals in A2 are one or more selected from Ni, V, Mn, Cr, Ti, Pd, Pt; and/or
the alkaline earth metals in A2 are one or more selected from Mg and Ca; and/or
the transition metals in B2 are one or more selected from Ni, V, Mn, Cr, Ti, Pd, Nb, Mo, Rh; and/or
the rare earth metals in B2 are selected from one or more of La and Ce; and/or
the Promoter cation is selected from one or more alkali metals, alkaline earth metals,
transition metals, rare earth metals, main group metals, and main group semiconductors;

wherein the alkali metals preferably comprise K;
wherein the alkaline earth metals preferably comprise Mg and/or Ca;
wherein the transition metals preferably comprise Ni, V, Mn, Cr, Ti, Mo, Rh, Pd, Pt, Sc, Y, Zr, W, Os, Nb, Ta, and/or Re;
wherein the rare earth metals preferably comprise La, Ce, Sm, Eu, Dy, Ho, Er, Yb and/or U,
wherein the main group metals preferably comprise Al and/or Ga, and
wherein the main group semiconductors preferably comprise Si; and/or

the Promoter anion is selected from one or more of oxide, hydroxide, sulfate, halides or organic anions;

wherein the organic anions are preferably formate or oxalate; and/or
wherein the Promoter anion is preferably oxide.

Embodiment 3. The catalytically active material of embodiment 1 or embodiment 2, wherein in the precursor material:

A comprises Mg, B comprises Fe and/or Co;
the total moles of Co and/or Fe as a percentage of the total moles of cations in the precursor material is 10 - 90%, preferably 25 - 80%, most preferably 33 - 67%;
when present the Promoter cation comprises K;
when present the Promoter anion comprises oxide; and
the molar ratio a:b is 1:0-1:0.272, preferably 1:0-1:0.052.

Embodiment 4. The catalytically active material of embodiment 1, 2 or 3, wherein the reduction comprises heating the precursor material in the presence of hydrogen.

Embodiment 5. The catalytically active material of embodiment 1, 2, 3 or 4, wherein the material comprises metallic nanoparticles having the following chemical formula (2a) and nanoparticles having the following chemical formula (2b), wherein the nanoparticles having chemical formulae (2a) and (2b) form an agglomerate:

$$(D^*)_a \cdot (\text{Promoter cation})_b (\text{Promoter anion})_c \qquad (2a)$$

wherein D* is selected from one or more of the following elements in a metallic form:

D*1 Fe, Co, Ru, and/or
D*2 ammonia synthesis catalyst promoters selected from one or more transition metals, rare earth metals and/or alkaline earth metals;

wherein the Promoter cation is selected from one or more ammonia synthesis catalyst promoters;
wherein the Promoter anion is selected from one or more monovalent or divalent anions;
wherein the molar ratio a:b is 1:0 - 1:0.4;
wherein when b is 0, c is also 0,
wherein the molar ratio b:c is selected such that the charges on the Promoter cation and Promoter anion are balanced;

$$(D_dO_e)_a\cdot(\text{Promoter cation})_b(\text{Promoter anion})_c \qquad (2b)$$

wherein O is oxide and D is a cation selected from one or more of the following:

D1 Fe, Co, Ru, and/or
D2 ammonia synthesis catalyst promoters selected from one or more transition metals, rare earth metals, and/or alkaline earth metals;

wherein e is 1 and d is selected such that the charges on D and O are balanced;
wherein the Promoter cation and the Promoter anion as well as a, b and c are as defined for chemical formula (2a);
wherein the mass ratio of (nanoparticles having chemical formula (2a)):(nanoparticles having chemical formula (2b)) is in the range of 1:99 - 99:1 wt%,
with the proviso that in the catalytically active material the total moles of D*1 and D1 as a percentage of the total moles of metals in the material is 5 - 95%, preferably 10 - 90%, more preferably 25 - 80%, most preferably 33 - 67%.

Embodiment 6. The catalytically active material of embodiment 5,

wherein the transition metals in D*2 and/or D2 are one or more selected from Ni, V, Mn, Cr, Ti, Pd, Pt, Nb, Mo, Rh; and/or
wherein the alkaline earth metals in D*2 and/or D2 are one or more selected from Mg and Ca; and/or
wherein the rare earth metals in D*2 and/or D2 are selected from one or more of La and Ce; and/or
wherein the Promoter cation and/or the Promoter anion are as defined in embodiment 2.

Embodiment 7. The catalytically active material of embodiment 5 or embodiment 6,

wherein D* comprises Fe and/or Co;
wherein D comprises Mg, Fe, and/or Co;
wherein when present the Promoter cation in chemical formulae (2a) and/or (2b) comprises K;
wherein the molar ratio a:b in chemical formulae (2a) and (2b) is independently 1:0 - 1:0.272, preferably 1:0 - 1:0.052;
wherein when present the Promoter anion in chemical formulae (2a) and/or (2b) is oxide;
wherein the mass ratio of (nanoparticles having chemical formula (2a)):(nanoparticles having chemical formula (2b))

is in the range of 40:60-60:40 wt%, preferably 45:55-55:45 wt%.

Embodiment 8. The catalytically active material of embodiment 1, 2, 3, 4, 5, 6, or 7,

wherein the precursor material is obtainable by
3) heating an intermediate to form the precursor material having a phase pure spinel structure; and optionally carrying out step 3a):

3a) contacting the precursor material from step 3) with a solution comprising a Promoter cation and Promoter anion to impregnate the Promoter cation and
Promoter anion in the spinel structure;

wherein the intermediate has a layered double hydroxide (LDH) structure, into which the Promoter cation and Promoter anion are optionally impregnated;

wherein the intermediate has the following chemical formula (3):

$$([A_{1-x}B_x(OH)]^{x+}[\text{LDH-Anion}_{x/n}]^{x-})_a \cdot mH_2O \cdot (\text{Promoter cation})_b(\text{Promoter anion})_c \quad (3);$$

wherein A and B are the same as defined for the precursor material in embodiment 1; with the proviso that when A includes elements which are not capable of exhibiting the 3+ oxidation state, the ratio (total moles of elements in A which are not capable of exhibiting the 3+ oxidation state):(total moles of elements in A which are capable of exhibiting 3+ oxidation state) is less than or equal to 1:1;

wherein the LDH-Anion is selected from one or more monovalent or divalent anions;

wherein x is 0.2 - 0.33, n is the charge of the anion and m is the amount of crystal water in the LDH and is 1-10;

wherein the a, b, c, the Promoter cation and the Promoter anion are as defined for the precursor material in embodiment 1.

Embodiment 9. The catalytically active material of embodiment 8, wherein in the intermediate:

the A2, B2, and/or the Promoter cation are as defined for the precursor material in embodiment 2; and/or

the LDH-Anion is one or more selected from chloride, sulphate, nitrate, carbonate and bicarbonate, and preferably carbonate or bicarbonate; and/or

the Promoter anion is selected from one or more of hydroxide, sulfate, halides or organic anions, wherein the organic anions are preferably carbonate, bicarbonate, formate or oxalate.

Embodiment 10. The catalytically active material of embodiment 8 or embodiment 9, wherein in the intermediate:

A comprises Mg and Fe, B comprises Fe and/or Co;

the total number of moles of Co and/or Fe as a percentage of the total moles of cations in the intermediate is 10 - 90%, preferably 25 - 80%, most preferably 33 - 67%;

the LDH-Anion comprises carbonate;

when present the Promoter cation comprises K;

the molar ratio a:b is 1:0-1:0.272, more preferably 1:0-1:0.052;

when present the Promoter anion comprises carbonate or bicarbonate.

Embodiment 11. The catalytically active material of embodiment 8, 9 or 10, wherein the intermediate is obtainable by the following sequence of steps:

1) a co-precipitation reaction of A, B, and LDH-Anion to deliver a suspension of a co-precipitated product having an LDH structure;

2) ageing the suspension of the co-precipitated product from step 1) to form a LDH structure; and optionally carrying out step 2a):

2a) contacting the aged product from step 2) with a solution comprising the Promoter cation and Promoter anion to impregnate the Promoter cation and Promoter anion defined in embodiment 8, 9 or 10 in the LDH structure.

Embodiment 12. A method of forming the catalytically active material defined in embodiment 1, 2, 3, 4, 5, 6, 7, 8, 9, 10 or 11, comprising the following sequence of steps:

1) a co-precipitation reaction of A, B, and LDH-Anion to deliver a suspension of a co-precipitated product having an LDH structure, wherein A, B, and LDH-Anion are defined in embodiment 8, 9 or 10;

2) ageing the suspension of the co-precipitated product from step 1) to form an intermediate having a LDH structure; and optionally carrying out step 2a):

2a) contacting the intermediate from step 2) with a solution comprising the Promoter cation and Promoter anion to impregnate the Promoter cation and Promoter anion defined in embodiment 8, 9 or 10 in the LDH structure;

3) heating the intermediate obtained in step 2) or step 2a) to form a precursor material having a phase pure spinel structure; and optionally carrying out step 3a):

3a) contacting the precursor material from step 3) with a solution comprising the Promoter cation and Promoter anion to impregnate the Promoter cation and Promoter anion defined in embodiment embodiment 1, 2, or 3 in the spinel structure;

4) reducing the precursor material obtained in step 3) or step 3a) to form the catalytically active material.

Embodiment 13. A method of synthesizing ammonia and/or decomposing ammonia using the catalytically active material of embodiment 1, 2, 3, 4, 5, 6, 7, 8, 9, 10 or 11.

Embodiment 14. Use of the catalytically active material of embodiment 1, 2, 3, 4, 5, 6, 7, 8, 9, 10 or 11 in the synthesis of ammonia and/or the decomposition of ammonia.

Embodiment 15. Use of an intermediate as defined in embodiment 8, 9, 10, or 11 and/or a precursor material as defined in embodiment 1, 2 or 3 in the preparation of a catalytically active material for ammonia synthesis.

Where the present description refers to "preferred" embodiments/features, combinations of these "preferred" embodiments/features shall also be deemed as disclosed as long as this combination of "preferred" embodiments/features is technically meaningful.

Hereinafter, the use of the term "comprising" should be understood as disclosing, as a more restricted embodiment, the term "consisting of" as well, as long as this is technically meaningful.

Where the application refers to a ratio of x:y e.g. 1:2, this can be read also as the corresponding number e.g. 1/2 = 0.5. Hence, a lower ratio of x:y would be one in which the y is relatively larger than x than in the first ratio, e.g. 1:3 is a lower x:y ratio than 1:2.

**Brief Description of the Figures**

**Fig. 1:** Powder X-ray diffraction (P-XRD) patterns of catalysts derived from Comparative Example 1 and Example 3 after ammonia synthesis.

**Fig. 2:** Magnified P-XRD patterns of catalysts derived from Comparative Example 1 and Example 3 after ammonia synthesis with reference pattern of $\alpha$-iron and $Fe_{0.5}CO_{0.5}$ alloy from the Crystallography Open Database (http://www.crystallography.net/cod; accessed on July 2020).

**Fig. 3:** P-XRD patterns of the LDH intermediates of Comparative Example 1 and Example 1, and reference patterns of Hydrotalcite as the reference mineral for the LDH structure and $MgFe_2O_4$ and from the inorganic crystal structure database (https://icsd.products.fiz-karlsruhe.de; accessed on July 2020).

**Fig. 4:** P-XRD patterns of Comparative Example 1 and Example 1, and reference patterns of $MgFe_2O_4$ and $Fe_2O_3$ from the inorganic crystal structure database (https://icsd.products.fiz-karlsruhe.de; accessed on July 2020).

**Fig. 5:** P-XRDs of Examples 1 and 2, and reference patterns of $MgFe_2O_4$ and $Fe_2O_3$ from the inorganic crystal structure database (https://icsd.products.fiz-karlsruhe.de; accessed on July 2020).

**Fig. 6:** P-XRD patterns of the LDH intermediates of Comparative Example 1 and Example 3, and reference patterns of Hydrotalcite as the reference mineral for the LDH structure and $MgFe_2O_4$ and from the inorganic crystal structure database (https://icsd.products.fiz-karlsruhe.de; accessed on July 2020).

**Fig. 7:** P-XRD patterns of Comparative Example 1 and Example 3, and reference patterns of $MgFe_2O_4$ and $Fe_2O_3$ from the inorganic crystal structure database (https://icsd.products.fiz-karlsruhe.de; accessed on July 2020).

**Fig. 8:** P-XRDs of Comparative Example 1 and Comparative Examples 2, and reference patterns of $MgFe_2O_4$ and $Fe_2O_3$ from the inorganic crystal structure database (https://icsd.products.fiz-karlsruhe.de; accessed on July 2020).

**Fig. 9a:** Activation of the precursor material of Comparative Example 1 in 75% $H_2$, 25% $N_2$ with a heating rate of 1 K/min to 500 °C.

**Fig. 9b:** Activation of the precursor material of Example 1 in 75% $H_2$, 25% $N_2$ with a heating rate of 1 K/min to 500 °C.

**Fig. 10:** Ammonia synthesis activity of catalysts derived from Comparative Example 1 and Example 1 compared to Comparative Example 5 at 325-500 °C and 90 bar.

**Fig. 11:** Arrhenius plot of the precursor materials of Comparative Example 1 and Example 1 for determination of the apparent activation energy.

**Fig. 12:** P-XRD patterns of catalysts derived from Comparative Example 1 and Example 1 after ammonia synthesis with reference pattern of $\alpha$-iron and $Mg_{0.6}Fe_{0.4}O$ from the Crystallography Open Database (http://www.crystallography.net/cod; accessed on July 2020).

**Fig. 13:** BJH pore size distribution of the precursor materials of Comparative Example 1 and Example 1 and the reduced catalysts after ammonia synthesis.

**Fig. 14:** BET surface areas of the precursor materials and the reduced catalysts after ammonia synthesis of Comparative Example 1 and Example 1 compared to Comparative Example 5.

**Fig. 15:** Micrographs of Comparative Example 1 after reduction and catalysis a) SEM, b) TEM, c)-e) EDX mapping for Fe, Mg and O.

**Fig. 16:** Micrographs of Example 1 after reduction and catalysis a) TEM, b)-e) EDX mapping for Fe, Mg, O and Fe + Mg combined.

**Fig. 17:** Ammonia synthesis activity of the catalytically active materials of Comparative Example 1 and Comparative Example 2 (2%K), spinel and LDH impregnated, compared to Comparative Example 5 at 325-500 °C and 90 bar.

**Fig. 18:** Ammonia synthesis reaction rate of catalysts derived from Examples 1 and 2 at 425 °C.

**Fig. 19:** BET surface areas of the precursor materials of Examples 1 and 2 and the reduced catalyst after catalytic testing.

**Fig. 20:** Pore volume of the precursor materials and the $\alpha$-Fe and $Mg_{1-x}Fe_xO$ phase of the reduced catalyst after catalytic testing of Examples 1 and 2.

**Fig. 21:** BJH pore size distribution of the precursor materials of Examples 1-2.

**Fig. 22:** BJH pore size distribution of the catalysts derived from the precursor materials of Examples 1-2 after catalytic testing.

**Fig. 23:** P-XRDs of the $\alpha$-Fe and $Mg_{1-x}Fe_xO$ phase of the catalysts derived from Examples 1 and 2 after catalytic testing.

**Fig. 24:** Volume weighted mean column length ($L_{VOL}$-IB) of the $\alpha$-Fe and $Mg_{1-x}Fe_xO$ phase of catalysts derived from Examples 1 and 2 after catalytic testing.

**Fig. 25:** Micrographs of Example 2 (0.5%K) after reduction and catalysis a) TEM, b)-e) EDX mapping for Fe, Mg, K and Fe + Mg combined.

**Fig. 26:** Micrographs of Example 2 (10%K) after reduction and catalysis: a) and b) TEM, c)-e) EDX mapping for Mg, K and Fe.

**Fig. 27:** Ammonia synthesis activity of catalysts derived from Example 1 and Example 2 (0.5%K) compared to Comparative Example 5 at 325-500 °C and 90 bar.

**Fig. 28:** Reaction rate normalized to iron mass of catalysts derived from Example 1 and Example 2 (0.5%K) compared to Comparative Example 5 at 325-500 °C and 90 bar.

**Fig. 29:** Catalytic activity of the catalysts derived from Comparative Example 1 ($MgFe_2O_4$) and Example 3 ($MgFeCoO_4$) compared to Comparative Example 5 at 90 bar, 200 NmL/min (75% $H_2$, 25% $N_2$) and 325-500 °C.

**Fig. 30:** Catalytic activity of the catalysts derived from Example 3 ($MgFeCoO_4$) and Example 4 ($MgFeCoC_4$ with 0.5%K) compared to Comparative Example 5 at 90 bar, 200 NmL/min (75% $H_2$, 25% $N_2$) and 325-500 °C.

**Fig. 31:** Catalytic activity of the catalysts derived from Example 1, Example 2 (0.5%K), Example 3 ($MgFeCoO_4$) and Example 4 ($MgFeCoO_4$ with 0.5%K) compared to Comparative Example 5 at 90 bar, 200 NmL/min (75% $H_2$, 25% $N_2$) and 325-500 °C.

**Fig. 32:** $H_2$ partial pressure variation for ammonia synthesis at 325°C, 375°C and 425°C with catalyst derived from Comparative Example 1.

**Fig. 33:** $N_2$ partial pressure variation for ammonia synthesis at 325°C, 375°C and 425°C with catalyst derived from Comparative Example 1.

**Fig. 34:** $H_2$ partial pressure variation for ammonia synthesis at 325°C, 375°C and 425°C with catalyst derived from Comparative Example 2 (2%K), spinel impregnated.

**Fig. 35:** $N_2$ partial pressure variation for ammonia synthesis at 325°C, 375°C and 425°C with catalyst derived from Comparative Example 2 (2%K), spinel impregnated.

**Fig. 36:** $H_2$ partial pressure variation for ammonia synthesis at 325°C, 375°C and 425°C with catalyst derived from Comparative Example 2 (2%K), LDH impregnated.

**Fig. 37:** $N_2$ partial pressure variation for ammonia synthesis at 325°C, 375°C and 425°C with catalyst derived from Comparative Example 2 (2%K), LDH impregnated.

**Fig. 38:** $H_2$ partial pressure variation for ammonia synthesis at 325°C, 375°C and 425°C with Comparative Example 5.

**Fig. 39:** $N_2$ partial pressure variation for ammonia synthesis at 325°C, 375°C and 425°C with Comparative Example 5.

**Fig. 40:** $H_2$ reaction order vs. conversion of catalysts derived from Comparative Example 1 and Comparative Example 2 (2%K), spinel and LDH impregnated, compared to Comparative Example 5 and KM1 (error bars indicate the conversion range where the reaction order was determined).

**Fig. 41:** $N_2$ reaction order vs. conversion of catalysts derived from Comparative Example 1 and Comparative Example 2 (2%K), spinel and LDH impregnated, compared to Comparative Example 5 and KM1 (error bars indicate the conversion range where the reaction order was determined).

**Fig. 42:** Comparison of the conversion X of $NH_3$ in ammonia decomposition at 1 bar and $N_2$ in ammonia synthesis at 90 bar of catalysts derived from Comparative Examples 1, 3 and 4 as well as Examples 1 and 2 (0.5%K) compared with Comparative Example 5 at 400-450 °C.

**Detailed Description of the Invention**

The present invention relates to a catalytically active material for ammonia synthesis. The term "*catalytically active material*" as used herein is synonymous with the term "catalyst". It refers to a material which is capable of increasing the rate of a chemical reaction without modifying the overall standard Gibbs energy change in the reaction. Catalysts are not consumed in a reaction but can act repeatedly. Catalysis can be classified as homogeneous catalysis, in which only one state of matter is involved, and heterogeneous catalysis, in which the reaction occurs at or near an interface between states of matter. The catalytically active material of the present invention is a heterogeneous catalyst when used in the synthesis of ammonia.

In ammonia synthesis within the meaning of the present application, nitrogen ($N_2$) is reacted with hydrogen ($H_2$) to deliver ammonia ($NH_3$). The catalytically active material for ammonia synthesis means the material is suitable for catalysing this reaction.

While the present invention focusses on a catalytically active material for ammonia synthesis, such a material is obviously likewise suitable for the decomposition of ammonia due to the fact that the Haber-Bosch-process is an equilibrium reaction. In general, at high pressures and an excess of nitrogen, the equilibrium lies on the side of ammonia. It is however well known that the activity of a catalytically active material for ammonia synthesis could differ significantly from the activity of the same material for ammonia decomposition (Journal of Catalysis 2005, 230, 309-312).

The catalytically active material for ammonia synthesis of the present invention is obtainable by reducing a precursor material having a phase pure spinel structure (step 4 of the method according to the present invention which is described later in further detail). The terms "reduction" or "reducing" as used herein refer to the gain of electrons or

a decrease in the oxidation state of an atom or ion in the species being reduced.

The term "*phase pure*" as used herein refers to a phase pure and by-phase free structure determined by X-ray powder diffraction (P-XRDs) as described in detail below. The term "*by-phase*" as used herein refers to a structure having a different crystalline phase from the catalytically active material according to the present invention. The phase pure spinel structure of the present invention is described in further detail below. The requirement of phase purity according to the present invention excludes two situations. The first is a perturbation of the structure leading to broadened or less intense reflections within the P-XRD diffraction pattern. The second situation is the formation of a by-phase alongside or embedded in the desired structure.

P-XRD allows identifying presence and composition of crystalline phases in a sample with their reflection patterns. Any shift in the positions of reflections as well as the presence of by-phases can be detected by comparison with reference data from crystal structure databases and theoretically calculated reflection patterns. From the measured reflection patterns of a known structure, lattice parameters can be determined by the Rietveld refinement. A Rietveld refinement uses a least square approach to fit a theoretical line profile for the measured diffraction pattern. From this line profile, it is possible to calculate the lattice parameters of the measured sample. A shift of the positions of the reflections will also lead to a shift of the lattice parameters. By applying theoretical calculations using crystal structure prediction software AIRSS version 0.9.1 on the lattice parameters obtained by Rietveld refinement, i.e. by a theoretical substitution of the ion species in the lattice of a structure, it is moreover possible to calculate the lattice parameters of a so far unknown structure. By comparison with the experimental parameters it is possible to identify the presence of by-phases in the structure. If any, a by-phase in a phase pure spinel structure according to the invention, is present in such small amounts that it is not or barely detectable by P-XRD. The Intensity of the main reflection of a by-phase has to be below 5%, preferably below 2% and most preferably at 0% of the intensity of the main reflection of the spinel phase. For example, for a $MgFe_2O_4$ sample aged for just 1 hour in line with Ortega ChemCatChem, 9 (2017) 659-671 cited above, the intensity of the $Fe_2O_3$ main reflection is 17% compared to the $MgFe_2O_4$ main reflection, so this sample is therefore not phase pure. The expression "main reflection" as used herein refers to that reflection in the P-XRD diffraction pattern of a crystalline structure that has the highest intensity, i.e. the reflection or those reflections with a relative intensity of 100%. Depending on the ion species that are present, the size of the unit cell varies as the relative positions of the constituents in a structure remains unchanged. Consequently, when the size of the unit cell changes, a simultaneously parallel shift of all reflection positions occurs. Nevertheless, the structure is still regarded as phase pure.

A broadening of the reflections may be determined by measuring the integral breadth of the *main reflection* of the spinel phase. A material is phase pure according to the present invention when the integral breadth of the main reflection is below 4°, preferably below 2.5° and most preferably below 1.5°. The integral breadth (β) is a classical reference number in XRD crystallography. It is calculated according to the following mathematical formula by dividing the integrated reflection area (A) through the reflection intensity ($I_0$) and is given in degrees (°).

$$\beta = A/I_0$$

$MgFeAlO_4$ and $MgFeGaO_4$ in Ortega ChemCatChem, 9 (2017) 659-671 have an integral breadth of 4.5° and are not phase pure.

A lowered reflection intensity may be determined by measuring the signal to noise ratio of the *main reflection* of the spinel phase. A material is phase pure according to the present invention when the reflection intensity has a signal to noise ratio above 30, preferably above 50 and most preferably above 200 relative to the reference data. Less intense reflections may be determined. According to above definition, common crystallographic defects that exist in each crystal structure as interruptions of regular patterns do not limit the phase purity as long as the effect meets the above specification of phase purity. $MgFeAlO_4$ and $MgFeGaO_4$ in Ortega ChemCatChem, 9 (2017) 659-671 have a signal to noise ratio close to 20 and are not phase pure.

In the present invention, surprisingly, it has been found that a phase pure spinel structure of the precursor material has a strong impact on the properties of the catalytically active material prepared therefrom. Without wishing to be bound to any theory, it is believed that the existence of by-phases within the precursor material may act as nucleating particles that influence the reduction mechanism. As a consequence, another byphase within the resulting catalytically active material is formed, which hampers the overall activity of the final catalyst. Thus, the improved activity of the catalytically active material for ammonia synthesis of the present invention results from the use of the precursor material having a phase pure spinel structure in the synthesis of the catalytically active material.

The term "spinel" as used herein refers to the spinel structure which can be described by the general formula $A^{2+}B_2^{3+}O_4^{2-}$. It should be mentioned that A and B indicate not only the ion species, but also the positions of these in the lattice. The oxide ions form a cubic close-packed lattice. For the normal spinel structure ions in position A fill ⅛ of all tetrahedral holes and ions in position B fill ½ of all octahedral holes. Depending on the ions an inverse spinel structure

is also possible, where ions in position A fill ¼ of all octahedral holes and ions in position B fill ¼ of all octahedral holes and ⅛ of all tetrahedral holes. A and B can also be the same metal with different valences.

**Precursor material**

The precursor material of the present invention has the following chemical formula (1):

$$(AB_2O_4)_a \cdot (\text{Promoter cation})_b(\text{Promoter anion})_c \qquad (1)$$

In chemical formula (1), A is a divalent cation selected from one or more of the following:

A1 Fe, Co, Ru; and/or
A2 ammonia synthesis catalyst promoters selected from one or more transition metals and/or alkaline earth metals.

In chemical formula (1), B is a trivalent cation selected from one or more of the following:

B1 Fe, Co, Ru; and/or
B2 ammonia synthesis catalyst promoters selected from one or more transition metals and rare earth metals.

In chemical formula (1) the same or different elements can be selected for A and B. A and B can respectively be made of a mixture of A1 and A2 and B1 and B2. While A1 and B1 are the same or different elements selected from Fe, Co, Ru, they differ in terms of valence.

A1 and B1 differ from A2 and B2 respectively because A1 and B1 by themselves can act after reduction as catalytically active metals in ammonia synthesis. This is fundamentally different to the other metals A2 and B2 which are ammonia synthesis catalyst promoters not having catalytic activity by themselves if used alone. This being the case, di- or trivalent Fe, Co and Ru cannot be transition metals falling under the definition of the ammonia synthesis catalyst promoters A2 and B2.

In general, the term *"promoter"* as used herein refers to elements, which have no catalytic activity by themselves if used alone but increase the activity of catalysis based on other metals. Accordingly, the term "ammonia synthesis catalyst promoter" as used herein refers to promoters known in the state of the art to have a promoting effect on catalytically active materials for ammonia synthesis. A wide range of promoters are known to be effective in ammonia synthesis. These include Li, Na, K, Rb, Cs, Be, Mg, Ca, Sr, Ba, Sc, Y, La, Ti, Zr, V, Nb, Ta, Cr, Mo, W, Mn, Pt, Ce, Sm, Eu, Dy, Ho, Er, Yb, U, Al, Si or mixtures of these elements (M. Appl, Ammonia, 2. Production, Ullmann's Encyclopedia of Industrial Chemistry, 2012; P. Stoltze, Structure and Surface Chemistry of Industrial Ammonia Synthesis Catalysts, in: Ammonia Catalysis and Manufacture, PA. Nielson (eds.), Springer, 1995).

Di- and trivalent metal cation promoters A2 and B2 are part of the spinel structure that is itself described by the first part of chemical formula (1) ($AB_2O_4$). In other words, A2 and B2 when present make up the spinel structure along with A1 and B1. Additional promoters covered by the second part of chemical formula (1), namely (Promoter cation)$_b$(Promoter anion)$_c$, on the other hand, are present in the vacant holes of the spinel structure and on the surface of the spinel. Both types of promoters according to the present invention are homogeneously distributed over the structure of the precursor material without perturbing the structure. This being the case, the precursor material of the present invention may comprise a mixture of any number of cations while maintaining a phase pure spinel structure as defined above. The phase purity of the present invention's materials allows extensive promotion without deteriorating the catalytic activity.

Promoters A2 and B2 are introduced into the spinel structure as part of the LDH structure, described in detail below, from which the spinel is obtained. Their position may be determined by P-XRD measurements as described above with respect to the phase purity since A2 and B2 form part of the spinel structure itself. Additional promoters covered by the second part of chemical formula (1) (Promoter cation)$_b$(Promoter anion)$_c$, do not form part of the spinel structure. They may be incorporated into the catalytically active material by a homogenous impregnation into the present invention's intermediate LDH phase, into the precursor material's spinel phase or into both by using aqueous solutions of the respective metal salt(s). To determine whether any given promoter is present as A2 and/or B2 in the spinel or the LDH structure, or as the (Promoter cation) in the vacant holes of the spinel or LDH structure, ion exchange may be performed which will remove only the (Promoter cation)$_b$(Promoter anion)$_c$. The ion exchange may be repeated until no more promoters can be detected in the solution used for ion exchange. Analyzing the eluate from the ion exchange with a suitable method, such as atomic absorption spectroscopy (AAS) allows the determination of the identities and amounts of these components. Alternatively, elemental analysis of the spinel or the LDH structure before and after the ion exchange allows determination of the identities and amounts of these components.

In the precursor material according to chemical formula (1), the total moles of A1 and B1 as a percentage of the total moles of cations is 5 - 95%, preferably 10 - 90%, preferably 25 - 80%, preferably 30 - 70%, preferably 33 - 67%,

preferably 40 - 67%, preferably 50 - 67%, most preferably 60 - 67%. This means that the precursor material of the present invention always comprises some promoters according to the definition given above. The total moles of promoters, namely A2, B2 and Promoter cation(s) and anions, as a percentage of the total moles of cations is 5 - 95%, preferably 10 - 90%, preferably 20 - 75%, preferably 30 - 70% %, preferably 33 - 67%, preferably 33 - 60%, preferably 33 - 50%, most preferably 33 - 40%. The composition of the mixture in the precursor material may be determined by elemental analysis like for example X-Ray fluorescence spectroscopy (XRF spectroscopy), atomic adsorption spectroscopy (AAS spectroscopy) or inductively coupled plasma optical emission spectrometry (ICP-OES).

A2 may comprise transition metals only, alkaline earth metals only or a mixture of both. When A2 comprises transition metals, alkaline earth metals or a mixture of both, it may include a single metal from each group or more than one from each group. Preferably, the transition metals in A2 are one or more selected from Ni, V, Mn, Cr, Ti, Pd, Pt, and the alkaline earth metals in A2 are one or more selected from Mg and Ca. In a preferred embodiment, A may comprise only A2 and no A1 is present in chemical formula (1). Preferably, A2 may comprise one or more selected from Mg and Ca. Most preferably, A may comprise Mg.

B2 may comprise transition metals only, rare earth metals only or a mixture of both. This being the case, present chemical formula (1) does not cover precursor materials wherein B2 comprises main group metals Al or Ga. When B2 comprises transition metals, rare earth metals or a mixture of both, it may include a single metal from each group or more than one. Preferably, the transition metals in B2 are one or more selected from Ni, V, Mn, Cr, Ti, Pd, Nb, Mo, Rh, and the rare earth metals in B2 are selected from one or more of La and Ce. More preferably, B may comprise Fe, Co or most preferably a mixture of both. The molar ratio of Fe:Co may be 1:0.1- 0.1:1, preferably 1:0.1- 1:1, and most preferably 1:1.

Although the presence of promoters in the precursor material of the present invention is mandatory, the presence of additional promoters covered by the second part of chemical formula (1) $(\text{Promoter cation})_b(\text{Promoter anion})_c$, is optional as the molar ratio a:b in chemical formula (1) is in the range 1:0 - 1:0.4. In other words, promoters will still be present even when a:b is 1:0 because of A2 and B2, and the requirement that the total moles of A1 and B1 as a percentage of the total moles of cations in the precursor material is at most 95%. The molar ratio a:b is preferably 1:0 - 1:0.3, preferably 1:0 - 1:0.272, preferably 1:0 - 1:0.052 and most preferably 1:0.001 - 1:0.052. In order to balance charges in the precursor material of the present invention, the molar ratio b:c is balanced. Consequently, when b is 0, c is also 0 or when b is 0.3, c is also 0.3.

Regarding the amount of the Promoter cation, there is an optimal amount where the effect on the activity is the highest. Without wishing to be bound by theory, K may increase the activity of a Fe-based catalyst by several times as it works as an electronic promoter that is located at the active surface of the iron and enhances the kinetics of the reaction. With an increasing amount of the Promoter cation, the activity improvement by electronic promotion may therefore increase. However, it is postulated that when the loading with a Promoter cation becomes too high, the Promoter cation may start blocking the active centers on the catalyst surface, which leads to a decreasing activity with very high Promoter cation loadings.

In chemical formula (1), the Promoter cation is selected from one or more ammonia synthesis catalyst promoters. When a Promoter cation is present in the precursor material of the present invention, i.e. when the molar ratio a:b is below 1:0, the Promoter cation may comprise alkali metals only, alkaline earth metals only, transition metals only, rare earth metals only, main group metals only, main group semiconductors only or a mixture of one or more of these types of Promoters. When the Promoter cations in $(\text{Promoter cation})_b(\text{Promoter anion})_c$ are alkaline earth metals, transition metals, or rare earth metals, they may be the same or different as the promoter cations in A2 and B2 above. They are however distinct from the promoter cations in A2 and B2 as they are located in the vacant holes of the spinel structure and do not form part of the spinel structure itself.

Current industrial catalysts contain about a dozen promoters. Examples of industrial catalysts include the following mixtures of FeO, $Fe_2O_3$, $Al_2O_3$, MgO, $SiO_2$, CaO, $K_2O$ and others in wt%: 31.30, 62.53, 2.90, 0.30, 0.35, 1.65, 0.97 and 0; 39.22, 58.2, 1.80, 0.18, 0.27, 1.43, 0.89 and 0; or 22.27, 49.0, 0.59, 4.47, 0.77, 0.65, 0.50 and 0.7 $Cr_2O_3$ (M. Appl, Ammonia, 2. Production, Ullmann's Encyclopedia of Industrial Chemistry, 2012).

The term "*alkali metal*" as used herein refers to the elements in group 1 of the periodic table of elements. The term "*alkaline earth metal*" as used herein refers to the elements in group 2 of the periodic table of elements. The term "*transition metal*" as used herein refers to the elements in the d-block, i.e. in groups 3 to 12, of the periodic table of elements. Preferably, transition metals present in chemical formula (1) as Promoter cation are not Cd and Zn. The term "*rare earth metal*" as used herein refers to the elements in the f-block of the periodic table of elements. The term "*main group metal*" as used herein refers to metallic elements within the main groups in the periodic table of elements. In the present invention, main group metals are Al, Ga, In, Tl, Sn, Pb, Sb, Bi and Po. The term "*main group semiconductor*" as used herein refers to semiconducting elements within the main groups in the periodic table of elements. The electrical conductivity value of semiconducting elements is lower than that of classical conducting materials and its resistivity decreases as its temperature rises. In the present invention, main group semiconductors are Si and Ge. The ammonia synthesis catalyst promoters of the invention are those in the groups above known in the state of the art to have a

promoting effect on catalytically active materials for ammonia synthesis

When the Promoter cation comprises alkali metals, alkaline earth metals, transition metals, rare earth metals, main group metals, main group semiconductors or a mixture of two or more of these, it may include a single metal or more than one metal from one or more groups. An alkali metal present in chemical formula (1) as Promoter cation may preferably be K. An alkaline earth metal present in chemical formula (1) as Promoter cation may preferably be Mg only, Ca only or a mixture of both. A transition metal present in chemical formula (1) as Promoter cation may preferably be one or more element selected from the group consisting of Ni, V, Mn, Cr, Ti, Mo, Rh, Pd, Pt, Sc, Y, Zr, W, Os, Nb, Ta and Re. A rare earth metal present in chemical formula (1) as Promoter cation may preferably be one or more element selected from the group consisting of La, Ce, Sm, Eu, Dy, Ho, Er, Yb and U. A main group metal present in chemical formula (1) as Promoter cation may preferably be Al only, Ga only or a mixture of both. A main group semiconductor present in chemical formula (1) as Promoter cation may preferably be Si. Most preferably, the Promoter cation may comprise the alkali metal K.

In chemical formula (1), the Promoter anion is selected from monovalent or divalent anions. The Promoter anion may comprise oxide only, hydroxide only, sulfate only, halides only, organic anions only or a mixture of two or more of these. When the Promoter anion comprises a mixture of anions, it may include a single anion from one or more groups (where alternatives are present e.g. for halides or organic anions) or more than one anion from one or more groups. Preferably, the Promoter anion may be oxide, an organic anion or both. When the Promoter anion is oxide, an organic anion or both, the organic anion may comprise formate, oxalate or both. Most preferably, the Promoter anion may comprise oxide.

The precursor material of the present invention may be obtained according to step 3) of the method of the present invention, which is described below in further detail by heating the LDH structure intermediate. The precursor material resulting therefrom may have a surface area of 30 - 150 $m^2$/g, preferably 40 - 120 $m^2$/g, preferably 50 - 100 $m^2$/g and most preferably 52 - 100 $m^2$/g measured using the BET procedure below. The precursor used for preparing the common industrial catalyst, on the other hand, has a low surface area as it melts under the fusion conditions. When reducing the melted precursor having low surface area in order to synthesize the common industrial catalyst a low surface area of about 20 $m^2$/g results. When reducing the precursor material of the present invention, on the other hand, the surface area decreases only slightly by 5 - 10 $m^2$/g or even increases depending on the promoter mixture. Accordingly, the common industrial catalyst has a significantly lower surface area than the catalytically active material of the present invention. In the present invention, it has surprisingly been found that a high surface area strongly increases the catalytic activity of the resulting catalyst. Without wishing to be bound to any theory, it is believed that despite the lower surface area the common industrial catalyst achieves its high activity due to the many different (up to a dozen) promoters present in the industrial catalyst. In contrast, the catalytically active material of the present invention shows a significant ammonia synthesis activity, which is close to the activity of the multipromoted industrial catalyst by using only two promoters.

Furthermore, a well-defined catalyst structure results by reducing the precursor material of the present invention. This well-defined structure may result in a higher resistance against poisoning as it permits the controlled addition of promoting component with a high affinity to water targeted to protect the active metal sites. This may allow the decentralized synthesis and decomposition of ammonia in small reactors, at industrial sites where severe gas cleaning is not feasible or not efficient in terms of production.

The particle size of the precursor material of the present invention is not limited and may optionally be in the range of 100 - 1000 μm, optionally 200 - 750 μm or optionally 250-425 μm. Sizes of the particles of the precursor material, as well as agglomerates and the nanoparticles within the catalytically active material as described below refer to the number average particle diameter. The sizes may be adapted to the reactor that is used in order to guarantee a homogenous catalyst bed. For industrial applications, particle sizes in the range of mm are generally used. The number average particle diameter may be measured by transmission electron microscopy (TEM) or scanning electron microscopy (SEM).

The precursor material of the present invention has a pore volume in the range of 0.05 - 0.8 $cm^3$/g, preferably 0.1-0.6 $cm^3$/g, most preferably 0.15 - 0.4 $cm^3$/g. This is measured according to the method in the experimental part below.

In one embodiment of the precursor material according to chemical formula (1), A is a divalent cation selected from one or more of A1, A2 or both and B is a trivalent cation selected from one or more of B1, B2 or both. Cations A1 and B1 are each independently selected from Fe, Co and Ru, providing catalytic activity after reduction of the precursor material. A2, B2 and the Promoter cation increase the activity of the resulting catalysts. The total moles of A1 and B1 as a percentage of the total moles of cations is 5 - 95%, preferably 10 - 90%, preferably 25 - 80%, preferably 30 - 70%, preferably 33 - 67%, preferably 40 - 67%, preferably 50 - 67%, most preferably 60 - 67%. A2 may comprise transition metals only, alkaline earth metals only or a mixture of both. When A2 comprises transition metals, alkaline earth metals or a mixture of both, it may include a single metal from each group or more than one. B2 may comprise transition metals only, rare earth metals only or a mixture of both. When B2 comprises transition metals, rare earth metals or a mixture of both, it may include a single metal from each group or more than one. The Promoter cation is selected from one or more ammonia synthesis catalyst promoters and the Promoter anion is selected from one or more monovalent or divalent

anions. The molar ratio a:b is in the range 1:0 - 1:0.4 and the molar ratio b:c is selected such that the charges of the Promoter cation and the Promoter anion are balanced which implies that when b is 0, c is also 0.

The following paragraph describes a preferred embodiment of the precursor material according to chemical formula (1). The divalent cation A is selected from one or more of A1, A2 or both and the trivalent cation B is selected from one or more of B1, B2 or both. Cations A1 and B1 are each independently selected from Fe, Co and Ru, providing catalytic activity after reduction of the precursor material. A2, B2 and the Promoter cation increase the activity of the resulting catalysts. The total moles of A1 and B1 as a percentage of the total moles of cations is 5 - 95%, preferably 10 - 90%, preferably 25 - 80%, preferably 30 - 70%, preferably 33 - 67%, preferably 40 - 67%, preferably 50 - 67% and most preferably 60 - 67%. A2 may comprise transition metals only, alkaline earth metals only or a mixture of both. When present, the transition metals in A2 are one or more selected from Ni, V, Mn, Cr, Ti, Pd, Pt, and the alkaline earth metals in A2 are one or more selected from Mg and Ca. When present, the transition metals in B2 are one or more selected from Ni, V, Mn, Cr, Ti, Pd, Nb, Mo, Rh, and the rare earth metals in B2 are selected from one or more of La and Ce. When present in chemical formula (1) as Promoter cation, the alkali metal is K; the alkaline earth metal is Mg only, Ca only or a mixture of both; the transition metal is one or more element selected from the group consisting of Ni, V, Mn, Cr, Ti, Mo, Rh, Pd, Pt, Sc, Y, Zr, W, Os, Nb, Ta and Re; the rare earth metal is one or more element selected from the group consisting of La, Ce, Sm, Eu, Dy, Ho, Er, Yb and/or U; the main group metal is Al only, Ga only or a mixture of both; and the main group semiconductor is Si. The Promoter anion is oxide, an organic anion or both. When the Promoter anion is oxide, an organic anion or both, the organic anion may comprise formate, oxalate or both. The molar ratio a:b is in the range 1:0 - 1:0.4 and the molar ratio b:c is selected such that the charges of the Promoter cation and the Promoter anion are balanced which implies that when b is 0, c is also 0.

The following paragraph describes another preferred embodiment of the precursor material according to chemical formula (1), in which the divalent cation A may comprise only A2 being the alkaline earth metal Mg. The trivalent cation B is selected from Fe only, Co only or a mixture of both. While B1 provides catalytic activity after reduction of the precursor material, Mg acts as a promoter and increases the activity of the resulting catalyst. The total moles of B as a percentage of the total moles of cations is 10 - 90%, preferably 25 - 80%, preferably 30 - 70%, preferably 33 - 67%, preferably 40 - 67%, preferably 50 - 67% and most preferably 60 - 67%. When present, i.e. when b is not equal to 0, the Promoter cation is the alkali metal K and the Promoter anion is oxide. The molar ratio a:b is in the range 1:0 - 1:0.3, preferably 1:0 - 1:0.272, preferably 1:0 - 1:0.052 and most preferably 1:0.001- 1:0.052. The molar ratio b:c is selected such that the charges of the Promoter cation and the Promoter anion are balanced which implies that when b is 0, c is also 0. In this embodiment, the precursor material may include the formula $MgFe_2O_4$, $MgFe_{1.75}Co_{0.25}O_4$, $MgFe_{1.5}Co_{0.5}O_4$, $MgFe_{1.25}Co_{0.75}O_4$ or $MgFeCoO_4$, which can also include the promoter cation and anion as described above.

In a more preferred embodiment of the precursor material according to chemical formula (1), the divalent cation A is Mg. The trivalent cation B may be selected from Fe only, Co only or a mixture of both. While B1 provides catalytic activity after reduction of the precursor material, Mg acts as a promoter and increases the activity of the resulting catalyst. The total moles of B as a percentage of the total moles of cations is 50 - 67%. The Promoter cation comprises the alkali metal K and the Promoter anion is oxide. The molar ratio a:b is in the range 1:0.001- 1:0.052. The molar ratio b:c is selected such that the charges of the Promoter cation and the Promoter anion are balanced which implies that when b is 0, c is also 0. In this embodiment, the precursor material may have the formula $(MgFe_2O_4)a{\cdot}(K)_b(O)_c$, $MgFe_{1.75}Co_{0.25}O_4{\cdot}(K)b(O)c$, $MgFe_{1.5}Co_{0.5}O_4{\cdot}(K)_b(O)_c$, $MgFe_{1.25}Co_{0.75}O_4{\cdot}(K)_b(O)_c$ or $MgFeCoO_4\text{-}(K)_b(O)_c$ where a, b and c are as defined above.

In a most preferred embodiment of the precursor material according to chemical formula (1), the divalent cation A is Mg. The trivalent cation B consists of a mixture of Fe and Co. The molar ratio of Fe:Co is 1:0.1- 1:1. The total moles of B as a percentage of the total moles of cations is 60 - 67%. The Promoter cation comprises the alkali metal K and the Promoter anion is oxide. The molar ratio a:b is in the range 1:0.001- 1:0.052. The molar ratio b:c is selected such that the charges of the Promoter cation and the Promoter anion are balanced which implies that when b is 0, c is also 0. In this embodiment, the precursor material may have the formula $(MgFe_{1.75}Co_{0.25}O_4)_a{\cdot}(K)_b(O)_c$, $(MgFe_{1.5}Co_{0.5}O_4)_a{\cdot}(K)_b(O)_c$, $(MgFe_{1.25}Co_{0.75}O_4)_a{\cdot}(K)_b(O)_c$ or $(MgFeCoO_4)_a{\cdot}(K)_b(O)_c$ where a, b and c are as defined above.

## Catalytically active material

The catalytically active material for ammonia synthesis of the present invention is obtainable by reducing the precursor material. The reduction is preferably performed by heating the precursor material in the presence of a reduction gas. The reduction gas for reducing the precursor material as used herein may be hydrogen or $NH_3$ gas, and the reduction gas is preferably hydrogen. Preferably, the heating starts at 25°C and the temperature may be increased to 200 - 1000 °C, preferably 300-800 °C, preferably 400 - 600 °C and most preferably 450 - 550 °C. The heating rate is not crucial. In terms of production efficiency, the temperature may be increased at 0.1-10 K/min. In a particular embodiment, the

temperature may be increased at 1 K/min. In a preferred embodiment, the reduction is performed by heating the precursor material in the presence of the reduction gas with a minimum gas flow rate of at least 200 NmL/min*$g_{Precursor}$, preferably of at least 300 NmL/min*$g_{Precursor}$, preferably of at least 400 NmL/min*$g_{Precursor}$ and most preferably of at least 430 NmL/min *$g_{Precursor}$. There is no upper limit for the gas flow rate. However, in terms of production efficiency, the gas flow rate may be below 1800 Nml/min*$g_{Precursor}$ in order to avoid a waste of the reduction gas. The unit of the gas flow rate NmL/min stands for the flow at norm conditions (temperature = 273.15 K, pressure = $1.013\times10^5$ Pa). The reduction gas may be mixed with a further gas in a molar ratio of (reduction gas:further gas) 50:50 - 100:0, preferably 60:40 - 90:10, preferably 70:30 - 80:20 and most preferably 74:26 - 76:24. The further gas is preferably nitrogen. Once the desired end temperature is obtained, the reduction conditions may be kept constant for at least 10 h, preferably for at least 30 h, preferably for at least 50 h and most preferably for at least 62 h. Pressure drop may be observed in the system. The absolute pressure in the reactor may be in the range of 1-150 bar, preferably 1-120 bar and most preferably 1-101 bar.

The reduction can be carried out in-situ, i.e. in the same reactor as the subsequent ammonia synthesis. Alternatively, the reduction can also be carried out in a different reactor than the subsequent ammonia synthesis. In the latter case, the active catalyst may be transferred to the reactor for ammonia synthesis under an inert gas or the active catalyst may be passivated towards oxidation by treating it with a mildly oxidizing gas mixture like for example 0 - 5 % oxygen in inert gas or 0 - 5 % dinitrogen oxide in inert gas. Preferably, the reduction is carried out in-situ in terms of production efficiency and work steps. The inert gas as used herein may be Ar or nitrogen and is preferably nitrogen.

Without wishing to be bound by theory, the reduction mechanism may be demonstrated and explained for a preferred embodiment of the present invention by the following two sequential reactions (J. Solid State Chem. 2001, 161, 38-44). Therein Fe(III) is reduced to FE(II) in a first step and forms an Fe-Mg phase similar to the wuestite phase which initiates the final reduction to the actual $\alpha$-iron catalyst in a second step.

$$MgFe_2^{III}O_4 + H_2 \rightarrow Fe_{1-x}^{II}Mg_x^{II}O + H_2O \quad (4)$$

$$Fe_{1-x}^{II}Mg_x^{II}O + H_2 \rightarrow \alpha\text{-}Fe + MgO + H_2O \quad (5)$$

The structure of the catalytically active material in the ammonia synthesis reaction is complex, and the exact structure of the catalytically active material is not even known for the widely applied industrial catalysts. As a result, the exact structure of present catalyst is not possible to describe exactly except that it is obtainable by reducing the precursor material as defined in the claims. Using this process to deliver the catalytically active material delivers a more homogenous distribution of promoters and also delivers higher activity than comparable catalysts.

The nanostructure of the present invention's catalytically active material, obtained by reducing the precursor material described above, comprises agglomerates of nanoparticles. The term "*agglomerate*" as used herein refers to a solid composite obtained by a solidified accumulation of previously loose particles. The particle size of the agglomerates of the catalytically active material is not limited and may optionally be in the range of 100 - 2000 nm, optionally 120 - 1000 nm or optionally 140 - 500 nm, measured using the methods described above.

The term "*nanoparticle*" as used herein refers to particles with a number average particle size in the range of 1 - 100 nm, measured using the methods described above. In the agglomerates of the catalytically active material of the present invention, two different types of nanoparticles are homogeneously mixed. Metallic nanoparticles according to chemical formula (2a) are separated and surrounded by oxide nanoparticles as spacers according to chemical formula (2b). In the metallic nanoparticles the elements represented by D* are present in the elementary state in the oxidation number 0.

$$(D^*)_a\cdot(\text{Promoter cation})_b(\text{Promoter anion})_c \quad (2a)$$

In chemical formula (2a), D* is selected from one or more of the following elements in a metallic form, wherein the oxidation number of the elements is 0:

D*1 Fe, Co, Ru; and/or

D*2 ammonia synthesis catalyst promoters selected from one or more transition metals, rare earth metals and/or alkaline earth metals.

In chemical formula (2a), the Promoter cation is selected from one or more ammonia synthesis catalyst promoters; the Promoter anion is selected from one or more monovalent or divalent anions; the molar ratio a:b is 1:0 - 1:0.4; when b is 0, c is also 0, and the molar ratio b:c is selected such that the charges on the Promoter cation and Promoter anion are balanced.

$$(D_dO_e)_a \cdot (\text{Promoter cation})_b(\text{Promoter anion})_c \qquad (2b)$$

In chemical formula (2b), e is 1 and d is selected such that the charges on D and O are balanced, wherein O is oxide and D is a cation selected from one or more of the following:

D1 Fe, Co, Ru, and/or
D2 ammonia synthesis catalyst promoters selected from one or more transition metals, rare earth metals, and/or alkaline earth metals.

The Promoter cation and the Promoter anion as well as a, b and c are as defined for chemical formula (2a). The mass ratio of the nanoparticles having chemical formula (2a) to the nanoparticles having chemical formula (2b) is in the range of 1:99 - 99:1 wt%, preferably in the range of 40:60-60:40 wt% and most preferably 45:55-55:45 wt%. The amounts in mol% and wt% of the two different nanoparticle types in the agglomerates of the catalytically active material may be determined by a fit of the diffractograms of the reduced samples obtained via P-XRD with a Rietveld refinement.

In chemical formulae (2a) and (2b), the same or different elements may be present in D* and D. D* and D may respectively be made of a mixture of D*1 and D*2 and D1 and D2. The decisive aspect is that the catalytic activity in ammonia synthesis after reducing the precursor material (step 4) is attributed to D*1 and D1 being Fe, Co and Ru. Transition metals covered by the definition of D*2 and D2 are promoters so do not show catalytic activity if used alone. In other words, the transition metals according to D*2 and D2 are promoters as defined above, which improve catalytic activity of the agglomerated nanoparticles but are not catalytically active when used alone. This being the case, D*2 and D2 cannot be Fe, Co and Ru, as these provide catalytic activity by themselves and are not promoters per definition.

The promoters D*2 and D2 are part of the catalyst structure obtained after reducing the precursor material of the present invention. In other words, D*2 and D2 partially replace D*1 and D1 in the catalyst structure and are homogeneously distributed over the whole structure because the two different types of nanoparticles are homogeneously mixed and D*2 and D2 are homogeneously distributed within the nanoparticles.

Promoters covered by the second part of chemical formulae (2a) and (2b), namely $(\text{Promoter cation})_b(\text{Promoter anion})_c$, on the other hand, result from the present invention's precursor spinel structure as described above wherein these additional promoters are homogeneously distributed in vacant holes of the spinel structure. These promoters are homogeneously distributed over the catalytically active material in the invention. The position of promoters D*2 and D2 may be determined by P-XRD measurements as described above with respect to the phase purity since D*2 and D2 form part of the catalyst structure itself. The position of the additional promoters which do not form part of the catalyst structure may be determined by Extended X-Ray Absorption Fine Structure (EXAFS) spectroscopy, by the use of surface sensitive characterization methods like for example X-ray photoelectron spectroscopy (XPS) or by performing an ion exchange and analyzing the eluate with a suitable method, such as atomic absorption spectroscopy (AAS).

In the catalytically active material comprising nanoparticles according to chemical formulae (2a) and (2b) in the ratio defined above, the proviso applies that the total moles of D*1 and D1 as a percentage of the total moles of metals in the material is 5 - 95%, preferably 10 - 90%, preferably 25 - 80%, preferably 30 - 70%, preferably 33 - 67%, preferably 40 - 67%, preferably 50 - 67% and most preferably 60 - 67%. Conversely, this means that the catalytically active material of the present invention always comprises some promoters according to the definition given above. The total moles of promoters, namely D*2, D2 and Promoter cation(s), as a percentage of the total moles of cations is 5 - 95%, preferably 10 - 90%, preferably 20 - 75%, preferably 30 - 70% %, preferably 33 - 67%, preferably 33 - 60%, preferably 33 - 50% and most preferably 33 - 40%. The total composition of the mixture in the precursor material may be determined by elemental analysis like for example X-Ray fluorescence spectroscopy (XRF spectroscopy), atomic adsorption spectroscopy (AAS spectroscopy) or inductively coupled plasma optical emission spectrometry (ICP-OES).

While ammonia synthesis catalyst promoter D*2 comprises elements in the metallic form, *i.e.* in the oxidation number 0, selected from transition metals only, rare earth metals only, alkaline earth metals only or a mixture thereof, D2 comprises cations selected from transition metals only, rare earth metals only, alkaline earth metals only or a mixture thereof. When D*2 and D2 comprise transition metals, rare earth metals, alkaline earth metals or a mixture of two or more of these in the metallic form or as cations, they may each independently include a single metal or more than one metal from one or more groups. Preferably, the transition metals are one or more selected from Ni, V, Mn, Cr, Ti, Pd, Pt, Nb, Mo, Rh; the rare earth metals are one or more are selected from one or more of La and Ce; and the alkaline earth metals are one or more selected from Mg and Ca. In a preferred embodiment, D* may comprise only D*1 selected from one or more of Fe and Co. In such a case no D*2 may be present in chemical formula (2a). Likewise, D may

comprise or consist of one or more selected from Mg, Fe and Co in a preferred embodiment.

The presence of promoters in the catalytically active material of the present invention is mandatory because in the catalytically active material the total moles of D*1 and D1 as a percentage of the total moles of metals in the material is at most 95%. The presence of additional promoters covered by the second part of chemical formulae (2a) and (2b), namely (Promoter cation)$_b$(Promoter anion)$_c$, is optional as the molar ratio a:b is in the range 1:0 - 1:0.4. Other promoters can be present in D*2 or D2 if b is 0. The molar ratio a:b is preferably 1:0 - 1:0.3, preferably 1:0 - 1:0.272, preferably 1:0 - 1:0.052 and most preferably 1:0.001 - 1:0.052. In order to balance charges in the precursor material of the present invention, the molar ratio b:c is balanced. Consequently, when b is 0, c is also 0. In chemical formulae (2a) and (2b), the Promoter cation is selected from one or more ammonia synthesis catalyst promoters.

When a Promoter cation is present in the catalytically active material of the present invention, i.e. when b is not 0, the Promoter cation in chemical formulae (2a) and (2b), may comprise alkali metals only, alkaline earth metals only, transition metals only, rare earth metals only, main group metals only, main group semiconductors only or a mixture thereof. When the Promoter cation comprises alkali metals, alkaline earth metals, transition metals, rare earth metals, main group metals, main group semiconductors or a mixture of two or more of these, it may include a single metal or more than one metal from one or more groups. An alkali metal present in chemical formulae (2a) and (2b) as Promoter cation may preferably be K. An alkaline earth metal present in chemical formulae (2a) and (2b) as Promoter cation may preferably comprise or consist of Mg, Ca or a mixture of both. A transition metal present in chemical formulae (2a) and (2b) as Promoter cation may preferably be one or more element selected from the group consisting of Ni, V, Mn, Cr, Ti, Nb, Ta, Mo, Rh, Pd, Pt, Sc, Y, Zr, W, Os, Nb, Ta and Re. A rare earth metal present in chemical formulae (2a) and (2b) as Promoter cation may preferably be one or more element selected from the group consisting of La, Ce, Sm, Eu, Dy, Ho, Er, Yb and U. A main group metal present in chemical formulae (2a) and (2b) as Promoter cation may preferably be Al only, Ga only or a mixture of both. A main group semiconductor present in chemical formulae (2a) and (2b) as Promoter cation may preferably be Si. Most preferably, the Promoter cation may comprise the alkali metal K.

When a Promoter anion is present in the catalytically active material of the present invention, i.e. when b is not 0, the Promoter anion in chemical formulae (2a) and (2b) is selected from monovalent or divalent anions. The Promoter anion may comprise oxide only, hydroxide only, sulfate only, halides only, organic anions only or a mixture of two or more thereof. When the Promoter anion comprises oxide, hydroxide, sulfates, halide, organic anions or a mixture thereof, it may include a single anion or more than one anions from one or more groups. Preferably, the Promoter anion may be oxide, an organic anion or both. When the Promoter anion is an organic anion, the organic anion may comprise formate, oxalate or both. Most preferably, the Promoter anion may comprise oxide.

The metallic nanoparticles according to chemical formula (2a) have a volume weighted mean column length of 1 - 140 nm, preferably 1.5 - 120 nm, preferably 2 - 100 nm and most preferably 2.5 - 85 nm. The smaller spacer oxide nanoparticles according to chemical formula (2b) have a volume weighted mean column length of 1 - 30 nm, preferably 4 - 20 nm and most preferably 5-15 nm. These average sizes of the crystalline domains for the different nanoparticle types of the catalysts after ammonia synthesis are measured by a Rietveld fit of the diffraction patterns as described below. In the present invention, it was observed that the nanoparticle size decreases slightly with an increasing ageing time.

The specific agglomerate nanostructure of the catalyst of the present invention leads to a catalyst surface area of 20 - 250 $m^2/g$, preferably 30 - 200 $m^2/g$, preferably 40 - 150 $m^2/g$ and most preferably 50 - 100$m^2/g$ measured using the BET procedure below. The pore volume is in the range of 0.05 - 0.8 $cm^3/g$, preferably 0.05 - 0.6 $cm^3/g$, most preferably 0.1 - 0.4 $cm^3/g$. This is measured according to the method in the experimental part below.

Without wishing to be bound by theory, it is postulated that due to this specific nanostructure, the catalyst of the present invention is stable even under the high pressure and temperature reaction conditions of the ammonia synthesis. In the present invention, it was observed that the surface area of the catalyst decreases with increasing amount of Promoter cation while the size of the metal nanoparticles increases at the same time. This loss of porosity and the increasing nanoparticle size may be related to each other. Upon intensive research that is described in further detail in the experimental section below, it has been found that, contrary to first assumptions, a larger growth of the metal nanoparticles is not the main reason for the loss of mesoporosity but that, without wishing to be bound to any theory, Promoter cations may block the mesoporous network. It was observed that Promoter cations affect several catalyst properties and a high loading has a negative effect on the nanostructure of present catalyst. Promoter cations seem to lead to a larger growth or sintering of the metal nanoparticles during the reduction of the catalyst and block the catalyst's mesoporous network. This would further explain the above-mentioned decreased improvement in activity with increased Promoter cation loading.

In one embodiment of the catalytically active material of the invention comprising agglomerates of nanoparticles, the mass ratio of the nanoparticles having chemical formula (2a) to the nanoparticles having chemical formula (2b) is in the range of 1:99-99:1 wt%. In chemical formulae (2a) and (2b), D* is an element in the metallic form, i.e. in the oxidation number 0, selected from selected from one or more of D*1, D*2 or both and D is a cation selected from one or more of D1, D2 or both. While D*1 and D1 provide catalytic activity, D*2 and D2 act as a promoters increasing the

activity of the catalyst. D*1 and D1 are each independently selected from Fe, Co and Ru. Ammonia synthesis catalyst promoters D*2, being in the metallic form, and D2, being cationic, are each independently selected from transition metals only, rare earth metals only, alkaline earth metals only or a mixture of one or more thereof. When D*2 and D2 comprise transition metals, rare earth metals, alkaline earth metals or a mixture of two or more thereof in the metallic form or as cations, they may each independently include a single metal or more than one metal from one or more groups. The e in chemical formulae (2a) and (2b) is 1 and d is selected such that the charges on D and the oxide O are balanced. The Promoter cation is selected from one or more ammonia synthesis catalyst promoters and the Promoter anion is selected from one or more monovalent or divalent anions. The total moles of D*1 and D1 as a percentage of the total moles of metals in the catalytically active material is 5 - 95%, preferably 10 - 90%, preferably 25 - 80%, preferably 30 - 70%, preferably 33 - 67%, preferably 40-67%, preferably 50 - 67%, and most preferably 60-67%. The molar ratio a:b is in the range 1:0- 1:0.4 and the molar ratio b:c is selected such that the charges of the Promoter cation and the Promoter anion are balanced which implies that when b is 0, c is also 0.

In a preferred embodiment of the catalytically active material of the present invention comprising agglomerates of nanoparticles, the mass ratio of the nanoparticles having chemical formula (2a) to the nanoparticles having chemical formula (2b) is in the range of 1:99 - 99:1 wt%. In chemical formulae (2a) and (2b), D* is an element in the metallic form, i.e. in the oxidation number 0, selected from selected from one or more of D*1, D*2 or both and D is a cation selected from one or more of D1, D2 or both. D*1 and D1 are each independently selected from Fe, Co and Ru. The transition metals in D*2 and D2 are one or more selected from Ni, V, Mn, Cr, Ti, Pd, Pt, Nb, Mo, Rh; the rare earth metals are one or more are selected from one or more of La and Ce; and the alkaline earth metals in D*2 and D2 are one or more selected from Mg and Ca. The e in chemical formulae (2a) and (2b) is 1 and d is selected such that the charges on D and the oxide O are balanced. The alkali metal present in chemical formula (1) as Promoter cation when present is K; the alkaline earth metal when present is Mg only, Ca only or a mixture of both; the transition metal when present is one or more element selected from the group consisting of Ni, V, Mn, Cr, Ti, Mo, Nb, Ta, Rh, Pd, Pt, Sc, Y, Zr, W, Os, Nb, Ta and Re; the rare earth metal when present is one or more element selected from the group consisting of La, Ce, Sm, Eu, Dy, Ho, Er, Yb and/or U; the main group metal when present is Al only, Ga only or or a mixture of both; and the main group semiconductor when present is Si. The Promoter anion is oxide, an organic anion or both. When the Promoter anion is oxide, an organic anion or both, the organic anion may comprise formate, oxalate or both. The total moles of D*1 and D1 as a percentage of the total moles of metals in the catalytically active material is 5 - 95%, preferably 10 - 90%, preferably 25 - 80%, preferably 30 - 70%, preferably 33 - 67%, preferably 40 - 67%, preferably 50 - 67% and most preferably 60 - 67%. The molar ratio a:b is in the range 1:0- 1:0.4 and the molar ratio b:c is selected such that the charges of the Promoter cation and the Promoter anion are balanced which implies that when b is 0, c is also 0.

In another preferred embodiment of the present invention, in the catalytically active material comprising agglomerates of nanoparticles the mass ratio of the nanoparticles having chemical formula (2a) to the nanoparticles having chemical formula (2b) is in the range of 40:60 - 60:40 wt%, most preferably in the range of 45:55 - 55:45 wt%. In chemical formulae (2a) and (2b), D* is an element in the metallic form, i.e. in the oxidation number 0, selected from selected from one or more of D*1, D*2 or both and D is a cation selected from one or more of D1, D2 or both. D* comprises only D*1 selected from one or more of Fe and Co. In such a case no D*2 is present in chemical formula (2a). Likewise, D only comprises one or more selected from Mg, Fe and Co in a preferred embodiment. The e in chemical formulae (2a) and (2b) is 1 and d is selected such that the charges on D and the oxide O are balanced. When present, i.e. when b is not equal to 0, the Promoter cation in chemical formulae (2a) and (2b) comprises K and the Promoter anion is oxide. The total moles of D*1 and D1 as a percentage of the total moles of metals in the catalytically active material is 5 - 95%, preferably 10 - 90%, preferably 25 - 80%, preferably 30 - 70%, preferably 33 - 67%, preferably 40 - 67%, preferably 50 - 67% and most preferably 60 - 67%. The molar ratio a:b is in the range 1:0 - 1:0.3, preferably 1:0 - 1:0.272, preferably 1:0 - 1:0.052 and most preferably 1:0.001- 1:0.052. The molar ratio b:c is selected such that the charges of the Promoter cation and the Promoter anion are balanced which implies that when b is 0, c is also 0.

In the most preferred embodiment of the present invention's catalytically active material comprising agglomerates of nanoparticles, the mass ratio of the nanoparticles having chemical formula (2a) to the nanoparticles having chemical formula (2b) is in the range of 45:55 - 55:45 wt%. In chemical formulae (2a) and (2b), D* is an element in the metallic form, i.e. in the oxidation number 0, selected from selected from one or more of D*1, D*2 or both and D is a cation selected from one or more of D1, D2 or both. D* comprises or consists of D*1 selected from one or more of Fe and Co. In such a case no D*2 is present in chemical formula (2a). Likewise, D comprises or consists of one or more selected from Mg, Fe and Co. The e in chemical formulae (2a) and (2b) is 1 and d is selected such that the charges on D and the oxide O are balanced. The Promoter cation in chemical formulae (2a) and (2b) comprises or consists of K and the Promoter anion is oxide. The total moles of D*1 and D1 as a percentage of the total moles of metals in the catalytically active material is 50 - 67% or 60 - 67%. The molar ratio a:b is 1:0.001 - 1:0.052. The molar ratio b:c is selected such that the charges of the Promoter cation and the Promoter anion are balanced which implies that when b is 0, c is also 0. In this embodiment, the metallic nanoparticles of formula (2a) may be Co, while the nanoparticles of formula (2b) may be $Mg_{0.6}Co_{0.4}O$. Equally, in this embodiment, the metallic nanoparticles of formula (2a) may be $\alpha$-Fe,

while the nanoparticles of formula (2b) may be $Mg_{0.6}Fe_{0.4}O$. Equally, the metallic nanoparticles of formula (2a) may be an alloy of Fe and Co in a ratio 1:0.1- 1:1, while the nanoparticles of chemical formula (2b) may be $Mg_{0.6}(Fe:Co)_{0.4}O$ where the Fe and Co are in a ratio 1:0.1- 1:1 (see Fig. 1 and 2). In all of these embodiments, the Promoter cations and Promoter anions as defined above are homogeneously distributed across the catalytically active material.

**Intermediate**

The precursor material for preparing the catalytically active material of the present invention may be obtained by heating an intermediate having a LDH structure (step 3 of the method according to the present invention which is described later in further detail). The LDH structure of the present invention may comprise one or more by-phases of prematurely formed spinel precursor and therefore results in the phase pure spinel structure as described above when it is heated. The expression "prematurely formed" as used herein means a by-phase of a spinel formed alongside the LDH structure which has the same structure as is formed by heating the LDH structure. The precursor may optionally be impregnated by contacting the spinel structure with a solution comprising the Promoter cation and anion as defined above (step 3a of the method according to the present invention which is described later in further detail).

The term "*layered double hydroxide (LDH)*" as used herein refers to ionic lamellar compounds consisting of a hydrotalcite-like layered structure. In the LDH structure, one or more divalent and trivalent metal cations form positively charged cation layers (Lcat), which are sandwiched between layers of hydroxide units ($L_{OH}$). The overall charge of the cation and hydroxide layers is compensated by layers of anions ($L_{An}$), present between the hydroxide layers. These anions are intercalated together with water between the positively charged cation layers thereby forming interlayer regions in an overall repeating arrangement: ...($L_{OH}L_{Cat}L_{OH}L_{An}L_{OH}L_{Cat}L_{OH}$).... The intercalated anions and the water generally are only weakly bound, allowing the possibility of ion exchange reactions. The intermediate of the present invention has the following chemical formula (3):

$$([A_{1-x}B_x(OH)_{2]}^{x+}[\text{LDH-Anion}_{x/n}]^{x-})_a \cdot mH_2O \cdot (\text{Promoter cation})_b(\text{Promoter anion})_c \qquad (3)$$

In chemical formula (3), A is a divalent cation and B is a trivalent cation as described below. x is 0.2 - 0.33, and defines the relative amount of A and B and therefore determines the overall charge of the cation and hydroxide element of the LDH structure $A_{1-x}B_x(OH)_2$. The n in chemical formula (3) is the charge of the anion without the negative algebraic sign and can take values of 1 or 2, *e.g.* if the anion is bicarbonate, n is 1 and if it is carbonate, n is 2. The expression x/n indicates the amount of the LDH-Anion necessary to balance the positive charge x+ of the cation and hydroxide elements of the LDH structure with the negative charge x- in chemical formula (3). The m in chemical formula (3) is the amount of crystal water in the LDH structure and is an integer from 1 to 14, preferably 1 to 12, preferably 1 to 10, 2 to 8 and most preferably 3 to 5.

In chemical formula (3), A may be the same divalent cation as in chemical formula (1) above and is selected from one or more of the following:

A1 Fe, Co, Ru; and/or
A2 ammonia synthesis catalyst promoters selected from one or more transition metals and/or alkaline earth metals.

In chemical formula (3), B may be the same trivalent cation as in chemical formula (1) above and is selected from one or more of the following:

B1 Fe, Co, Ru; and/or
B2 ammonia synthesis catalyst promoters selected from one or more transition metals and rare earth metals.

In chemical formula (3) the same or different elements can be selected for A and B. A and B can respectively be made of a mixture of A1 and A2 and B1 and B2. While A1 and B1 are the same or different elements selected from Fe, Co, Ru, they differ only in terms of valence. The decisive aspect is that the catalytic activity in ammonia synthesis after reducing the precursor material (step 4 described below), obtained by heating the intermediate (step 3 described below), is attributed to A1 and B1 being Fe, Co and Ru. All other metals, which beyond A1 and B1 fall under the chemical formula (3), represent ammonia synthesis catalyst promoters. This being the case, transition metals falling under the definition of the ammonia synthesis catalyst promoters A2 and B2 cannot be di- or trivalent Fe, Co and Ru as covered by A1 and B1. If used alone after reduction, these transition metals provide catalytic activity by themselves.

Di- and trivalent metal cations A and B are part of the positively charged cation layers of the LDH structure and become part of the precursor spinel structure upon heating according to step 3) of the method to be described later. Di- and trivalent metal cation promoters A2 and B2 when present make up the cation layers of the LDH structure along with metal cations A1 and B1. The skilled person knows that the cations which fit into the cation layers of the LDH structure

as A and B have ionic radii of about 0.4 to 0.9 nm. An ionic radius is calculated from the internuclear distance between a cation and a neighbouring anion in a lattice by X-ray crystallography. These include, but are not limited to, FE(II) and Fe(III), Co(II) and Co(III), Mg(II), Ni(II), Ni(III), V(II), V(III), Cu(II), Zn(II), Mn(II), Mn(III), Ru(III), Cr(II), Cr(III), Ti(II), Ti(III), Mo(III), Pd(II), Pd(III), Pt(II), Ge(II), Nb(III), Ta(III) and Rh(III). Cations having ionic radii outside this range can still be used in the LDH structure, but should preferably be used in amounts of not more than 10 mol%, more preferably 5 mol% relative to the total moles of cations in A and B of ($[A_{1-x}B_x(OH)_2]^{x+}[LDH\text{-}Anion_{x/n}]^{x-}$). Alternatively, such cations having ionic radii outside this range can be introduced as the (Promoter cation).

Additional promoters covered by the second part of chemical formula (3), namely $(Promoter\ cation)_b(Promoter\ anion)_c$, on the other hand, when present are located in the anion layers of the LDH structure. When heating the intermediate in step 3) of the method to be described later, these additional promoters are located in the vacant holes of the resulting spinel structure. The promoters according to the present invention are homogeneously distributed over the structure of the intermediate without initiating perturbations. This being the case, the intermediate of the present invention may comprise a mixture of any number of cations as long as these are homogenously distributed in the LDH structure to give a LDH structure that, if any by-phases are present, only comprises one or more by-phases of prematurely formed spinel precursor and therefore results in the phase pure spinel structure as described above when it is heated.

The position of Promoters A2 and B2 may be determined by P-XRD measurements as described above with respect to the phase purity since A2 and B2 form part of the LDH structure itself. The position of additional promoters covered by the second part of chemical formula (3), may be determined by Extended X-Ray Absorption Fine Structure (EXAFS) spectroscopy, by the use of surface sensitive characterization methods like for example X-ray photoelectron spectroscopy (XPS) or by performing an ion exchange and analyzing the eluate with a suitable method, such as atomic absorption spectroscopy (AAS) as already described above with respect to the spinel structure.

A of chemical formula (3) must comprise elements which are capable of exhibiting a 3+ oxidation state but are present in the 2+ oxidation state in the intermediate. In other words, when the precursor material according to chemical formula (1) is synthesized from the intermediate according to chemical formula (3), some divalent cations A in the intermediate are oxidized and become trivalent cations B in the precursor material. This is crucial as otherwise there may not be the correct ratio of divalent and trivalent cations required for formation of the spinel structure. Thus, when A includes elements which are incapable of exhibiting the 3+ oxidation state, a certain ratio must be fulfilled. The ratio of the total moles of elements in A which are not capable of exhibiting the 3+ oxidation state to the total moles of elements in A which are capable of exhibiting 3+ oxidation state is less than or equal to 1:1, optionally 0.7:1, optionally 0.6:1, optionally 0.4:1. Although values as high as 1:1 can be used where x = 0.33, where x is lower e.g. 0.22, the ratio of 1:1 would not satisfy the purpose above, i.e. that there are sufficient ions in A capable of exhibiting the 3+ oxidation state that a spinel structure can be formed. When x is 0.22, the ratio of the total moles of elements in A which are not capable of exhibiting the 3+ oxidation state to the total moles of elements in A which are capable of exhibiting 3+ oxidation state must instead be less than or equal to 0.7:1. For the avoidance of any doubt, elements in A which are not capable of exhibiting the 3+ oxidation state are e.g. alkaline earth metals such as Mg or transition metals such as Cu, Pd, or Pt, *i.e.* A2 as defined above for chemical formula (3). Elements in A which are capable of exhibiting 3+ oxidation state are e.g. Fe, Co or Ru, i.e. A1 as defined above for chemical formula (3). Other values of x between 0.33 and 0.22 will have different upper limits. By taking into account the following conditions other values of x between 0.33 and 0.22 can be easily calculated.

The first condition is that A which is present in chemical formula (3) in a ratio of 1-x, with x being 0.2 - 0.33, comprises elements which are capable of exhibiting a 3+ oxidation state but are present in the 2+ oxidation state in the intermediate in a ratio n and elements which are incapable of exhibiting the 3+ oxidation state in a ratio m:

$$1 - x = n + m$$

Depending on the magnitude of x, the sum of n and x must always be twice the magnitude of m in order to obtain the spinel structure of the precursor as defined above when the intermediate is heated:

$$n + x = 2 \cdot m$$

The promoters can be introduced in the intermediate or in the precursor as described above. Where they are introduced in the intermediate, the total moles of A1 and B1 as a percentage of the total moles of cations is 5 - 95%, preferably 10 - 90%, preferably 25 - 80%, preferably 30 - 70%, preferably 33 - 67%, preferably 40 - 67%, preferably 50 - 67% and most preferably 60 - 67%. Conversely, this means that the intermediate would comprise some promoters according to the definition given above. The total moles of promoters, namely A2, B2 and Promoter cation(s), as a percentage of the total moles of cations would be 5 - 95%, preferably 10 - 90%, preferably 20 - 75%, preferably 30 -

70%, preferably 33 - 67%, preferably 33 - 60%, preferably 33 - 50% and most preferably 33 - 40%. The total composition of the mixture in the intermediate may be determined by elemental analysis like for example X-Ray fluorescence spectroscopy (XRF spectroscopy), atomic adsorption spectroscopy (AAS spectroscopy) or inductively coupled plasma optical emission spectrometry (ICP-OES).

As described above, A1 and B1 are one or more of Fe, Co and Ru. A2 may comprise transition metals only, alkaline earth metals only or a mixture of both. When A2 comprises transition metals, alkaline earth metals or a mixture of both, it may include a single metal from each group or more than one. Preferably, the transition metals in A2 are one or more selected from Ni, V, Mn, Cr, Ti, Pd, Pt, and the alkaline earth metals in A2 are one or more selected from Mg and Ca. In a preferred embodiment, A may comprise or consist of Mg and Fe.

B2 may comprise transition metals only, rare earth metals only or a mixture of both. This being the case, present chemical formula (3) does not cover intermediates wherein B2 comprises main group metals Al or Ga. When B2 comprises transition metals, rare earth metals or a mixture of both, it may include a single metal from each group or more than one. Preferably, the transition metals in B2 are one or more selected from Ni, V, Mn, Cr, Ti, Pd, Nb, Mo, Rh, and the rare earth metals in B2 are selected from one or more of La and Ce. More preferably, B may comprise Fe, Co or a mixture of both.

Although the presence of promoters in the intermediate of the present invention is mandatory, the presence of additional promoters covered by the second part of chemical formula (3) is optional as the molar ratio a:b in chemical formula (3) is in the range 1:0 - 1:0.4. The molar ratio a:b is preferably 1:0-1:0.3, preferably 1:0-1:0.272, preferably 1:0 - 1:0.052 and most preferably 1:0.001 - 1:0.052. In order to balance charges in the intermediate of the present invention, the molar ratio b:c is balanced. Consequently, when b is 0, c is also 0.

In chemical formula (3), the Promoter cation is selected from one or more ammonia synthesis catalyst promoters. When a Promoter cation is present in the intermediate of the present invention, i.e. when the molar ratio a:b is below 1:0, the Promoter cation may comprise alkali metals only, alkaline earth metals only, transition metals only, rare earth metals only, main group metals only, main group semiconductors only or a mixture thereof. When the Promoter cation comprises alkali metals, alkaline earth metals, transition metals, rare earth metals, main group metals, main group semiconductors or a mixture of two or more of these, it may include a single metal or more than one metal from one or more groups. An alkali metal present in chemical formula (3) as Promoter cation may preferably be K. An alkaline earth metal present in chemical formula (3) as Promoter cation may preferably be Mg only, Ca only or a mixture of both. A transition metal present in chemical formula (3) as Promoter cation may preferably be one or more element selected from the group consisting of Ni, V, Mn, Cr, Ti, Mo, Rh, Pd, Pt, Sc, Y, Zr, W, Os, Nb, Ta and Re. A rare earth metal present in chemical formula (3) as Promoter cation may preferably be one or more element selected from the group consisting of La, Ce, Sm, Eu, Dy, Ho, Er, Yb and U. A main group metal present in chemical formula (3) as Promoter cation may preferably be Al only, Ga only or a mixture of both. A main group semiconductor present in chemical formula (3) as Promoter cation may preferably be Si. When present, the Promoter cation may most preferably comprise the alkali metal K.

In chemical formula (3), the Promoter anion is selected from monovalent or divalent anions. The Promoter anion may comprise hydroxide only, sulfate only, halides only, organic anions only or a mixture thereof. When the Promoter anion comprises hydroxide, sulfate, halides, organic anions or a mixture of two or more of these, it may include a single anion or more than one anion from one or more groups. The organic anion may preferably be carbonate, bicarbonate, formate, oxalate or a mixture thereof. Most preferably, the Promoter anion may comprise bicarbonate.

In chemical formula (3), the LDH-Anion is selected from monovalent or divalent anions. The LDH-Anion may comprise chloride only, sulphate only, nitrate only, carbonate only, bicarbonate only or a mixture thereof. When the LDH-Anion comprises chloride, sulphate, nitrate, carbonate, bicarbonate or a mixture of two or more of these, it may include a single anion or more than one anion from one or more groups. Preferably, the LDH-Anion may comprise carbonate, bicarbonate or a mixture thereof and most preferably the LDH-Anion comprise carbonate.

The intermediate of the present invention is obtainable by a co-precipitation reaction of A, B, and the LDH-Anion as described above to deliver a suspension of a co-precipitated product having an LDH structure (step 1 of the method according to the present invention which is described below in further detail). In a next step, the suspension of the co-precipitated product is aged to form a LDH structure that, if any, comprises one or more by-phases of prematurely formed spinel precursor (step 2 of the method according to the present invention which is described below in further detail). The intermediate may optionally be impregnated with a solution comprising the Promoter cation and anion according to step 2a) of the method described below.

In a preferred embodiment of the invention, there is an intermediate described above in which A comprises Mg together with Fe, Co, and/or Ru, B comprises Fe, Co, and/or Ru, x is 0.2 to 0.33, the LDH-Anion comprises carbonate, the Promoter cation comprises the alkali metal K and the Promoter anion comprises carbonate or bicarbonate, the molar ratio a:b is in the range 1:0.001- 1:0.052, and c, m and n have the values specified in the claims.

In a more preferred embodiment of the invention, there is an intermediate described above in which A is Mg together with Fe only, Co only, or a mixture of Fe and Co only, B is Fe only, Co only, or a mixture of Fe and Co, x is 0.2 to 0.33, the LDH-Anion is carbonate, the Promoter cation comprises the alkali metal K and the Promoter anion is bicarbonate, the molar ratio a:b is in the range 1:0.001 - 1:0.052, and c, m and n have the values specified in the claims.

In this embodiment, the intermediate may have the formula $[(Mg^{2+})_{0.333}(Fe^{2+})_{0.333}(Fe^{3+})_{0.333}(OH)_2]^{0.333+}[(CO_3)_{0.166}]^{0.333-})_a\cdot mH_2O\cdot(K)_b(HCO_3{}^{2-})_c$, or $[(Mg^{2+})_{0.333}(Fe^{2+})_{0.333}((Fe^{3+})_{1-z}(CO^{3+})_z)_{0.333}(OH)_2]^{0333+}[(CO_3)_{0.166}]^{0.333-})_a\cdot mH_2O\cdot(K)_b(HCO_3{}^{2-})c$ where z is in the range 0.25 - 1, preferably 0.25, 0.5, 0.75 or 1 and m, a, b, and c are as defined above.

In the present invention, surprisingly, it has been found that a phase pure, *i.e.* in accordance with the definition of this term also a by-phase free, spinel structure of the precursor can be obtained by carefully controlling step 2) for ageing the suspension of the co-precipitated product to form the LDH structure of the intermediate as described herein. Generally, it has been found that the number and amount of by-phases other than a prematurely formed spinel precursor decrease with an increasing ageing time. The minimum time that is required to obtain an LDH structure that does not comprise by-phases or only comprises one or more by-phases of prematurely formed spinel precursor and thus results in a phase pure spinel structure as defined above depends on the composition of the co-precipitated product formed in step 1). In particular, it has been discovered that an intermediate comprising certain elements, such as Co as A and/or B, forms an LDH structure within 1 hour ageing which after heating results in a phase pure spinel precursor. On the other hand structures not comprising elements such as Co as A and/or B, require an ageing of the suspension for more than 4 hours (h), preferably for more than 5 h, preferably for more than 10 h, preferably for more than 13 h, preferably for more than 16 h and most preferably for more than 20 h. The phase pure spinel structure of the precursor material obtained hereby has a strong impact on the properties of the catalytically active material prepared therefrom.

**Method**

The method of forming the catalytically active material of the present invention comprises the following sequence of steps:

1) a co-precipitation reaction of A, B, and LDH-Anion to deliver a suspension of a co-precipitated product having an LDH structure, wherein A, B, and LDH-Anion are as defined above for the intermediate;

2) ageing the suspension of the co-precipitated product from step 1) to form an intermediate having a LDH structure as defined above; and optionally carrying out step 2a):
2a) contacting the intermediate from step 2) with a solution comprising the Promoter cation and Promoter anion to impregnate the Promoter cation and Promoter anion as defined above for the intermediate in the LDH structure;

3) heating the intermediate obtained in step 2) or step 2a) to form a precursor material having a phase pure spinel structure; and optionally carrying out step 3a):
3a) contacting the precursor material from step 3) with a solution comprising the Promoter cation and Promoter anion to impregnate the Promoter cation and Promoter anion as defined above for the precursor material in the spinel structure; heating the impregnated spinel structure to embed the Promoter cation and Promoter anion into the sample and preferably to transform the Promoter anion into an oxide;

4) reducing the precursor material obtained in step 3) or step 3a) to form the catalytically active material.

The co-precipitation step 1) is performed as known in the art and may be adapted according to the demands made on the LDH structure to be produced. Generally, two different aqueous solutions are used: an acidic and a basic solution, which are described below. Both solutions are added to a reactor while stirring at a constant temperature according to the preferred synthesis conditions of the desired LDH structure. Stirring may be performed in the range of 100 to 800 rpm, preferably 200 to 500 rpm, preferably 250 to 450 rpm and most preferably 300 rpm. Stirring may be performed at temperatures in the range of 25 to 80 °C, preferably 30 to 70 °C, preferably 40 to 60 °C, preferably 45 to 55 °C and most preferably 49 to 51 °C. Addition may be performed for 0.5 to 2 h, preferably 1 h. The dosing rate of the acidic solution preferably is kept constant. In lab scale synthesis of about 6g sample, the dosing rate may be kept at 1 - 4 g/min, preferably 1.5 - 3 g/min, preferably 2 - 2.5 g/min, preferably 2.1 - 2.2 g/min, most preferably at 2.16 g/min. With increasing reactor and batch sizes, the dosing rate has to be increased. The dosing rate of the basic solution may be adjusted in order to keep the pH of the reaction volume at a desired constant value. The pH may be kept at 8 - 12, preferably 9 - 11, preferably 10 - 10.8 and most preferably 10.4 - 10.6.

The acidic solution contains one or more of divalent metal cations and one or more of trivalent metal cations in a ratio $M^{2+}:M^{3+}$ of 2:1 to 4:1. The di- and trivalent cations $M^{2+}:M^{3+}$ are the same as defined above for the intermediate of the present invention. As described above, A in chemical formula (3) must always comprise divalent elements which are capable of exhibiting a 3+ oxidation state upon synthesis of the precursor material according to chemical formula (1) in order to provide the ratio of divalent and trivalent cations required for the formation of the spinel structure. The ratio of $M^{2+}:M^{3+}$ (2:1) is therefore adjusted to the desired composition of the LDH, always maintaining a cation ratio that

can be transformed after calcination in air into a $M^{2+}$:$M^{3+}$ ratio of 1:2 to generate theoretically phase pure spinel structures. The total $M^{x+}$ concentration in the acidic solution may be adjusted to meet the requirements of the desired precipitate and may be in the range of 0.6 - 1 mol/L, preferably 0.7 - 0.9 mol/L, preferably 0.75 - 0.85 mol/L, preferably 0.79 - 0.81 mol/L and may most preferably be 0.8 mol/L. The pH value of the acidic solution may be 0 - 6.9, preferably 5-6.5 and may result from the metal salts described below that are used to prepare the acidic solution. The pH value may also be adjusted by adding a water-soluble acid, for instance a mineral acid or a carboxylic acid, wherein the mineral acid comprises hydrogen acids such as hydrochloric acid, sulfuric acid, nitric acid and the carboxylic acid comprises formic acid or oxalic acid. Di- and trivalent metal cations may be introduced by using suitable metal salts that are soluble in the aqueous solution, for instance hydroxides, sulfates, nitrates, halides, bicarbonates, formates or oxalates, preferably sulfates, nitrates and halides are used.

The basic solution contains hydroxide to form the hydrotalcite-like layered structure according to chemical formula (3), having a concentration in the range of 0.4 - 0.8 mol/L, preferably 0.5 - 0.7 mol/L, preferably 0.55 - 0.65 mol/L, preferably 0.59 - 0.61 mol/L and may most preferably be 0.6 mol/L. The hydroxide may be any suitable hydroxide, preferably an alkaline or earth alkaline hydroxide and most preferably NaOH. The basic solution also comprises one or more LDH-Anions as defined above in a total concentration in the range of 0.070 - 0.11 mol/L, preferably 0.080 - 0.10 mol/L, preferably 0.085 - 0.095 mol/L, preferably 0.089 - 0.091 mol/L and may most preferably be 0.09 mol/L. The LDH-Anion may be introduced by using suitable salts that are soluble in the aqueous solution, for instance alkaline or earth alkaline salts may be used. $Na_2CO_3$ is preferred.

The ageing step 2) of the present invention is performed on the suspension obtained from the co-precipitation step above. It is carried out under constant stirring conditions for a time that results in the formation of an LDH structure as defined above. It may be performed for 1 h, preferably for more than 1 h, preferably for more than 4 h, preferably for more than 5 h, preferably for more than 10 h, preferably for more than 13 h, preferably for more than 16 h and most preferably for more than 20 h. The ageing temperature may be adjusted and is preferably between 25 - 90 °C, more preferably between 30 - 80 °C and most preferably between 40 - 60 °C.

As the phase purity of the materials of the present invention results from the ageing step 2), the method of forming the catalytically active material of the present invention may also be described as comprising the following sequence of steps:

1) a co-precipitation reaction of A, B, and LDH-Anion to deliver a suspension of a co-precipitated product having an LDH structure, wherein A, B, and LDH-Anion are as defined above for the intermediate;

2) ageing the suspension of the co-precipitated product from step 1) for 1 h, preferably for more than 1h, preferably for more than 4 h, preferably for more than 5 h, preferably for more than 10 h, preferably for more than 13 h, preferably for more than 16 h and most preferably for more than 20 h to form an intermediate having a LDH structure; and optionally carrying out step 2a):
2a) contacting the intermediate from step 2) with a solution comprising the Promoter cation and Promoter anion to impregnate the Promoter cation and Promoter anion as defined above for the intermediate in the LDH structure;

3) heating the intermediate obtained in step 2) or step 2a) to form a precursor material having a spinel structure; and optionally carrying out step 3a):
3a) contacting the precursor material from step 3) with a solution comprising the Promoter cation and Promoter anion to impregnate the Promoter cation and Promoter anion as defined above for the precursor material in the spinel structure; heating the impregnated spinel structure to embed the Promoter cation and Promoter anion into the sample and preferably to transform the Promoter anion into an oxide;

4) reducing the precursor material obtained in step 3) or step 3a) to form the catalytically active material.

The impregnation steps 2a) and 3a) are optional. Regarding the activity of the catalytically active material of the present invention, an impregnation in the LDH phase during the synthesis (step 2a) has a greater effect on activity than impregnation in the spinel phase (step 3a). Without wishing to be bound to any theory this may be due to a more homogeneous distribution of the Promoter cations in the LDH phase, since the LDH interlayers are filled with anions and crystal water, which allows improved diffusion and distribution of the cations within the LDH structure. Thus, the impregnation according to the method of the present invention is preferably performed in step 2a).

For the impregnation a suitable $(\text{Promoter cation})_b(\text{Promoter anion})_c$ salt as defined above for the intermediate is dissolved in deionized water. The concentration of the salt is varied depending on the desired loading with Promoter cation. The sample is soaked at room temperature for 15 minutes with 0.8 mL Promoter cation solution per 1 g LDH to form a slurry-like mixture. The impregnation according to present steps 2a) and 3a) is preferably performed with a nominal loading of the Promoter cation in the range of about 0.01 wt-% to 10 wt-%, more preferably in a range of about 0.1 wt-% to 5 wt-% and most preferably in a range of about 0.2 wt-% to 2 wt-%. The impregnation delivers molar ratios of the LDH ($[A_{1-x}B_x(OH)_2]^{x+}[LDH\text{-}Anion_{x/n}]^{x-}$) or spinel ($AB_2O_4$) structures relative to the Promoter cation in the range of about 1:0 - 1:0.3, preferably 1:0 - 1:0.272, preferably 1:0 - 1:0.052 and most preferably 1:0.001- 1:0.052.

When performing step 3a), a second heating step is required after the impregnation to embed the Promoter cation and Promoter anion into the sample and preferably to transform the Promoter anion into an oxide. The second heating in step 3a) may be a calcination step, performed in an atmosphere of air. The heating step may be performed at temperatures and times that result in complete conversion of the LDH structure to a spinel structure. Preferably, calcination is performed at a temperature in the range of 400 - 800 °C, preferably 500 - 700 °C, preferably 550 - 650 °C, preferably 590 - 610 °C and most preferably 600 °C. The heating rate may be in the range of 0.5 - 5 K/min, preferably 1 - 3 K/min, preferably 1.5 - 2.5 K/min, preferably 1.9 - 2.1 K/min and most preferably 2 K/min. Once the highest temperature is reached, the calcination may be carried out for a time in the range of 1 - 10 h, preferably 2 - 5 h, preferably 2.5 - 4 h and most preferably for 3 h. Any calcination equipment can be used, but a muffle furnace is preferred.

After impregnating, the intermediate may be separated. This preferably takes place by centrifugation. It may be followed by a washing step with demineralized water, according to which the intermediate is washed until the conductivity of the washing water stays constant in three consecutive measurements. It is then dried and calcined in an atmosphere of air. Drying is performed at a temperature in the range of 400 - 800 °C, preferably 500 - 700 °C, preferably 550 - 650 °C, preferably 590 - 610 °C and most preferably 600 °C. The heating rate may be in the range of 0.5 - 5 K/min, preferably 1 - 3 K/min, preferably 1.5 - 2.5 K/min, preferably 1.9 - 2.1 K/min and most preferably 2 K/min, before being held at the temperatures above for a time of more than 0.5 h, preferably in the range of 1 - 10 h, preferably 2 - 5 h, preferably 2.5 - 4 h and most preferably for 3 h.

The heating step 3) may be a calcination step, performed in an atmosphere of air. The heating step may be performed at temperatures and times that result in complete conversion of the LDH structure to a spinel structure. Preferably, calcination is performed at a temperature in the range of 400 - 800 °C, preferably 500 - 700 °C, preferably 550-650 °C, preferably 590 - 610 °C and most preferably 600 °C. The heating rate may be in the range of 0.5 - 5 K/min, preferably 1 - 3 K/min, preferably 1.5 - 2.5 K/min, preferably 1.9 - 2.1 K/min and most preferably 2 K/min. Once the highest temperature is reached, the calcination may be carried out for a time in the range of 1 - 10 h, preferably 2 - 5 h, preferably 2.5 - 4 h and most preferably for 3 h. Any calcination equipment can be used, but a muffle furnace is preferred.

The reducing step 4) of the present invention's precursor material may be performed in a synthesis reactor between pure SiC after intensive purging of the reactor until the water content is zero. SiC serves as an inert filling material and heat conductor. The catalyst bed is diluted with SiC, because ammonia synthesis is strongly exothermic, and the catalyst grains produce a lot of heat. A pure catalyst bed could lead to a temperature gradient over the catalyst bed. The SiC conducts and distributes the heat. The pure SiC before and after the catalyst bed moreover holds the catalyst be in position, it conducts heat from the catalyst bed and ensures a homogeneous distribution of the gas flow through the particle layers in the plug flow reactor.

The reduction may be performed by heating the precursor material in the presence of a reduction gas. The reduction gas for reducing the precursor material may be hydrogen or $NH_3$ gas, and the reduction gas is preferably hydrogen. Preferably, the heating starts at 25°C and the temperature may be increased to 200 - 1000 °C, preferably 300 - 800 °C, preferably 400 - 600 °C and most preferably 450 - 550 °C. The heating rate is not crucial. In terms of production efficiency, the temperature may be increased at 0.1 - 10 K/min. In a particular embodiment, the temperature may be increased at 1 K/min. In a preferred embodiment, the reduction is performed by heating the precursor material in the presence of the reduction gas with a minimum gas flow rate of at least 200 NmL/min*$g_{Precursor}$, preferably of at least 300 NmL/min*$g_{Precursor}$, preferably of at least 400 NmL/min*$g_{Precursor}$ and most preferably of at least 430 NmL/min *$g_{Precursor}$. There is no upper limit for the gas flow rate. However, in terms of production efficiency, the gas flow rate may below 1800 Nml/min*$g_{Precursor}$ in order to avoid a waste of the reduction gas. The unit of the gas flow rate NmL/min stands for the flow at norm conditions (temperature = 273.15 K, pressure = $1.013 \times 10^5$ Pa). The reduction gas may be mixed with a further gas in a molar ratio of (reduction gas: further gas) 50:50 - 100:0, preferably 60:40 - 90:10, preferably 70:30 - 80:20 and most preferably 74:26 - 76:24. The further gas is preferably nitrogen. Once the desired end temperature is obtained, the reduction conditions may be kept constant for at least 10 h, preferably for at least 30 h, preferably for at least 50 h and most preferably for at least 62 h. Pressure drop may be observed in the system. The absolute pressure in the reactor may be in the range of 1 -150 bar, preferably 1 - 120 bar and most preferably 1 - 101 bar. When varying one parameter, it is clear that the other parameters have to be adapted accordingly in order to ensure a successful reduction.

A preferred method of forming the catalytically active material of the present invention may be described as comprising the following sequence of steps, which can include any of the more detailed descriptions of the steps above:

1) a co-precipitation reaction where A comprises Mg together with Fe, Co, and/or Ru, B comprises Fe, Co, and/or Ru, and the LDH-Anion comprises carbonate to deliver a suspension of a co-precipitated product having an LDH structure;

2) ageing the suspension of the co-precipitated product from step 1) for 1 h if A and/or B includes Co, preferably for more than 1 h if A and/or B includes Co, preferably for more than 4 h, preferably for more than 5 h, preferably for more than 10 h, preferably for more than 13 h, preferably for more than 16 h and most preferably for more than 20 h to form an intermediate having a LDH structure; and optionally carrying out step 2a):
2a) contacting the intermediate from step 2) with a solution comprising potassium bicarbonate to impregnate the Promoter cation comprising potassium and the Promoter anion comprising bicarbonate in the LDH structure;

3) heating the intermediate obtained in step 2) or step 2a) to form a precursor material having a spinel structure where A comprises Mg, B comprises Fe, Co, and/or Ru, the Promoter cation comprises potassium and the Promoter anion comprises oxide; and optionally carrying out step 3a):
3a) contacting the precursor material from step 3) with a solution comprising potassium as the Promoter cation and bicarbonate as the Promoter anion to impregnate the Promoter cation and Promoter anion in the spinel structure; heating the impregnated spinel structure precursor to embed the Promoter cation and Promoter anion into the sample and preferably to transform the Promoter anion into an oxide;

4) reducing the precursor material obtained in step 3) or step 3a) to form the catalytically active material.

In a particularly preferred method of forming the catalytically active material of the present invention may be described as comprising the following sequence of steps, which can include any of the more detailed descriptions of the steps above:

1) a co-precipitation reaction where A is Mg and Co, or Mg, Fe and Co, B is Fe only, Co only, or Fe and Co, and the LDH-Anion is carbonate to deliver a suspension of a co-precipitated product having an LDH structure;

2) ageing the suspension of the co-precipitated product from step 1) for 1 h if A and/or B includes Co, preferably for more than 1 h if A and/or B includes Co, preferably for more than 4 h, preferably for more than 5 h, preferably for more than 10 h, preferably for more than 13 h, preferably for more than 16 h and most preferably for more than 20 h to form an intermediate having a LDH structure; and optionally carrying out step 2a):
2a) contacting the intermediate from step 2) with a solution comprising potassium bicarbonate to impregnate the Promoter cation comprising potassium and the Promoter anion comprising bicarbonate in the LDH structure;

3) heating the intermediate obtained in step 2) or step 2a) to form a precursor material having a spinel structure where A is Mg, B is Co only, or a mixture of Fe and Co, the Promoter cation comprises potassium and the Promoter anion comprises oxide; and optionally carrying out step 3a):
3a) contacting the precursor material from step 3) with a solution comprising potassium as the Promoter cation and bicarbonate as the Promoter anion to impregnate the Promoter cation and Promoter anion in the spinel structure; heating the impregnated spinel structure precursor to embed the Promoter cation and Promoter anion into the sample and preferably to transform the Promoter anion into an oxide;

4) reducing the precursor material obtained in step 3) or step 3a) to form the catalytically active material.

As described above, the ageing time in step 2) that is necessary to provide a phase pure precursor structure for forming the catalytically active material of the present invention, depends on the cation species that are present in the co-precipitated product formed by step 1. Hence, another particularly preferred method of forming the catalytically active material of the present invention may be described as comprising the following sequence of steps, which can include any of the more detailed descriptions of the steps above:

1) a co-precipitation reaction where A is Mg and Fe, B is Fe only and the LDH-Anion is carbonate to deliver a suspension of a co-precipitated product having an LDH structure;

2) ageing the suspension of the co-precipitated product from step 1) for more than 4 h, preferably for more than 5 h, preferably for more than 10 h, preferably for more than 13 h, preferably for more than 16 h and most preferably for more than 20 h to form an intermediate having a LDH structure; and optionally carrying out step 2a):
2a) contacting the intermediate from step 2) with a solution comprising potassium bicarbonate to impregnate the Promoter cation comprising potassium and the Promoter anion comprising bicarbonate in the LDH structure;

3) heating the intermediate obtained in step 2) or step 2a) to form a precursor material having a spinel structure where A is Mg, B is Fe only, the Promoter cation comprises potassium and the Promoter anion comprises oxide;

and optionally carrying out step 3a):

3a) contacting the precursor material from step 3) with a solution comprising potassium as the Promoter cation and bicarbonate as the Promoter anion to impregnate the Promoter cation and Promoter anion in the spinel structure; heating the impregnated spinel structure precursor to embed the Promoter cation and Promoter anion into the sample and preferably to transform the Promoter anion into an oxide;

4) reducing the precursor material obtained in step 3) or step 3a) to form the catalytically active material.

By the above general synthesis method, a catalyst can be derived that is comparable to the industrially applied catalyst without the need of a high temperature fusion process for the synthesis of precursors. The precursor material according to the present invention is synthesized by a simple co-precipitation process with subsequent calcination, which is far less energy demanding than the high temperature fusion process. This is not only an energetically more favorable synthesis route. Additionally, the obtained catalyst precursor has a much higher homogeneity compared to those derived by the traditional fusion process and, therefore, provides a far better opportunity of an easy and controllable tuning of its properties by insertion of various dopants. With this catalytic system, a selective and well-defined introduction of various promoters in a broad range of amounts and combinations can be achieved. The resultant catalysts may also deliver improved activity.

The present invention also relates to a method of synthesizing ammonia, decomposing ammonia or both by using the catalytically active material of the present invention. The present invention also relates to the use of the catalytically active material of the present invention in the synthesis of ammonia, the decomposition of ammonia or both.

In the synthesis of ammonia, nitrogen ($N_2$) is reacted with hydrogen ($H_2$) to deliver ammonia ($NH_3$) using the catalysts of the invention. A wide variety of conditions can be used. The pressure may be 1 - 500 bar, preferably 50 - 300 bar, preferably 80 - 250 bar. The temperature may be 200 - 700 °C, preferably 300 - 600°C, more preferably 325 - 550°C. The molar ratio of $H_2$:$N_2$ may be 5:1 - 1:1, preferably 4:1 - 2:1, most preferably 3:1.

The reaction above is an equilibrium. The decomposition of ammonia relates to the reaction of ammonia ($NH_3$) with the catalysts of the invention to deliver nitrogen ($N_2$) and hydrogen ($H_2$). A wide variety of conditions can be used. The pressure may be 1 - 500 bar, preferably 50 - 300 bar, preferably 80 - 250 bar. The temperature may be 200 - 700 °C, preferably 300- 600°C, more preferably 325- 550°C. An inert gas, preferably Argon, may be included in the reactor in an amount of 25% or less, preferably 20% or less.

The ammonia synthesis reaction is a widely investigated reaction and a general understanding of the reaction mechanism, active sites as well as the influence on several promoters has been developed. The enormous lifetime of catalysts in the industrially applied process in relation to its extreme sensitivity to poisoning by oxygen-containing species indicates a dynamic self-generation of the active sites, which has not yet been fully explained. The use of the LDH-derived catalyst precursors for ammonia synthesis catalysts allows performance of detailed studies on the mechanism as well as the role of the promoters on the overall behaviour of the catalyst. At the same time, the present LDH-derived catalyst enables detailed investigation of the discussed microscopic reversibility to obtain a deeper insight on the relationship between the ammonia synthesis and the ammonia decomposition reaction.

The present invention also relates to the use of an intermediate as defined above, a precursor material as defined above or both in the preparation of the catalytically active material described in detail above for ammonia synthesis. The specific properties of the present inventions catalytically active material, that are described in detail above, result from the method of the present invention wherein a precursor material having a phase pure spinel structure is reduced to the catalyst. The phase purity of the spinel structure in turn results from heating an LDH-structure as intermediate which may comprise one or more by-phases of prematurely formed spinel precursor and therefore results in the phase pure spinel structure as described above. Phase purity of the spinel structure can be delivered by the ageing time of the co-precipitate for forming the intermediate.

**Experimental Part**

**Characterization**

**Powder X-ray diffraction (P-XRD)**

Powder X-ray diffraction allows to obtain a diffraction pattern from a powder of a material. Since most materials have unique diffraction patterns, compounds can be identified by using a database of diffraction patterns. The purity of a sample can also be determined from its diffraction pattern, as well as the composition of any impurities present. A diffraction pattern can also be used to determine and refine the lattice parameters of a crystal structure. A theoretical structure can also be determined using a method known as Rietveld refinement. The particle size of the powder can also be determined by using the Scherrer formula, which relates the particle size to the peak width.

P-XRD measurements were performed in Bragg-Brentano geometry on a Bruker AXS D8 Advance II theta/theta diffractometer, using Ni-filtered Cu $K_\alpha$ radiation and a position sensitive energy dispersive LynxEye silicon strip detector. The sample powder was filled into the recess of a cup-shaped sample holder, the surface of the powder bed being leveled with the sample holder edge (front loading). In the case of air sensitive samples, an airtight version of the sample holder equipped with an X-ray transparent dome was loaded in a glove box under an argon atmosphere. After the airtight P-XRD measurement, the sample was passivated by deliberately leaking air into the sample holder overnight, followed by another P-XRD measurement without the dome in air.

Analysis of the diffraction patterns was performed by Rietveld refinements with the DIFFRAC.SUITE TOPAS software (version 5, ©1999-2014 Bruker AXS) (https://www.bruker.com/products/x-ray-diffraction-and-elemental-analysis/x-ray-diffraction/xrd-software/topas.html; accessed on August 2019). The Rietveld refinement allows a fitting of measured diffraction patterns by using a least square approach (R. E. Dinnebier, A. Leineweber, J. S. O. Evans, Rietveld Refinement Practical Powder Diffraction Pattern Analysis using TOPAS, De Gruyter, 2018). From the fitted diffraction patterns parameters like lattice parameter (a), sample composition and volume weighted mean column length of the crystalline domains ($L_{VOL}$-IB) were determined. The volume weighted mean column length gives of the size of the coherently diffracting domains in the sample as an average value. Standard X-ray diffraction is a volume effect. Therefore, the contribution of each of the crystalline domains on the average value is weighted by the weight of it volume. To include the different potential shapes and orientations of the crystalline domains in the samples an overall average shape factor (also known as "Scherrer constant") of 0.9 was used for the calculation of the volume weighted mean column length.

## Transmission electron microscopy (TEM) and scanning electron microscopy (SEM)

Transmission electron microscopy (TEM) and scanning electron microscopy (SEM) both acquire images of a sample. TEM uses transmitted electrons, i.e. electrons that are passing through a sample, and thus provides information on the inner structure of the sample. In SEM, images of a sample are produced by scanning the surface with a focused beam of electrons. TEM and SEM micrographs were taken with a Hitachi HD-2700 microscope (Spherical aberration corrected dedicated STEM, 200 kV, Cold Field Emission Gun).

## Energy-dispersive x-ray (EDX) spectroscopy

Energy-dispersive x-ray (EDX) spectroscopy relies on the excitation of atoms in a sample by an electron beam of a specific energy. The interaction results in the emission of X-ray radiation of an element specific energy. This radiation provides information about the elemental composition of the sample. For EDX spectroscopy the used electron microscope was equipped with an EDAX Octane T Ultra W 200 $mm^2$ Silicon Drift Detector (SDD).

## X-ray fluorescence (XRF) spectroscopy

In X-ray fluorescence (XRF) spectroscopy, high-energetic X-rays are used to excite electrons in a material. By determining the resulting emission of characteristic fluorescent X-rays, XRF is used for elemental analysis. XRF spectroscopy was measured with a XRF Spectrometer Pioneer S4 (Bruker).

## Atomic absorption (AAS) spectroscopy

In Atomic absorption (AAS) spectroscopy, elements are quantitatively determined by bringing these elements into the gas phase and measuring their absorption spectrum of light. Elements can be identified by the wavelength of their absorption band and quantified by the intensity of their adsorption. AAS spectroscopy was measured with a Thermo Electron M Series Atomic Absorption Spectrophotometer.

## Nitrogen physisorption

$N_2$-physisorption is widely used for the determination of the surface area and pore size distribution of various porous materials. Measurements were performed with a Quantachrome QUADRASORB evo MP set-up at -196 °C (77 K). Adsorption and desorption isotherms were measured at a $p/p_0$ range between 0.05 and 0.95. Prior to the measurements the air-stable precursor samples were degassed at 100 °C for 12 h in vacuum. The air sensitive catalysts obtained by reduction were transferred without air contact and directly measured without any thermal pretreatment.

Surface areas were calculated from $N_2$-physisorption (77 K) data collected in a $p/p_0$ range between 0.05 and 0.3. The surface area as used herein is a BET surface area and refers to the analysis technique according to Brunauer Emmett and Teller (BET) for measuring the specific surface area (total surface area per unit of mass).

Pore size distributions were calculated from the adsorption and desorption isotherms obtained from $N_2$-phy-

sisorption at 77 K at a $p/p_0$ range between 0.05 and 0.95 by using the software Quadra Win™ (Version 7.1, ©2000-2016, Quantachrome Instruments. All rights reserved). The pore size distribution as used herein is a BJH pore size distribution and refers to the model according to Barrett, Joyner and Halenda (BJH) for calculating the pore diameter of a material by the adsorbed gas volume.

The term "*pore volume*" as used herein refers to the void content per unit weight of a porous material or structure and is determined from the Quadra Win™ software. A void is also called a pore. The terms "*porosity*" and "*porous*" as used herein refer to the void content per unit volume of a porous material or structure and is determined from the Quadra Win™ software. The terms "*mesoporosity*" and "*mesoporous*" as used herein refer to pores having a diameter greater than 2 nm and less than 50 nm.

## Catalysts

In the following, the present invention is described in further detail by examples according to the present invention and comparative examples. However, the present invention is not limited to the model catalysts described in detail below but is defined by the claims.

Catalytically active materials according to the present invention are derived from phase pure spinel structure precursor materials represented by chemical formula (1) that in turn are obtained by heating an LDH intermediate represented by chemical formula (3). One model catalytically active material is derived from a phase pure precursor material with the composition $MgFe_2O_4$ (magnesioferrite) which is obtained by heating a respective LDH-intermediate which has been aged for 24 h beforehand. The relatively simple composition with iron and only magnesium as promoter within the spinel structure provides a good basis that is known to show a clear activity in ammonia synthesis (ChemCatChem 2017, 9, 659 - 671). Further model catalysts are derived from the phase pure precursor material $MgFe_{2-x}Co_xO_4$, having varying amounts x of Co replacing some or all of $Fe^{3+}$ and thus having a second catalytically active metal present in the spinel structure. It has been found that in the presence of Co at position B in chemical formula (1), a phase pure spinel structure is obtained by heating a respective LDH-intermediate which has been aged for 1 h beforehand. As comparative examples, a catalytically active material was derived from the non-phase pure spinel structures $MgFeAlO_4$ and $MgFeGaO_4$, which are obtained by heating a respective LDH-intermediate which has been aged for 1 h beforehand. These spinel structures are moreover not represented by chemical formula (1) due to the presence of Al and Ga. K was chosen as Promoter cation in the examples. The promoting effect on several catalytically active materials was investigated by testing several samples with different K-loadings.

## Synthesis of the precursor material

### Reagents

All reagents were commercially available chemicals used without further processing: iron (II) sulfate heptahydrate (≥ 99.5% p.a., ACS, Carl Roth GmbH & Co. KG), iron (III) nitrate nonahydrate (≥ 98% p.a., ACS, Alfa Aesar GmbH), aluminum nitrate nonahydrate (+98% p.a, ACS, Sigma Aldrich Chemie GmbH), gallium(III) nitrate hydrate (+99.9 %, metals basis, Alfa Aesar GmbH), cobalt (II) nitrate hexahydrate (≥ 98% p.a., ACS, Carl Roth GmbH & Co. KG) and magnesium nitrate hexahydrate (≥ 98%, ACS, Alfa Aesar GmbH). As precipitation agents, sodium carbonate (p.a., AppliChem GmbH) and sodium hydroxide (≥ 99%, VWR International BVBA), were used during synthesis. For the promotion with K potassium bicarbonate (puriss., Sigma-Aldrich Laborchemikalien GmbH) was used.

### Example 1 - phase pure $MgFe_2O_4$ precursor material (24 h aged)

The synthesis of the $[(Mg^{2+})_{0.333}(Fe^{2+})_{0.333}(Fe^{3+})_{0.333}(OH)_2]^{0.333+}[(CO_3)_{0.166}]^{0.333-}\cdot mH_2O$ intermediate LDH structure (where m is as defined in the claims) was performed via co-precipitation in an automated OptiMax synthesis workstation by Mettler Toledo. The set-up includes a single-walled glass reactor fixed inside a jacket acting as thermostat for accurate temperature control and an InLab Semi-Micro-L electrode for pH control. For the co-precipitation two different aqueous solutions were used: One acidic solution, which contains three equal concentrations of $Mg^{2+}$, $Fe^{3+}$ and $Fe^{2+}$ (0.266 mol/L) resulting in a 1:1:1 ratio (total $M^{x+}$ concentration: 0.8 mol/L) and one basic solution with NaOH (0.6 mol/L) and $Na_2CO_3$ (0.09 mol/L).

The ratio of $M^{2+}$:$M^{3+}$ (2:1) was adjusted to the desired composition of the LDH, simultaneously maintaining a cation ratio that can be transformed after calcination in air into a $M^{2+}$:$M^{3+}$ ratio of 1:2 to generate theoretically phase pure spinel structures by oxidation of the $Fe^{2+}$ to $Fe^{3+}$. Both solutions were added to the reactor under stirring (300 rpm) and at a constant temperature of 50 °C by two ProMinent gamma/L dosing pumps. While the dosing rate of the acidic solution was kept constant at 2.16 g/min, the dosing rate of the basic solution was adjusted by an automatic control system to keep the pH of the reaction volume constant at 10.5.

After dosing the metal salt solution over a period of 1 h, the resulting suspension was aged under constant stirring at 50 °C, but without pH control, for 24 h. Afterwards the precipitated product was separated by centrifugation (4000 rpm, 3 min) and washed with demineralized water until the conductivity of the washing water stayed constant in three consecutive measurements. The obtained powder was dried at 80 °C for 48 h and the LDH structure of the intermediate was confirmed by P-XRD (see Fig. 3).

To transform the intermediate LDH phase into a precursor material having a phase pure spinel structure of $MgFe_2O_4$, the sample was calcined in air in a muffle furnace at 600 °C (heating rate: 2 K/min) for 3 h. The phase pure spinel structure of the precursor material was confirmed by P-XRD (see Fig. 4). In the spinel structure of Example 1, the divalent cation A of chemical formula (1) is represented by $Mg^{2+}$ (A1) and the trivalent cation B of chemical formula (1) is represented by $Fe^{3+}$ (B1) giving chemical formula (1) of $MgFe_2O_4$.

**Example 2 - phase pure $MgFe_2O_4$ precursor material (24 h aged) impregnated with K**

The LDH intermediate of Example 1 was further promoted with various amounts of Promoter cation K by wet-impregnation with $KHCO_3$ before forming the precursor material. For the impregnation $KHCO_3$ was dissolved in a small amount of deionized water. The $KHCO_3$ mass was calculated depending on the desired K loading according to Table 1 below. The sample was soaked at room temperature for 15 minutes with 0.8 mL solution per 1 g LDH intermediate to form a slurry-like mixture. After impregnating, the sample was dried and calcined in air in a muffle furnace at 600 °C (heating rate: 2 K/min) for 3 h to transform the LDH into the spinel structure. The phase pure spinel structure of the precursor materials was confirmed by P-XRD (see Fig. 5).

The nominal amounts given in wt-% and mol% and the actual amounts given in wt-% of Promoter cation in the resulting samples are shown in Table 1 below. The nominal amounts are the theoretical K-amounts of the samples, which were intended to be reached if 100% of all K introduced during impregnation would have stayed on the samples. It is used as formal notation for the sample names. The actual amounts are determined by XRF elemental analysis. The amount of Promoter cation K being impregnated into the precursor material's spinel structure given in wt-% in the table can easily be converted into the following values of b according to present chemical formula (1) where a is 1-b-c and c is 0.5b. The resultant chemical formula (1) is $(MgFe_2O_4)_a{\cdot}(K)_b(O)_c$. As the charge of O is 2-, c is 0.5b to balance the charges.

**Table 1:** Nominal and real K-amount for series of precursor materials $MgFe_2O_4$ according to Example 2.

| Sample | nominal K-amount [wt-%] | nominal K-amount [mol%] | actual K-amount [wt-%] | b in chemical formula (1) |
|---|---|---|---|---|
| Example 2 (0.5%K) | 0.5 | 2.6 | 0.34 | 0.017 |
| Example 2 (1%K) | 1 | 5.2 | 0.85 | 0.041 |
| Example 2 (1.5%K) | 1.5 | 7.8 | 1.22 | 0.058 |
| Example 2 (2%K) | 2 | 10 | 1.93 | 0.088 |
| Example 2 (5%K) | 5 | 27 | 5.76 | 0.215 |
| Example 2 (10%K) | 10 | 58 | 9.04 | 0.292 |

**Example 3 - phase pure $MgFe_{2-x}Co_xO_4$ precursor material (1 h aged)**

In the precursor material of Example 3 parts of the $Fe^{2+}$ (A1) in the precursor material of Example 1 are replaced by $Co^{2+}$.

The synthesis of the $[(Mg^{2+})_{0.333}((Fe^{2+})_{1-z}(Co^{2+})_z)_{0.333}(Fe^{3+})_{0.333}(OH)_2]^{0.333+}[(CO_3)_{0.166}]^{0.333-}{\cdot}mH_2O$ (where m is as defined in the claims) intermediate LDH structure was performed via co-precipitation in an automated OptiMax synthesis workstation by Mettler Toledo. The set-up includes a single-walled glass reactor fixed inside a jacket acting as thermostat for accurate temperature control and an InLab Semi-Micro-L electrode for pH control. For the co-precipitation two different aqueous solutions were used: One acidic solution, which contains three equal concentrations of $Mg^{2+}$, $Fe^{3+}$, $Co^{3+}$ and $Fe^{2+}$ (0.266 mol/L) resulting in a 1:(1-z):z:1 ratio with z being 0.25, 0.5, 0.75 and 1 (total $M^{x+}$ concentration: 0.8 mol/L) and one basic solution with NaOH (0.6 mol/L) and $Na_2CO_3$ (0.09 mol/L).

The ratio of $M^{2+}$:$M^{3+}$ (2:1) was adjusted to the desired composition of the LDH, always maintaining a cation ratio that can be transformed after calcination in air into a $M^{2+}$:$M^{3+}$ ratio of 1:2 to generate theoretically phase pure spinel structures. Both solutions were added to the reactor under stirring (300 rpm) and at a constant temperature of 50 °C by two ProMinent gamma/L dosing pumps. While the dosing rate of the acidic solution was kept constant at 2.16 g/min, the dosing rate of the basic solution was adjusted by an automatic control system to keep the pH of the reaction volume constant at 10.5.

After dosing the metal salt solution over a period of 1 h, the resulting suspension was aged under constant stirring at 50 °C, but without pH control, for 1 h. Afterwards the precipitated product was separated by centrifugation (4000 rpm, 3 min) and washed with demineralized water until the conductivity of the washing water stayed constant in three consecutive measurements. The obtained powder was dried at 80 °C for 48 h and the LDH structure of the intermediate was confirmed by P-XRD (see Fig. 6).

To transform the intermediate LDH phase into a precursor material having a phase pure spinel structure according to chemical formula (1) of $MgFe_{1.75}Co_{0.25}O_4$, $MgFe_{1.5}CO_{0.5}O_4$, $MgFe_{1.25}Co_{0.75}O_4$ or $MgFeCoO_4$, the sample was calcined in air in a muffle furnace at 600 °C (heating rate: 2 K/min) for 3 h. The phase pure spinel structure of the precursor materials was confirmed by P-XRD (see Fig. 7). In the spinel structure of Example 3, the divalent cation A of chemical formula (1) is represented by $Fe^{2+}$ (A1) and Mg (A2) and the trivalent cation B of chemical formula (1) is represented by $Fe^{3+}$ (B1) and $Co^{3+}$ (B1).

### Example 4 - phase pure $MgFeCoO_4$ precursor material (24 h aged) impregnated with K

The LDH intermediate of Example 3 was further promoted with a nominal amount of 0.5 wt-% of Promoter cation K by wet-impregnation with $KHCO_3$ before forming the precursor material. For the impregnation a $KHCO_3$ solution in deionized water with a concentration of 0.103 mol/L was prepared. The sample was soaked at room temperature for 15 minutes with 0.8 mL solution per 1 g LDH intermediate to form a slurry-like mixture. After impregnating, the sample was dried and calcined in air in a muffle furnace at 600 °C (heating rate: 2 K/min) for 3 h to transform the LDH into the spinel structure. The phase pure spinel structure of the precursor materials was confirmed by P-XRD.

The actual amount of Promoter cation in the resulting samples was 0.34 wt-%. The amount of Promoter cation corresponds to b according to present chemical formula (1) being 0.0173. The resultant chemical formula (1) is $(MgFeCoO_4)\cdot(K)_{0.017}(O)_{0.09}$.

### Comparative Example 1 - $MgFe_2O_4$ precursor material (1 h aged)

A precursor material was prepared as described in Example 1, with the difference that after dosing the metal salt solution over a period of 1 h, the resulting suspension was aged for 1 h instead of 24 h. From P-XRD data, a by-phase of hematite and an increased reflection intensity resulting from a non-phase pure $MgFe_2O_4$ spinel structure was determined (see Fig. 4).

### Comparative Example 2 - $MgFe_2O_4$ precursor material (1 h aged) impregnated with K

Both the LDH-structure and the spinel structure of Comparative Example 1 were further promoted with a nominal amount of 2 wt-% of Promoter cation K by wet-impregnation with $KHCO_3$ to give samples. For the impregnation $KHCO_3$ was dissolved in a small amount of deionized water. The sample was soaked at room temperature for 15 minutes with 0.8 mL solution per 1 g LDH intermediate to form a slurry-like mixture. After impregnating, the sample was dried and calcined in air in a muffle furnace at 600 °C (heating rate: 2 K/min) for 3 h. The actual amount of Promoter cation was 1.74wt% for the sample impregnated in the LDH state and 1.85 wt% for the sample impregnated in the spinel state. For the sample impregnated in the LDH state, the amount of Promoter cation K corresponds to b according to present chemical formula (1) being 0.080, corresponding to a chemical formula (1) of $(MgFe_2O_4)$-$(K)_{0.08}(O)_{0.04}$. For the sample impregnated in the spinel state, b is 0.085, corresponding to a chemical formula (1) of $(MgFe_2O_4)$-$(K)_{0.085}(O)_{0.043}$. The structure of the precursor material of Comparative Example 2 was confirmed by P-XRD (see Fig. 8).

### Comparative Example 3 - $MgFeAlO_4$ (1 h aged)

In the $MgFeAlO_4$ structure of Comparative Example 3, $Fe^{3+}$ (B1) in the precursor material of Example 1 is replaced by $Al^{3+}$ as described in non-patent document ChemCatChem 2017, 9, 659-671. In addition, the LDH ageing step was carried out for only 1 hour.

The synthesis of intermediate $[(Mg^{2+})_{0.333}(Fe^{2+})_{0.333}(Al^{3+})_{0.333}(OH)_2]^{0.333+}[(CO_3)_{0.166}]^{0.333-}$ LDH structure was performed via co-precipitation in an automated OptiMax synthesis workstation by Mettler Toledo. The set-up includes a single-walled glass reactor fixed inside a jacket acting as thermostat for accurate temperature control and an InLab

Semi-Micro-L electrode for pH control. For the co-precipitation two different aqueous solutions were used: One acidic solution, which contains three equal concentrations of $Mg^{2+}$, $Al^{3+}$ and $Fe^{2+}$ (0.266 mol/L) resulting in a 1:1:1 ratio (total $M^{x+}$ concentration: 0.8 mol/L) and one basic solution with NaOH (0.6 mol/L) and $Na_2CO_3$ (0.09 mol/L).

The ratio of $M^{2+}$:$M^{3+}$ (2:1) was adjusted to the desired composition of the LDH, always maintaining a cation ratio that can be transformed after calcination in air into a $M^{2+}$:$M^{3+}$ ratio of 1:2 to generate spinel structures. Both solutions were added to the reactor under stirring (300 rpm) and at a constant temperature of 50 °C by two ProMinent gamma/L dosing pumps. While the dosing rate of the acidic solution was kept constant at 2.16 g/min, the dosing rate of the basic solution was adjusted by an automatic control system to keep the pH of the reaction volume constant at 10.5.

After dosing the metal salt solution over a period of 1 h, the resulting suspension was aged under constant stirring at 50 °C, but without pH control, for 1 h. Afterwards the precipitated product was separated by centrifugation (4000 rpm, 3 min) and washed with demineralized water until the conductivity of the washing water stayed constant in three consecutive measurements. The obtained powder was dried at 80 °C for 48 h and the LDH structure was confirmed by P-XRD (see K.F. Ortega, D. Rein, C. Lettmann, J. Heese, F. Ozcan, M. Heidelmann, J. Folke, K. Kähler, R. Schlögl, M. Behrens, ChemCatChem, 9 (2017) 659-671).

To transform the LDH phase into the spinel structure $MgFeAlO_4$, the sample was calcined in air in a muffle furnace at 600 °C (heating rate: 2 K/min) for 3 h. The spinel structure was confirmed by P-XRD (see K.F. Ortega, D. Rein, C. Lettmann, J. Heese, F. Ozcan, M. Heidelmann, J. Folke, K. Kähler, R. Schlögl, M. Behrens, ChemCatChem, 9 (2017) 659-671). In the spinel structure of Comparative Example 3, the divalent cation A is represented by Mg (A2) and the trivalent cation B is represented by $Fe^{3+}$ (B1) and $Al^{3+}$, giving a chemical formula of $MgFeAlO_4$.

### Comparative Example 4 - $MgFeGaO_4$ (1 h aged)

In the **$MgFeGaO_4$** structure of Comparative Example 4, $Fe^{3+}$ (B1) of the precursor material of Example 1 is replaced by $Ga^{3+}$ as described in non-patent document ChemCatChem 2017, 9, 659-671. In addition, the LDH ageing step was carried out for only 1 hour.

The synthesis of $[(Mg^{2+})_{0.333}(Fe^{2+})_{0.333}(Ga^{3+})_{0.333}(OH)_2]^{0.333+}[(CO_3)_{0.333}]^{0.333-}$ intermediate LDH structure was performed via co-precipitation in an automated OptiMax synthesis workstation by Mettler Toledo. The set-up includes a single-walled glass reactor fixed inside a jacket acting as thermostat for accurate temperature control and an InLab Semi-Micro-L electrode for pH control. For the co-precipitation two different aqueous solutions were used: One acidic solution, which contains three equal concentrations of $Mg^{2+}$, $Ga^{3+}$ and $Fe^{2+}$ (0.266 mol/L) resulting in a 1:1:1 ratio (total $M^{x+}$ concentration: 0.8 mol/L) and one basic solution with NaOH (0.6 mol/L) and $Na_2CO_3$ (0.09 mol/L).

The ratio of $M^{2+}$:$M^{3+}$ (2:1) was adjusted to the desired composition of the LDH, always maintaining a cation ratio that can be transformed after calcination in air into a $M^{2+}$:$M^{3+}$ ratio of 1:2 to generate spinel structures. Both solutions were added to the reactor under stirring (300 rpm) and at a constant temperature of 50 °C by two ProMinent gamma/L dosing pumps. While the dosing rate of the acidic solution was kept constant at 2.16 g/min, the dosing rate of the basic solution was adjusted by an automatic control system to keep the pH of the reaction volume constant at 10.5.

After dosing the metal salt solution over a period of 1 h, the resulting suspension was aged under constant stirring at 50 °C, but without pH control, for 1 h. Afterwards the precipitated product was separated by centrifugation (4000 rpm, 3 min) and washed with demineralized water until the conductivity of the washing water stayed constant in three consecutive measurements. The obtained powder was dried at 80 °C for 48 h and the LDH structure was confirmed by P-XRD (see K.F. Ortega, D. Rein, C. Lettmann, J. Heese, F. Ozcan, M. Heidelmann, J. Folke, K. Kähler, R. Schlögl, M. Behrens, ChemCatChem, 9 (2017) 659-671).

To transform the intermediate LDH phase into a spinel structure having chemical formula (1) $MgFeGaO_4$, the sample was calcined in air in a muffle furnace at 600 °C (heating rate: 2 K/min) for 3 h. The spinel structure was confirmed by P-XRD (see K.F. Ortega, D. Rein, C. Lettmann, J. Heese, F. Ozcan, M. Heidelmann, J. Folke, K. Kähler, R. Schlögl, M. Behrens, ChemCatChem, 9 (2017) 659-671). In the spinel structure of Comparative Example 4, the divalent cation A is represented by Mg (A2) and the trivalent cation B is represented by $Fe^{3+}$ (B1) and $Ga^{3+}$. Chemical formula of $MgFeGaO_4$ was obtained.

### Comparative Example 5 (Industrial catalyst)

For comparison, a state-of-the-art multipromoted $Fe_3O_4$-based industrial catalyst obtained by reducing a melted precursor having a $MgFe_2O_4$ spinel structure was used.

## Catalytic testing

### Setup

The ammonia synthesis tests were conducted in a modified commercial ammonia synthesis catalyst test rig purchased from ILS (Integrated Lab Solutions GmbH) equipped with a guard reactor and a synthesis reactor. For quantitative product gas analysis an online infrared (IR) detector for $NH_3$ and $H_2O$ (Emerson X-Stream Enhanced IR Gas Analyzer) was used. This setup allows the testing of catalyst materials for ammonia synthesis in a continuous operation mode with sample masses of a few gram at high temperatures and pressures up to 500 °C and 90 bar. The molar flow of the feed gas can be adjusted in a broad range allowing a broad variability of the space velocity (Chem. Ing. Tech. 2020, 92, 1567-1573).

All components of the setup are connected with all-stainless-steel tubing. The feed gas mixture of the setup can be individually regulated by mass flow controllers (MFCs) at the inlets. Besides the reactants (hydrogen and nitrogen), it is also possible to add argon to the feed gas mixture as an inert compound. All gases are introduced in high purity (99.999 %) and are further purified from oxygen species and water in the sub-ppm range with OXISORB® oxygen scrubber cartridges for each gas line to values of <0.1 ppm $O_2$ and <0.5 ppm $H_2O$. The high pressure that is necessary for the catalytic measurements is built up by a reciprocating compressor with buffer volume elements before and behind the compressor to absorb the pressure pulses caused by its unsteady operation mode and to guarantee a constant gas flow for the following reactors. Behind the compressor and volume elements an additional MFC adjusts the total feed gas flow rate to the reactors. As this MFC has to adjust different possible gas compositions a mini CORI FLOW™ MFC (Bronkhorst GmbH) is applied, which allows setting a mass flow independent from the composition of the feed gas (Chem. Ing. Tech. 2020, 92, 1567-1573).

Before the feed gas enters the synthesis reactor, residual oxygenates and other catalyst poisons in the feed gas are removed by means of a guard reactor filled with ca. 150 g of a reduced magnetite-based industrial Fe catalyst. Its temperature is kept at 40 °C during measurement to ensure no ammonia formation is taking place. The guard reactor is regenerated by re-reducing the industrial catalyst before every catalytic measurement by heating it in a constant gas flow of 75% $H_2$, 25% $N_2$ with 1 K/min up to 450 °C and keeping the temperature constant until the water signal at the reactor outlet is constant to ensure that no oxygenate species break through the guard reactor during the measurement.

### Reduction of the precursor materials

Prior to catalytic testing, the precursor materials according to Examples 1-4 and Comparative examples 1-4 have to be reduced. For this purpose, 1g of the respective precursor material was diluted with 1g SiC. The used fraction had an average particle diameter of 250 - 425 $\mu$m (obtained by using two sieves with these mesh sizes). The SiC had an average particle diameter of 154 $\mu$m. The catalyst bed was placed in the synthesis reactor between pure SiC and held in position by glass wool plugs in the isothermal zone of the reactor. After intensive purging of the reactor until the water content was stable at almost zero, the precursor material was reduced by heating it in a gas flow of 440 NmL/min (75% $H_2$, 25% $N_2$ with 1 K/min up to 500 °C). Afterwards, the conditions were kept constant for at least 64 h. Pressure was not elevated. However, due to pressure drop in the system, the resulting pressure in the reactor was in the range of 3-4 bar.

### Catalytic testing

For catalytic testing the pressure was increased up to 90 bar while maintaining the temperature at 500 °C. During this step, the total flow was also raised up to 2500 NmL/min to accelerate the pressure increase. After reaching 90 bar, the total flow was adjusted to 200 NmL/min (75% $H_2$, 25% $N_2$), keeping the temperature constant for 24 h. Reaction temperatures were varied between 325 and 475 °C in 25 °C steps. Cooling and heating rates between adjacent steps were set to 1 K/min. A downward temperature program was followed by an upward temperature variation. All values were kept constant for at least 155 min for each temperature step.

For the partial pressure variation, the total pressure was kept at 90 bar and the total flow rate was increased to 300 NmL/min. The gas composition of the feed gas was altered for $H_2$ partial pressure variation from 80% $H_2$, 20% $N_2$ to 20% $H_2$, 20% $N_2$, 60% Ar by reducing stepwise the $H_2$ content by 10% and compensating with Ar covering a $H_2$:$N_2$ ratio range of from 4:1 to 1:1. In a similar way the $N_2$ partial pressure was varied by using the following three compositions covering a $H_2$:$N_2$ ratio range of from 4:1 to 2:1: 60% $H_2$, 15% $N_2$, 25% Ar / 60% $H_2$, 20% $N_2$, 20% Ar / 60% $H_2$, 30% $N_2$, 10% Ar. The activity with these gas compositions was tested at 325, 375 and 425 °C. 275, 325 and 375 °C was used for the industrial catalyst: this is because the industrial catalyst is much more active than the comparative examples, so it would have had at the same temperatures a far higher conversion. This would make the kinetic data of the industrial catalyst not comparable to the comparative examples. Therefore, the temperature for the industrial catalyst has been

lowered to lower the conversion into a similar range as for the comparative examples.

## Results and discussion

### Influence of ageing time on phase purity of precursor material

While Comparative Example 1 shows a small but clearly visible by-phase of hematite in the precursor and decreased reflection intensities, Example 1 exhibits no detectable by-phases (Fig. 4). This indicates that the ageing time forming the intermediate LDH structure strongly influences the resulting iron-containing phases in the precursor. Accordingly, the phase purity of the precursor can be determined by the ageing time before preparing the precursor material from the intermediate.

### Influence of the phase purity on the reduction of the precursors

The presence of a by-phase in the precursors in turn influences their reduction behaviour, which shows two main reduction peaks for water formation (Fig. 9) corresponding to reduction steps shown in formulae (4) and (5) illustrated above. While the maximum of the first reduction peak exhibits a similar position at about 330 °C for both precursors, the maximum of the second reduction peak is shifted from about 420 °C for Comparative Example 1 to about 490 °C for Example 1. As an aside, we note that the minor water peaks at the beginning of the reduction at about 100 °C are very likely only caused by adsorbed water on the surfaces of the samples and inert filling material (SiC, glass wool).

The two reduction peaks of the precursor material of Comparative Example 1 overlap to a greater degree than those of Example 1 and the second reduction peak is shifted to lower temperatures. Without wishing to be bound by theory, it is speculated that this is because the reduction of the hematite phase in Comparative Example 1 proceeds at the same time and contributes to the reduction peaks, but the reduction of the main $MgFe_2O_4$ phase of the precursor material spinel structure is still the dominant reaction.

For a theoretical full reaction of the consecutive reduction pathway a peak ratio of 1:2 would be expected, but the obtained ratios for both samples are more in the range of 1:1. Again, without wishing to be bound by theory, it may be that that the samples are not fully reduced as with decreasing Fe-amount in the Fe-Mg phase the reduction gets more difficult because MgO cannot be reduced under the applied reduction conditions.

The discussed stepwise reduction process is supported by considering the onset of the ammonia formation under the reaction conditions, also shown in Fig. 9. The ammonia formation for both samples starts shortly after the beginning of the second reduction peak where the first $\alpha$-iron is formed. Afterwards, it increases rapidly with the progressing reduction. Although the catalytically active material already shows a clear activity in ammonia synthesis at the end of the reduction process (which as explained above was carried out at 3 - 4 bar), this is further enhanced by increasing the pressure to 90 bar while maintaining the temperature at 500 °C for catalytic testing. This improvement in ammonia synthesis under the catalytic testing conditions is shown in Fig. 10: the effluent mole fraction of ammonia is much higher at 500°C.

When compared with Comparative Example 5, a highly optimized industrial catalyst, the $MgFe_2O_4$-derived samples according to Comparative Example 1 and Example 1 exhibit a lower activity. This can be taken from Fig. 10. However, it must be remembered that Comparative Example 5 contains many different promoters: typically, close to a dozen. It is remarkable that the catalysts based on Example 1 and containing only one promoter (Mg) already reach a significant activity. We also note that at higher temperatures, the equilibrium reaction will also start to have an impact on the results.

### Influence of the phase purity on the catalytic activity

When comparing Example 1 and Comparative Example 1, the enhanced phase purity of the precursor of Example 1 significantly improves the activity of the resulting catalyst. The reaction rate of Example 1 ($r_{425\,°C}$ = 4.8 $\mu mol_{NH3}/g_{cat}s$) is twice as high as for Comparative Example 1 ($r_{425°C}$ = 2.4 $\mu mol_{NH3}/g_{cat}s$). Without wishing to be bound by theory, it is postulated that the hematite by-phase of Comparative Example 1 is reduced via a different mechanism than the $MgFe_2O_4$ main phase leading to the formation and growth of $\alpha$-iron particles with a less active surface morphology and/or a lower surface area by forming larger particles. While both catalysts comprise some of the same material, it is postulated that the impure precursor "wastes" a larger part of the iron as the inactive form with the result that the catalyst resulting from Comparative Example 1 is less active than the phase pure catalyst derived from Example 1. Despite their differences in the catalytic activity, a very similar apparent activation energy of 76-77 kJ/mol was determined for both $MgFe_2O_4$-derived catalysts of Example 1 and Comparative Example 1 (Fig. 11) indicating similar reaction kinetics.

**Influence of the ageing time on the catalytically active material**

X-ray diffraction reveals two phases in Example 1 and Comparative Example 1 after reduction and catalytic testing: α-iron and $Mg_{0.6}Fe_{0.4}O$ (Fig. 12). The residual high iron content in the (Mg,Fe)O phase is consistent with the peak ratios of about 1:1 during the reduction and confirms that not all Fe(II) was completely reduced in the second reduction step shown in formula (5) above. On a macroscopic scale, the precursors and catalysts consist of mesoporous (Fig. 13) grains with a relatively high surface area, as shown in Fig. 14. Such a high surface area may be obtained by preparing the precursor by heating instead of melting the intermediate in line with the industrial fusion process. A longer ageing time for the $MgFe_2O_4$ precursors, e.g. according to Example 1, also increases the surface area of the precursor and catalytically active material. Without wishing to be bound by theory, this may be attributed to the higher phase purity of the precursor material and suggests that the hematite by-phase in the precursor in Comparative Example 1 leads to larger nanoparticles than the phase pure $MgFe_2O_4$ structure of Example 1 and/or blocks parts of the mesoporous network.

As shown in Fig. 14, although the phase composition and nanostructure of the model catalysts is completely changed during reduction, the surface area of the spent catalyst is only slightly lower. This is in strong contrast to Comparative Example 5, where the precursor melted at high temperature has basically no surface area and the catalyst surface area is formed during the reduction with the development of the " ammonia iron" nanostructure. Comparative Example 5 has a significantly lower surface area than the model catalysts derived from Comparative Example 1 or Example 1. Without wishing to be bound by theory, it is likely that Comparative Example 5 achieves high activity despite the lower surface area because it has a higher density of active sites or different sites which are more active. It is postulated that this may be caused by the many different promoters present in Comparative Example 5, in contrast to Comparative Example 1 or Example 1 containing only Mg as a promoter.

A Rietveld fit of the diffraction patterns of the catalysts after ammonia synthesis determines the average size of the crystalline domains for the different phases to be on the order of magnitude of a few nanometers (Table 2). The domains of the $Mg_{0.6}Fe_{0.4}O$ phase are with 6-8 nm smaller than the domains of the α-iron with 16-21 nm. The ageing time of the precursor has an influence on the size of these domains: the average size of the crystalline domains is smaller for Example 1.

**Table 2:** Volume weighted mean column length ($L_{VOL}$-IB) and phase composition of the $MgFe_2O_4$-derived catalysts after ammonia synthesis.

| **Sample** | **$L_{VOL}$-IB [nm]** | | **Composition [wt-%]** | |
|---|---|---|---|---|
| | **α-Fe** | **$Mg_{0.6}Fe_{0.4}O$** | **α-Fe** | **$Mg_{0.6}Fe_{0.4}O$** |
| Comparative Example 1 ($MgFe_2O_4$ 1 h) | 21 | 8 | 48 | 52 |
| Example 1 ($MgFe_2O_4$ 24 h) | 16 | 6 | 47 | 53 |

Electron microscopy confirms that both catalysts, Comparative Example 1 (Fig. 15) as well as Example 1 (Fig. 16) consist of agglomerates of nanoparticles with sizes in the range of a few nm. Consistent with the P-XRD results, EDX mapping reveals two different phases of nanoparticles: one which contains mostly Fe and another which contains mostly Mg and O. The particles of the two phases are homogeneously mixed with the Fe nanoparticles separated and surrounded by smaller $Mg_{1-x}Fe_xO$ nanoparticles as spacer oxide.

Accordingly, a nanostructure quite similar to the structure of the industrial catalyst (Comparative Example 5) can be achieved with the catalysts of Example 1 and Comparative Example 1. The industrial catalyst is described as stacks of iron nanoparticles in the size of about 10 nm, separated by structural promoters in the form of oxides on the surface of the iron and spacer oxides between the iron nanoparticles (M. Appl, Ammonia, 2. Production, Ullmann's Encyclopedia of Industrial Chemistry, 2012). A critical factor is the shape of the iron nanoparticles, since the reaction is highly structural sensitive. Irregular shaped and platelet-like nanoparticles lead to a higher activity as these shapes allow for "rougher", thermodynamically unfavored Fe surface orientations such as Fe(111) and more steps and kinks on the Fe surface. Without wishing to be bound by theory, it is postulated that such surfaces are delivered by the reduction of the $MgFe_2O_4$ precursor phase in Example 1. In contrast, ideal cubic particle shapes lead to very "smooth" surface orientations like Fe (100) and, therefore, to poor activity, and it is postulated that such surfaces may be obtained from the reduction of the hematite by-phase of the precursor material of Comparative Example 1.

**Influence of promotion**

First promoter loading tests according to Comparative Example 2 show that a Promoter cation impregnation with K in the LDH phase during the catalyst precursor synthesis has a higher effect on activity than an impregnation in

the spinel phase (Fig. 7). Without wishing to be bound to any theory this may be caused by a more homogeneous distribution of the Promoter cation K in the LDH phase, since the LDH interlayers are filled with anions and crystal water, which allows a further diffusion and distribution of the K ions within the LDH structure. Based on these results, all further K promoted samples were impregnated with $KHCO_3$ in the LDH phase and a series of various K-loadings was investigated for the precursor materials according to Example 2. The nominal K-loading for these samples ranges from 0.5 to 10wt-%. XRF elemental analysis confirms that loadings close to the intended values are achieved (Table 1).

As shown in Fig. 18, the K-promotion in Example 2 improves the overall activity for all model catalysts compared to the K-free sample according to Example 1, even at a quite high nominal K-loading of about 10wt-%. However, the largest impact on the activity is achieved at a quite low K-amount of only about 0.5 wt-%. After this maximum the improvement in the catalytic activity decreases with increasing K-loading. Without wishing to be bound by theory, it is postulated that further promoting effects caused by higher loadings with Promoter cation K are compensated by one or more negative effects. For example, the decreasing activity at high K-loadings could be caused by a blocking of the active Fe surface by K. Further characterization showed that the K promotion also has an influence on other properties of the model catalyst.

For instance, the K leads to a decrease of the catalyst surface area with increasing K-amount (Fig. 19). Already the surface area of the precursor is decreased with increasing K-loading and the effect is even higher after reduction and catalytic testing. At a very high nominal loading of about 10 wt-%, the surface area is even lower than the surface area of Comparative Example 5 (Fig. 13). Without wishing to be bound by theory, it is postulated that this may be partly caused by a blocking of the mesoporous network of the catalysts. While the precursors of the K-series still show a similar pore volume (Fig. 20) and pore size distribution (Fig. 21) for all samples, a decrease of the mesoporous pore volume can be observed for the reduced and tested catalysts with increasing K-loading until there is almost no detectable mesoporosity (Fig. 22) and pore volume (Fig. 20).

At the same time, K promotion leads to a significant increase of the average size of the crystalline domains of the $\alpha$-iron phase obtained by a Rietveld fit of the diffraction patterns (Fig. 23), while the average size of the $Mg_{1-x}Fe_xO$ crystalline domains does not change to the same extent (Fig. 24, Table 2). Without wishing to be bound to any theory, this may be due to an increasing size of the iron nanoparticles themselves. With a nominal K-amount of about 10 wt-%, the size of the crystalline domains of $\alpha$-iron is more than 5 times larger than that of the K-free sample according to Example 1. Larger iron nanoparticles lead to less available iron surface area and thus to less total catalyst surface.

**Table 3:** Volume weighted mean column length ($L_{VOL}$-IB) and phase composition of $MgFe_2O_4$-derived catalysts promoted according to Example 2 with different amounts of K after ammonia synthesis.

| **Sample** | **$L_{VOL}$-IB [nm]** | | **Composition [wt-%]** | |
|---|---|---|---|---|
| | **$\alpha$-Fe** | **$Mg_{1-x}Fe_xO$** | **$\alpha$-Fe** | **$Mg_{1-x}Fe_xO$** |
| Example 1 | 16 | 6 | 47 | 53 |
| Example 2 (0.5%K) | 21 | 9 | 47 | 53 |
| Example 2 (1%K) | 41 | 8 | 39 | 61 |
| Example 2 (2%K) | 63 | 9 | 46 | 54 |
| Example 2 (10%K) | 82 | 12 | 59 | 41 |

The loss of mesoporosity and the increasing size of the iron nanoparticles could be related to each other. Without wishing to be bound to any theory, a larger growth of the iron nanoparticles could potentially shrink and/or block the mesoporous network. However, since Example 2 (0.5%K) already has a much smaller pore volume than the K-free sample of Example 1 (Fig. 20), while the size of the $\alpha$-iron crystalline domains is similar for both samples, the increasing size of the iron nanoparticles may not be the main reason for the loss of mesoporosity. It is possible that the K itself blocks the mesoporous network. It can be seen that K affects several catalyst properties and high K-loading has a negative effect on the nanostructure of the model catalyst. The K leads to a larger growth or sintering of the iron nanoparticles during the reduction of the catalyst and blocks the catalyst's mesoporous network. This may explain why the improvement in activity with K decreases as the loading of K increases.

Nevertheless, the improvement with small amounts of K is quite significant without a strong development of the negative effects of the K-loading. A promotion with 0.5 wt-% K via wet-impregnation in the LDH phase allows a homogeneous introduction of the K into the nanostructure of the resulting $MgFe_2O_4$-derived catalyst (Fig. 25). In contrast to the industrially applied preparation by a fusion process, a similar homogeneous distribution of the promoter K can also be observed for higher K-loadings by wet-impregnation of the magnesioferrites. This is exemplarily shown for the catalyst according to Example 2 (10%K) (Fig. 26). A homogeneous and thus phase pure distribution of the Promoter cation K according to the present invention is also indicated by P-XRD. In Fig. 23, no separate K-containing phase can be detected among the present inventions catalysts, even with the highest loading in Example 2 (10%K).

Promotion with 0.5 wt-% K leads to a remarkable ammonia synthesis activity for the invention (Fig. 27). With only two promoters it already exhibits about 70% of the activity of Comparative Example 5, the industrial catalyst at 425 °C (Fig. 27). When the model system and the industrial catalyst are normalized to their individual iron contents, the reaction rate of the K-promoted model system becomes quite comparable to the industrial system (Fig. 28). These results show that even the simple catalytic system having just two promoters has good activity compared to the highly complex and optimized industrial catalyst, even if the iron mass does not necessarily scale in the same way with the active iron surface area for both samples, meaning that a more significant difference could be present for the two systems. In any case, the curve progression of the activity changes with temperature for the K-promoted sample is quite similar to that of the industrial catalyst. On the one hand, this shows that the overall activity of Example 2 (0.5%K) is strongly increased and reaches a point where it is more influenced by the thermodynamic limitations under the applied test conditions. On the other hand, and without wishing to be bound by theory it may also indicate that the kinetics and active sites of the K-promoted model system are generally comparable to those of Comparative Example 5.

This shows that the catalysts derived from the present precursor material can be used as a simple model system to obtain a catalytically active material for ammonia synthesis which delivers similar activity to the current industrial catalyst that has been optimized for over a century and contains close to a dozen promoters. Moreover, this shows that it is possible to use this system for generating the active sites of the industrial catalyst without relying on the high temperature fusion process for the precursor synthesis. The synthesis via the LDH phase allows several further elements to be homogenously incorporated as promoters in various amounts, leading to a new generation of iron-based ammonia synthesis catalysts.

In the precursor material of Example 3 wherein parts of the $Fe^{3+}$ in the magnesioferrites are replaced by $Co^{3+}$, it was confirmed by various characterizations subsequent to the reduction step that cobalt and iron form an $Fe^0$-$Co^0$ alloy with a stoichiometry matching the precursor and that no separate $\alpha$-Fe or $\alpha$-Co phase exists. This ensures that cobalt and iron work together in the catalyst. The highest activity was obtained for $MgFeCoO_4$, the precursor according to Example 3 with the highest amount of Co. A comparison of the catalytic activity at 90 bar between Example 1 and $MgFeCoO_4$ of Example 3 is shown in Fig. 29. Co has a visible influence on activity when compared to Example 1 without Co. At low temperatures, a lower activity is observed with Co, whereas at 500 °C it is slightly increased. In this regard, it is important to take into account that the active iron surface area of $MgFeCoO_4$ according to Example 3 is lower than that of Example 1. Thus, $MgFeCoO_4$ according to Example 3 would be more active than Example 1. However, it cannot be verified to what extent Co itself contributes active centers to the overall catalytic activity. In addition, Co and Fe form a homogeneous alloy, which is why the surface of the iron cannot be considered separately.

Furthermore, as can be seen in Fig. 30, the overall activity of $MgFeCoO_4$ according to Example 3 can be improved significantly, particularly at high temperatures, by the addition of 0.5 wt-% K as a further promoter, according to Example 4 (0.5%K). At 450 °C and 475 °C, the activity of Example 4 (0.5%K) even exceeds that of the multi-promoted and highly optimized industrial catalyst of Comparative Example 5.

When comparing the Examples 4 (0.5%K) and 2 (0.5%K), e.g. the K-promoted samples with and without Co, a similar effect can be observed as for Examples 1 and 3, the corresponding samples without K (see Fig. 31). At low temperatures, the Co sample according to Example 4 (0.5%K) shows a decreased activity compared to the Co-free sample of Example 2 (0.5%K), which is evident for the K-promoted samples at 325-400 °C. Example 4 (0.5%K) goes on to show a much higher activity than Example 2 (0.5%K) at 400-500 °C.

It appears that cobalt has a strong high temperature effect on the catalytic activity. Since industrial ammonia synthesis is carried out at 400-500 °C, this effect is in the range of interest for industrial applications. Overall, the catalysts obtained by reducing the precursor material of the present invention already achieve significant activities with only two additional Promoter cations (Mg, K) already exceeding that with current state of the art catalyst technology. This is despite the fact that the current industrial catalyst has been optimized for over a century (Haber-Bosch process) and contains close to a dozen promoters. With the addition of further promoters, further improvement of the catalytically active materials of the invention is expected.

**Determination of reaction orders for hydrogen and nitrogen**

Reaction orders for hydrogen and nitrogen were determined for Comparative Examples 1, 2 and 5 via partial pressure variation (Fig. 32-39) following a simple power law rate approach. By alternating the temperature, the reaction order was determined at different conversion ranges and a changing of the reaction orders was observed with increasing conversion. The determined reaction orders for the different catalyst materials are compared at a similar conversion range (Fig. 40 and 41). As expected from theoretical calculations (Physica Scripta 1987, 36, 824-864), the reaction order for hydrogen increases from negative to positive values with increasing conversion (Fig. 40). Correspondingly, the hydrogen partial pressure has an inhibiting effect on the reaction at low conversions, while at higher conversions an increasing hydrogen content in the synthesis gas supports the ammonia synthesis reaction. At the same time, the reaction order of nitrogen decreases with increasing conversion, but stayed positive (Fig. 41). A comparison among the catalysts

shows that the reaction order of hydrogen generally decreases with more active catalyst materials at the same level of conversion, while the reaction order of nitrogen increases with increasing activity of the catalyst material. This indicates that surface inhibition by high hydrogen concentrations has a stronger impact on more active sites, where the presence of adsorbed nitrogen becomes more important and rate-determining for the reaction.

Although the determined reaction orders differ to some extent from those for the industrial catalyst applied in this study as well as from those determined in the state of the art for the KM1 industrial catalyst via a hydrogen partial pressure variation (Journal of Catalysis 1999, 188, 83-89), the observed general trend is very promising for a future catalyst development. This is particularly true, since it has been shown above that the activity of a catalyst can be further improved when they are obtained from phase pure precursor materials according to the present invention. Considering that the model catalysts contain only two promoters with Mg and K, while the industrial catalysts are multi-promoted with about a dozen promoters, an approximation to the industrial catalysts can be assumed with increasing degree of promotion even for catalysts according to present comparative examples.

**Ammonia decomposition**

The catalytically active material, obtainable by reducing a precursor material of the present invention is active not only in ammonia synthesis, but also in the ammonia decomposition reaction. In non-patent document ChemCatChem 2017, 9, 659-671, a catalyst derived from Comparative Example 1 was tested in ammonia synthesis at 90 bar and ammonia decomposition at atmospheric pressure together with two further catalysts derived from Comparative Examples 3 and 4. The activities of the three different samples were compared for ammonia synthesis and ammonia decomposition to the same magnetite-based industrial ammonia synthesis catalyst as used in present Comparative Example 5. Also used in the comparison were example 1 and example 2 (0.5%). The six catalysts were employed in ammonia decomposition at 1 bar and with nitrogen at 90 bar at three different temperatures of 400, 425 and 450 °C.

All samples were found to be active in ammonia decomposition and ammonia synthesis, but showed varying trends depending on the reaction (see Fig. 42). For the ammonia decomposition, the catalytic activity of the different materials follows an order of $MgFeGaO_4$ > industrial catalyst > $MgFe_2O_4$ (24h, $MgFe_2O_4$(0.5% K) (24h) >> $MgFe_2O_4$ (1h) > $MgFeAlO_4$. For the ammonia synthesis reaction, however, a different trend is observed under these particular conditions with the following order of the catalytic activity: industrial catalyst > $MgFe_2O_4$(0.5% K) (24h) > $MgFe_2O_4$ (24h) > $MgFe_2O_4$ (1h) >> $MgFeAlO_4$ > $MgFeGaO_4$. These strong differences in catalytic activity between synthesis and decomposition for the catalyst samples become clearly visible when comparing the conversion of both reactions at the same temperatures (Fig. 42). For this comparison only a narrow temperature range of 400-450 °C could be chosen, since under the applied reaction conditions some of the samples show no detectable activity in ammonia decomposition at temperatures below 400 °C, while the ammonia synthesis activity of other samples is fully thermodynamically limited at temperatures above 450 °C.

For each sample, the conversions follow an exponential trend at the three considered temperatures of 400, 425 and 450 °C. This is due to the fact that the ammonia decomposition reaction is endothermic while the ammonia synthesis reaction is exothermic, so that the same increase in temperature results in a much higher increase in conversion for ammonia decomposition than for ammonia synthesis.

The catalytic performance is strongly determined by promotion. The catalyst of Comparative Example 4 exhibits a far better performance in ammonia decomposition than in ammonia synthesis. Therefore, Ga is a very good promoter for ammonia decomposition, but has a strongly negative effect on ammonia synthesis. The catalysts derived from Example 1 and Comparative Example 1 exhibit some activity in both reactions, without any clear preference for one of the reactions. The activity of Example 1 can be seen as an elongation of the curve of Comparative Example 1. Without wishing to be bound by theory, this might indicate that both samples have the same active sites and differ only in their number. This is in agreement with the findings discussed above that Example 1 and Comparative Example 1 have similar overall composition and structure, but due to the hematite by-phase in the precursor material of Comparative Example 1, parts of the sample have been reduced to inactive $\alpha$-Fe forms, resulting in fewer active centers compared to Example 1.

With K promotion in Example 2, the catalytic activity is strongly shifted towards improved ammonia synthesis, but without a significant loss of the ammonia decomposition activity. This demonstrates the promoting abilities of K for the ammonia synthesis reaction, while the ammonia decomposition reaction is not affected but also not inhibited. A similar effect can also be observed for Comparative Example 5 containing many promoters, which shifts even further towards ammonia synthesis than Example 2 (0.5%K).

The different behaviour of most of the catalysts cannot be explained only by a varying number of active sites on the catalysts. In such a case, one would expect a visible relationship between the trends, as seen for the catalysts according to Example 1 and Comparative Example 1. Therefore, and without wishing to be bound by theory, it is postulated that the catalysts may also differ in the quality of their active sites. While the catalyst derived from Example 1 and Comparative Example 1 provides active iron that performs in both reactions without a major promotion, the presence of Ga or K modifies their active centers and shifts the performance of the catalyst either towards ammonia synthesis or

the ammonia decomposition.

The optimization towards one of the two reactions is in good agreement with the state of the art (Journal of Catalysis 2005, 230, 309-312), wherein it is stated that an optimal ammonia decomposition catalyst is never an optimal ammonia synthesis catalyst and vice versa. However, in that study, a microscopic reversibility is assumed for both reactions with the same active centers. This is not necessarily the case as the optimization of the sample does not work in identical ways. While the catalyst gains a strongly increased ammonia decomposition activity with the Ga promotion, it almost completely loses its ammonia synthesis activity. This is in agreement with the statement that an optimization towards one reaction is detrimental for the other. With its almost complete inactivity in ammonia synthesis, a change in the active sites can be assumed for the $MgFeGaO_4$-derived catalyst to deliver active centers which are inactive in the ammonia synthesis reaction.

On the other hand, the K addition improves the ammonia synthesis activity without any significant influence on the ammonia decomposition activity. This is surprising and indicates independent active sites for both reactions, where the ammonia synthesis sites are enhanced by K while the ammonia decomposition sites are unaffected by it.

The present invention provides a catalytically active material for ammonia synthesis that is stable even under high pressure and temperature reaction conditions of the ammonia synthesis and is obtainable by reducing a phase pure spinel structure as a precursor material. The present invention's phase pure precursor material is in turn obtained by heating an intermediate LDH structure. This intermediate is obtained by co-precipitation and subsequent ageing of the co-precipitated product, where it has been found that the phase purity can be altered by the time of ageing. The resulting high phase purity corresponds to a much higher homogeneity of the present precursor material compared to those obtained by the traditional fusion process. The enhanced phase purity leads to an improved activity of the resulting catalyst. The high homogeneity of the precursor material of the present invention in combination with the simple and energetically favorable co-precipitation process of the present invention allows an easy and controllable tuning of the present precursor material's properties by insertion of various promoter amounts and combinations into the catalyst. Moreover, the present invention provides a simple solution for achieving the same ammonia synthesis activity as the multipromoted industrial catalyst while using far fewer promoters. The high activity in combination with the well-defined structure of the present catalyst is also advantageous as it allows detailed studies on the mechanism.

## Claims

**1.** A catalytically active material for ammonia synthesis obtainable by reducing a precursor material;

wherein the precursor material has a phase pure spinel structure of the following chemical formula (1):

$$(AB_2O_4)_a\cdot(\text{Promoter cation})_b(\text{Promoter anion})_c \qquad (1);$$

wherein A is a divalent cation selected from one or more of the following:

A1 Fe, Co, Ru, and/or
A2 ammonia synthesis catalyst promoters selected from one or more transition metals and/or alkaline earth metals;

wherein B is a trivalent cation selected from one or more of the following:

B1 Fe, Co, Ru, and/or
B2 ammonia synthesis catalyst promoters selected from one or more transition metals and/or rare earth metals;

wherein the same or different elements can be selected for A and B with the proviso that in chemical formula (1) the total moles of A1 and B1 as a percentage of the total moles of cations in the precursor material is 5 - 95%, preferably 10 - 90%, more preferably 25 - 80%, most preferably 33 - 67%;
wherein the Promoter cation is selected from one or more ammonia synthesis catalyst promoters;
wherein the Promoter anion is selected from one or more monovalent or divalent anions;
wherein the molar ratio a:b is in the range 1:0 - 1:0.4;
wherein when b is 0, c is also 0,
wherein the molar ratio b:c is selected such that the charges of the Promoter cation and Promoter anion are balanced.

**2.** The catalytically active material of claim 1, wherein in the precursor material:

the transition metals in A2 are one or more selected from Ni, V, Mn, Cr, Ti, Pd, Pt; and/or
the alkaline earth metals in A2 are one or more selected from Mg and Ca; and/or
the transition metals in B2 are one or more selected from Ni, V, Mn, Cr, Ti, Pd, Nb, Mo, Rh; and/or
the rare earth metals in B2 are selected from one or more of La and Ce; and/or
the Promoter cation is selected from one or more alkali metals, alkaline earth metals, transition metals, rare earth metals, main group metals, and main group semiconductors;

wherein the alkali metals preferably comprise K;
wherein the alkaline earth metals preferably comprise Mg and/or Ca;
wherein the transition metals preferably comprise Ni, V, Mn, Cr, Ti, Mo, Rh, Pd, Pt, Sc, Y, Zr, W, Os, Nb, Ta, and/or Re;
wherein the rare earth metals preferably comprise La, Ce, Sm, Eu, Dy, Ho, Er, Yb and/or U,
wherein the main group metals preferably comprise Al and/or Ga, and
wherein the main group semiconductors preferably comprise Si; and/or

the Promoter anion is selected from one or more of oxide, hydroxide, sulfate, halides or organic anions;

wherein the organic anions are preferably formate or oxalate; and/or
wherein the Promoter anion is preferably oxide.

**3.** The catalytically active material of claim 1 or claim 2, wherein in the precursor material:

A comprises Mg, B comprises Fe and/or Co;
the total moles of Co and/or Fe as a percentage of the total moles of cations in the precursor material is 10 - 90%, preferably 25 - 80%, most preferably 33 - 67%;
when present the Promoter cation comprises K;
when present the Promoter anion comprises oxide; and
the molar ratio a:b is 1:0 - 1:0.272, preferably 1:0 - 1:0.052.

**4.** The catalytically active material of claim 1, 2 or 3, wherein the reduction comprises heating the precursor material in the presence of hydrogen.

**5.** The catalytically active material of claim 1, 2, 3 or 4, wherein the material comprises metallic nanoparticles having the following chemical formula (2a) and nanoparticles having the following chemical formula (2b), wherein the nanoparticles having chemical formulae (2a) and (2b) form an agglomerate:

$$(D^*)_a \cdot (\text{Promoter cation})_b (\text{Promoter anion})_c \qquad (2a)$$

wherein D* is selected from one or more of the following elements in a metallic form:

D*1 Fe, Co, Ru, and/or
D*2 ammonia synthesis catalyst promoters selected from one or more transition metals, rare earth metals and/or alkaline earth metals;

wherein the Promoter cation is selected from one or more ammonia synthesis catalyst promoters;
wherein the Promoter anion is selected from one or more monovalent or divalent anions;
wherein the molar ratio a:b is 1:0 - 1:0.4;
wherein when b is 0, c is also 0,
wherein the molar ratio b:c is selected such that the charges on the Promoter cation and Promoter anion are balanced;

$$(D_dO_e)_a \cdot (\text{Promoter cation})_b (\text{Promoter anion})_c \qquad (2b)$$

wherein O is oxide and D is a cation selected from one or more of the following:

D1 Fe, Co, Ru, and/or

D2 ammonia synthesis catalyst promoters selected from one or more transition metals, rare earth metals, and/or alkaline earth metals;

wherein e is 1 and d is selected such that the charges on D and O are balanced;
wherein the Promoter cation and the Promoter anion as well as a, b and c are as defined for chemical formula (2a);
wherein the mass ratio of (nanoparticles having chemical formula (2a)):(nanoparticles having chemical formula (2b)) is in the range of 1:99 - 99:1 wt%,
with the proviso that in the catalytically active material the total moles of D*1 and D1 as a percentage of the total moles of metals in the material is 5 - 95%, preferably 10 - 90%, more preferably 25 - 80%, most preferably 33 - 67%.

**6.** The catalytically active material of claim 5,

wherein the transition metals in D*2 and/or D2 are one or more selected from Ni, V, Mn, Cr, Ti, Pd, Pt, Nb, Mo, Rh; and/or
wherein the alkaline earth metals in D*2 and/or D2 are one or more selected from Mg and Ca; and/or
wherein the rare earth metals in D*2 and/or D2 are selected from one or more of La and Ce; and/or
wherein the Promoter cation and/or the Promoter anion are as defined in claim 2.

**7.** The catalytically active material of claim 5 or claim 6,

wherein D* comprises Fe and/or Co;
wherein D comprises Mg, Fe, and/or Co;
wherein when present the Promoter cation in chemical formulae (2a) and/or (2b) comprises K;
wherein the molar ratio a:b in chemical formulae (2a) and (2b) is independently 1:0 - 1:0.272, preferably 1:0 - 1:0.052;
wherein when present the Promoter anion in chemical formulae (2a) and/or (2b) is oxide;
wherein the mass ratio of (nanoparticles having chemical formula (2a)):(nanoparticles having chemical formula (2b))
is in the range of 40:60 - 60:40 wt%, preferably 45:55 - 55:45 wt%.

**8.** The catalytically active material of claim 1, 2, 3, 4, 5, 6, or 7, wherein the precursor material is obtainable by

3) heating an intermediate to form the precursor material having a phase pure spinel structure; and optionally carrying out step 3a):
3a) contacting the precursor material from step 3) with a solution comprising a Promoter cation and Promoter anion to impregnate the Promoter cation and Promoter anion in the spinel structure;
wherein the intermediate has a layered double hydroxide (LDH) structure, into which the Promoter cation and Promoter anion are optionally impregnated;
wherein the intermediate has the following chemical formula (3):

$$([A_{1-x}B_x(OH)_2]^{x+}[LDH\text{-}Anion_{x/n}]^{x-})_a \cdot mH_2O \cdot (Promoter\ cation)_b(Promoter\ anion)_c \quad (3);$$

wherein A and B are the same as defined for the precursor material in claim 1;
with the proviso that when A includes elements which are not capable of exhibiting the 3+ oxidation state, the ratio (total moles of elements in A which are not capable of exhibiting the 3+ oxidation state):(total moles of elements in A which are capable of exhibiting 3+ oxidation state) is less than or equal to 1:1;
wherein the LDH-Anion is selected from one or more monovalent or divalent anions;
wherein x is 0.2 - 0.33, n is the charge of the anion and m is the amount of crystal water in the LDH and is 1-10;
wherein the a, b, c, the Promoter cation and the Promoter anion are as defined for the precursor material in claim 1.

**9.** The catalytically active material of claim 8, wherein in the intermediate:

the A2, B2, and/or the Promoter cation are as defined for the precursor material in claim 2; and/or
the LDH-Anion is one or more selected from chloride, sulphate, nitrate, carbonate and bicarbonate, and preferably carbonate or bicarbonate; and/or
the Promoter anion is selected from one or more of hydroxide, sulfate, halides or organic anions, wherein the

organic anions are preferably carbonate, bicarbonate, formate or oxalate.

**10.** The catalytically active material of claims 8 or 9, wherein in the intermediate:

A comprises Mg and Fe, B comprises Fe and/or Co;
the total number of moles of Co and/or Fe as a percentage of the total moles of cations in the intermediate is 10 - 90%, preferably 25 - 80%, most preferably 33 - 67%;
the LDH-Anion comprises carbonate;
when present the Promoter cation comprises K;
the molar ratio a:b is 1:0 - 1:0.272, more preferably 1:0 -1:0.052;
when present the Promoter anion comprises carbonate or bicarbonate.

**11.** The catalytically active material of claims 8, 9 or 10, wherein the intermediate is obtainable by the following sequence of steps:

1) a co-precipitation reaction of A, B, and LDH-Anion to deliver a suspension of a co-precipitated product having an LDH structure;
2) ageing the suspension of the co-precipitated product from step 1) to form a LDH structure; and optionally carrying out step 2a):
2a) contacting the aged product from step 2) with a solution comprising the Promoter cation and Promoter anion to impregnate the Promoter cation and Promoter anion defined in claims 8, 9 or 10 in the LDH structure.

**12.** A method of forming the catalytically active material defined in claim 1, 2, 3, 4, 5, 6, 7, 8, 9, 10 or 11, comprising the following sequence of steps:

1) a co-precipitation reaction of A, B, and LDH-Anion to deliver a suspension of a co-precipitated product having an LDH structure, wherein A, B, and LDH-Anion are defined in claims 8, 9 or 10;
2) ageing the suspension of the co-precipitated product from step 1) to form an intermediate having a LDH structure; and optionally carrying out step 2a):
2a) contacting the intermediate from step 2) with a solution comprising the Promoter cation and Promoter anion to impregnate the Promoter cation and Promoter anion defined in claims 8, 9 or 10 in the LDH structure;
3) heating the intermediate obtained in step 2) or step 2a) to form a precursor material having a phase pure spinel structure; and optionally carrying out step 3a):
3a) contacting the precursor material from step 3) with a solution comprising the Promoter cation and Promoter anion to impregnate the Promoter cation and Promoter anion defined in claims 1, 2, or 3 in the spinel structure;
4) reducing the precursor material obtained in step 3) or step 3a) to form the catalytically active material.

**13.** A method of synthesizing ammonia and/or decomposing ammonia using the catalytically active material of claim 1, 2, 3, 4, 5, 6, 7, 8, 9, 10 or 11.

**14.** Use of the catalytically active material of claim 1, 2, 3, 4, 5, 6, 7, 8, 9, 10 or 11 in the synthesis of ammonia and/or the decomposition of ammonia.

**15.** Use of an intermediate as defined in claim 8, 9, 10, or 11 and/or a precursor material as defined in claim 1, 2 or 3 in the preparation of a catalytically active material for ammonia synthesis.

Fig. 1

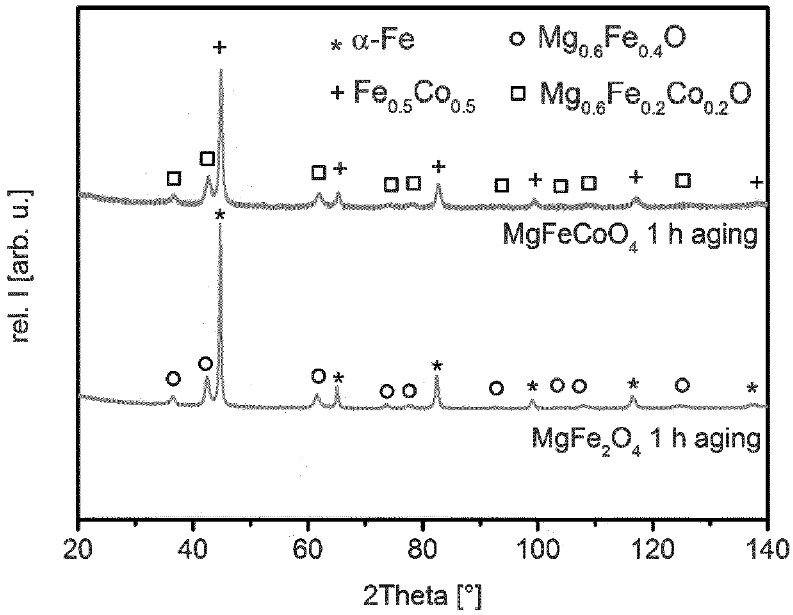
* α-Fe
○ $Mg_{0.6}Fe_{0.4}O$
+ $Fe_{0.5}Co_{0.5}$
□ $Mg_{0.6}Fe_{0.2}Co_{0.2}O$
$MgFeCoO_4$ 1 h aging
$MgFe_2O_4$ 1 h aging
rel. I [arb. u.]
20
40
60
80
100
120
140
2Theta [°]

Fig. 2

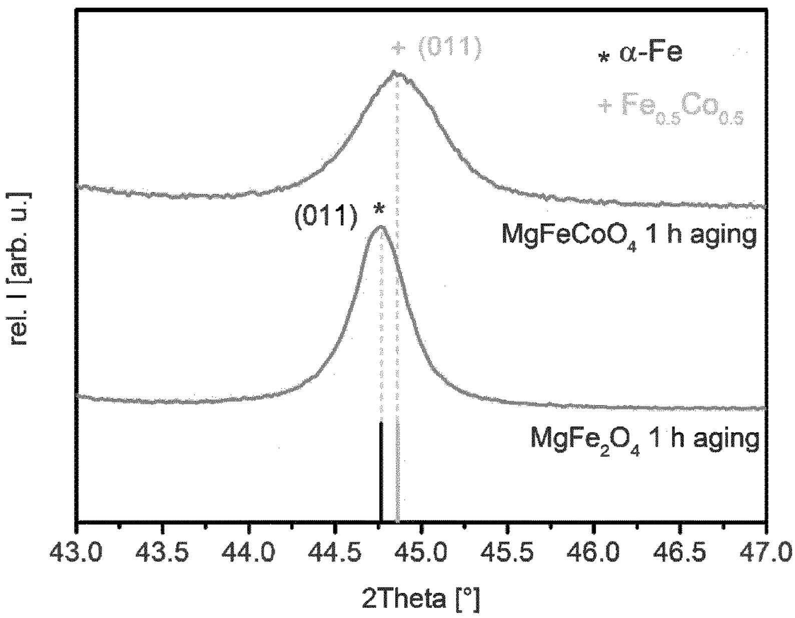
+ (011)
* α-Fe
+ $Fe_{0.5}Co_{0.5}$
(011) *
$MgFeCoO_4$ 1 h aging
$MgFe_2O_4$ 1 h aging
rel. I [arb. u.]
43.0
43.5
44.0
44.5
45.0
45.5
46.0
46.5
47.0
2Theta [°]

Fig. 3

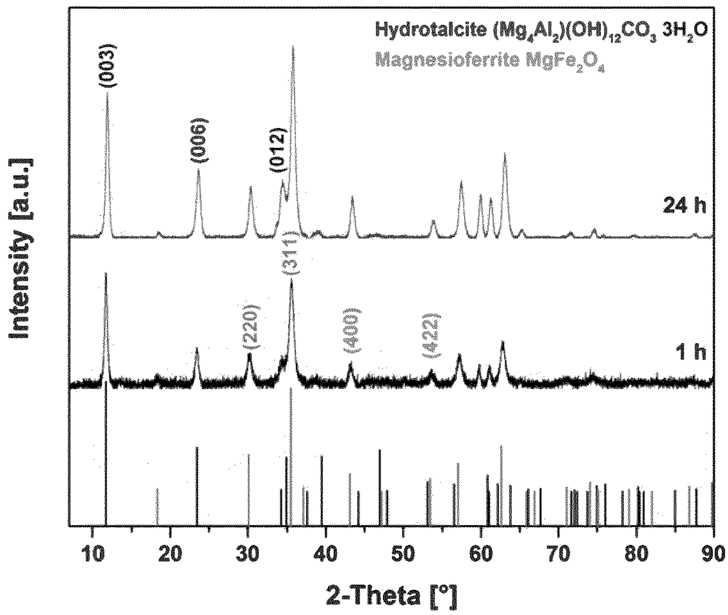
Hydrotalcite (Mg4Al2)(OH)12CO3 3H2O
Magnesioferrite MgFe2O4
(003)
(006)
(012)
(311)
(220)
(400)
(422)
24 h
1 h
Intensity [a.u.]
10 20 30 40 50 60 70 80 90
2-Theta [°]

Fig. 4

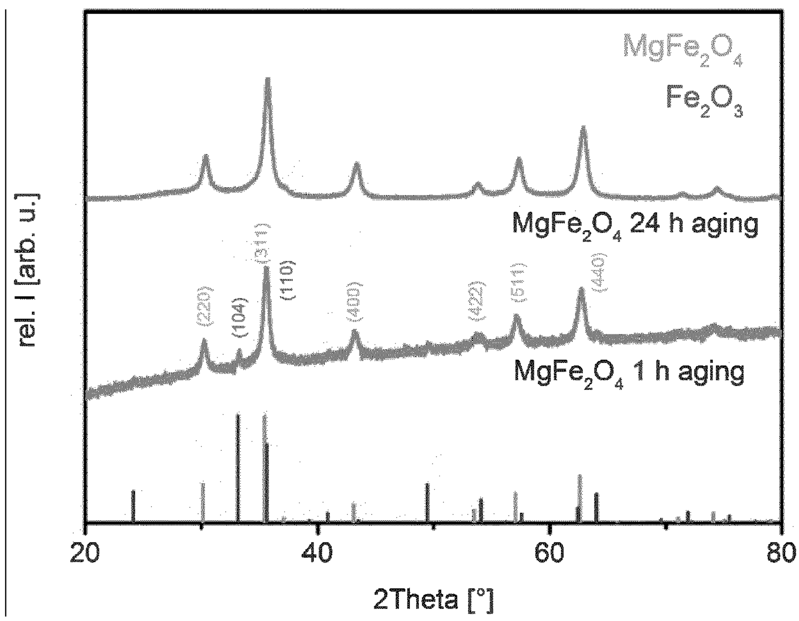
MgFe2O4
Fe2O3
MgFe2O4 24 h aging
(220)
(104)
(311)
(110)
(400)
(422)
(511)
(440)
MgFe2O4 1 h aging
rel. I [arb. u.]
20 40 60 80
2Theta [°]

Fig. 5

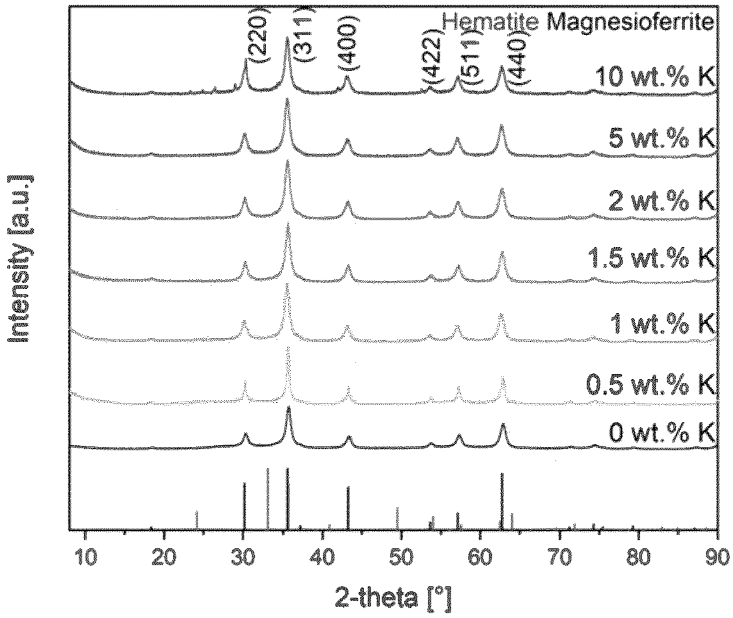
Hematite Magnesioferrite
(220)
(311)
(400)
(422)
(511)
(440)
10 wt.% K
5 wt.% K
2 wt.% K
1.5 wt.% K
1 wt.% K
0.5 wt.% K
0 wt.% K
Intensity [a.u.]
10
20
30
40
50
60
70
80
90
2-theta [°]

Fig. 6

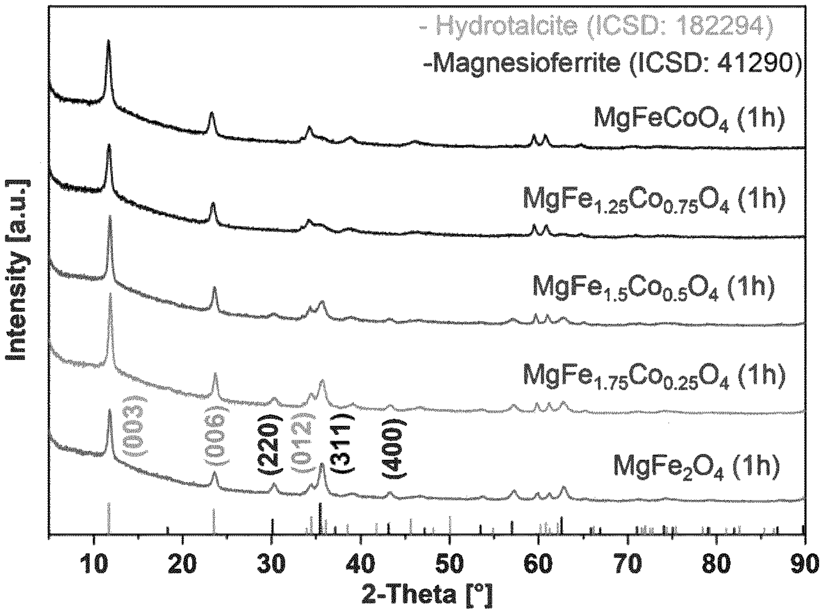
- Hydrotalcite (ICSD: 182294)
-Magnesioferrite (ICSD: 41290)
MgFeCoO4 (1h)
MgFe1.25Co0.75O4 (1h)
MgFe1.5Co0.5O4 (1h)
MgFe1.75Co0.25O4 (1h)
MgFe2O4 (1h)
(003)
(006)
(220)
(012)
(311)
(400)
Intensity [a.u.]
10
20
30
40
50
60
70
80
90
2-Theta [°]

Fig. 7

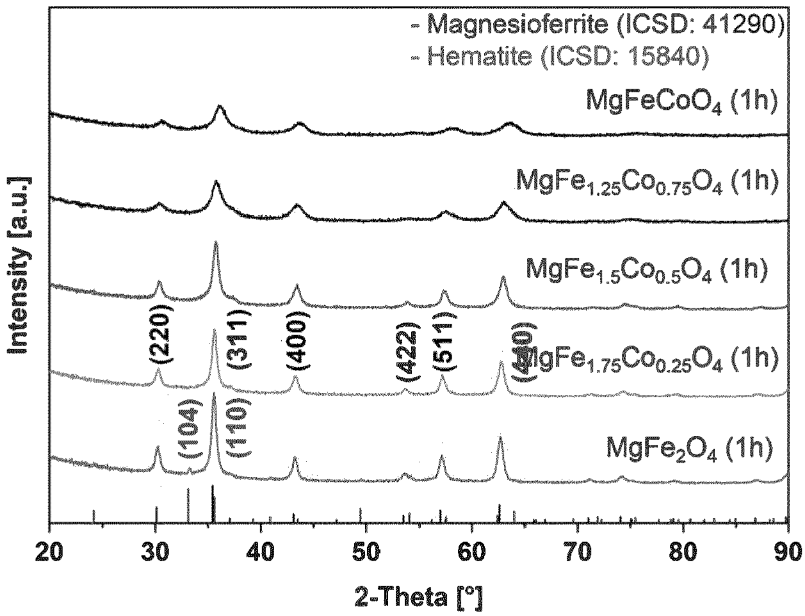
- Magnesioferrite (ICSD: 41290)
- Hematite (ICSD: 15840)
MgFeCoO4 (1h)
MgFe1.25Co0.75O4 (1h)
MgFe1.5Co0.5O4 (1h)
MgFe1.75Co0.25O4 (1h)
MgFe2O4 (1h)
(220)
(311)
(400)
(422)
(511)
(440)
(104)
(110)
Intensity [a.u.]
2-Theta [°]
20
30
40
50
60
70
80
90

Fig. 8

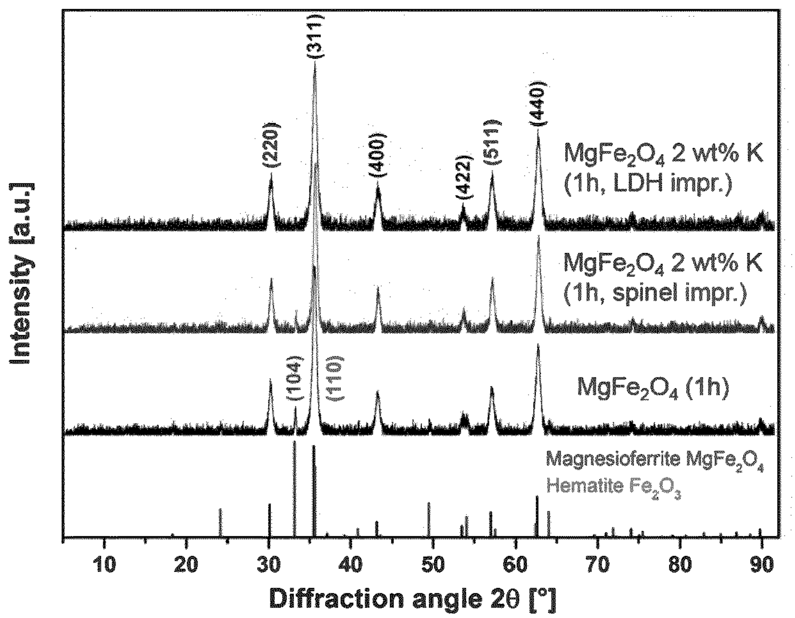
(311)
(220)
(400)
(422)
(511)
(440)
MgFe2O4 2 wt% K
(1h, LDH impr.)
MgFe2O4 2 wt% K
(1h, spinel impr.)
MgFe2O4 (1h)
(104)
(110)
Magnesioferrite MgFe2O4
Hematite Fe2O3
Intensity [a.u.]
Diffraction angle 2θ [°]
10
20
30
40
50
60
70
80
90

Fig. 9a

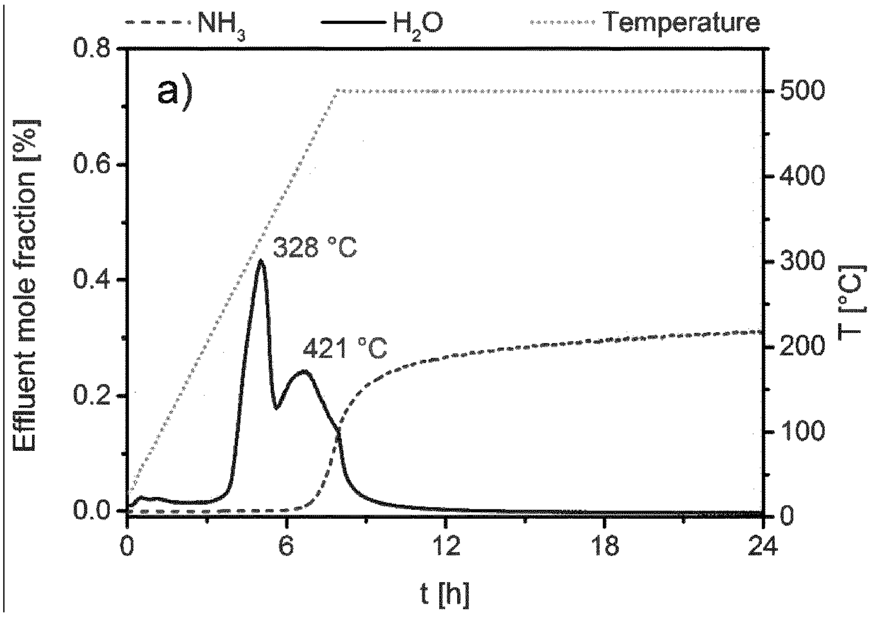
NH3
H2O
Temperature
a)
328 °C
421 °C
Effluent mole fraction [%]
T [°C]
t [h]
0.0
0.2
0.4
0.6
0.8
0
100
200
300
400
500
0
6
12
18
24

Fig. 9b

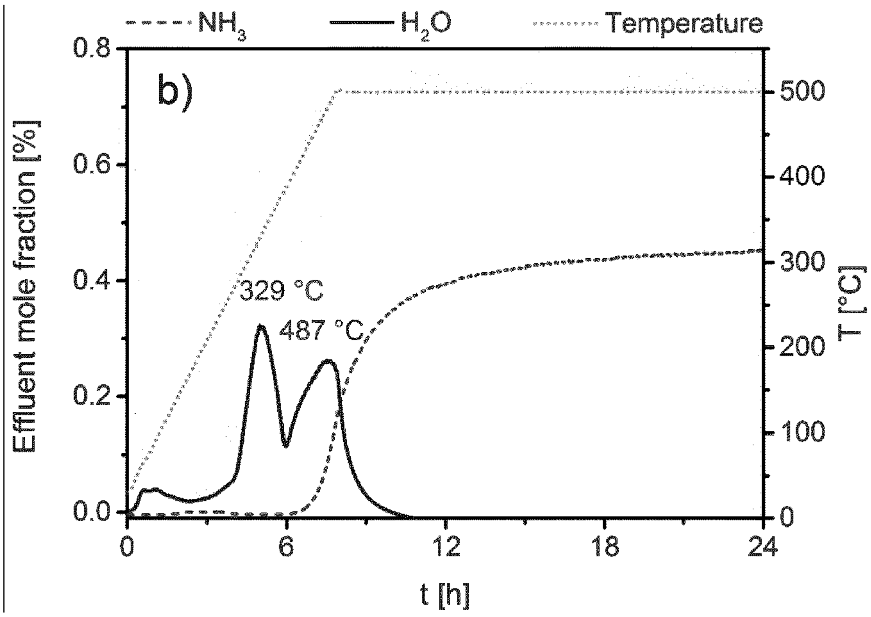
NH3
H2O
Temperature
b)
329 °C
487 °C
Effluent mole fraction [%]
T [°C]
t [h]
0.0
0.2
0.4
0.6
0.8
0
100
200
300
400
500
0
6
12
18
24

Fig. 10

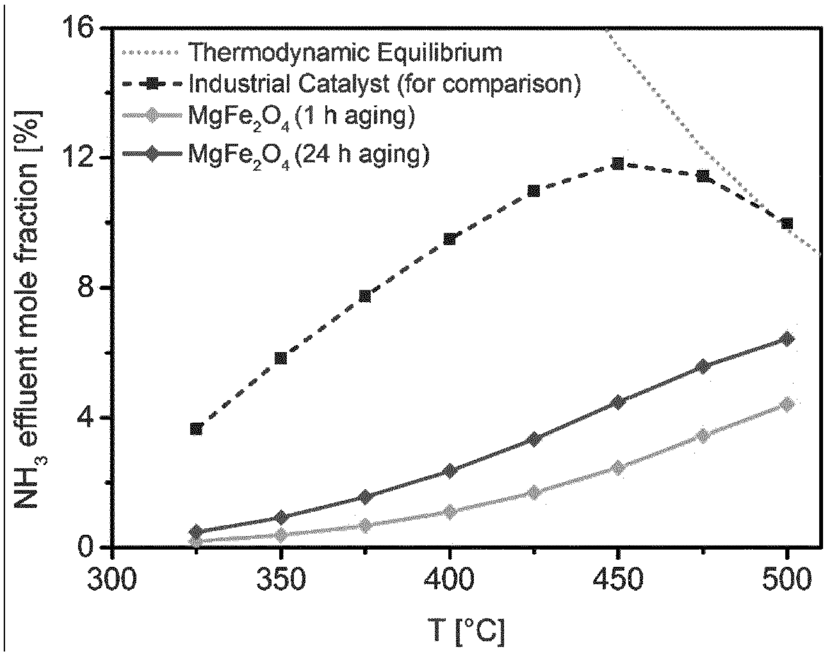

Thermodynamic Equilibrium
Industrial Catalyst (for comparison)
MgFe2O4 (1 h aging)
MgFe2O4 (24 h aging)
NH3 effluent mole fraction [%]
0
4
8
12
16
300
350
400
450
500
T [°C]


Fig. 11

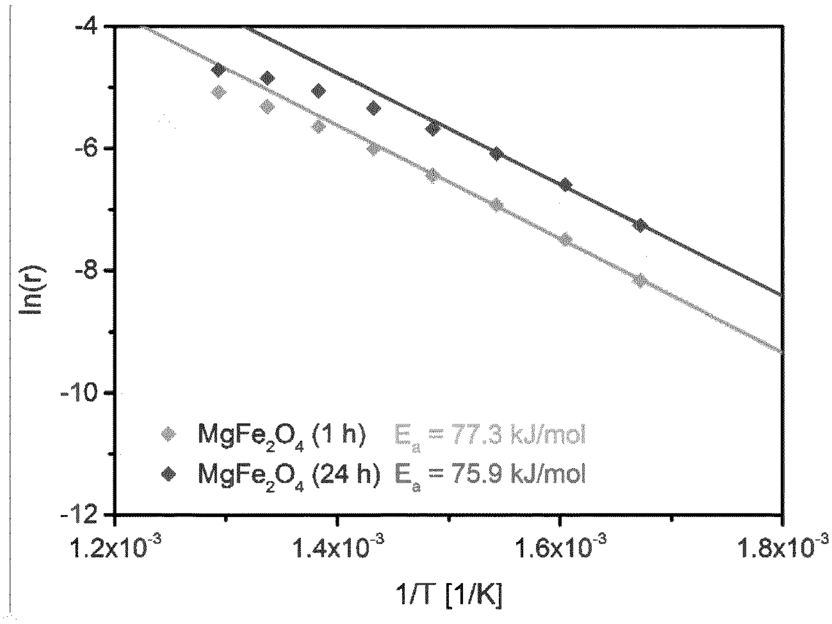

MgFe2O4 (1 h) Ea = 77.3 kJ/mol
MgFe2O4 (24 h) Ea = 75.9 kJ/mol
ln(r)
-4
-6
-8
-10
-12
1.2x10-3
1.4x10-3
1.6x10-3
1.8x10-3
1/T [1/K]

Fig. 12

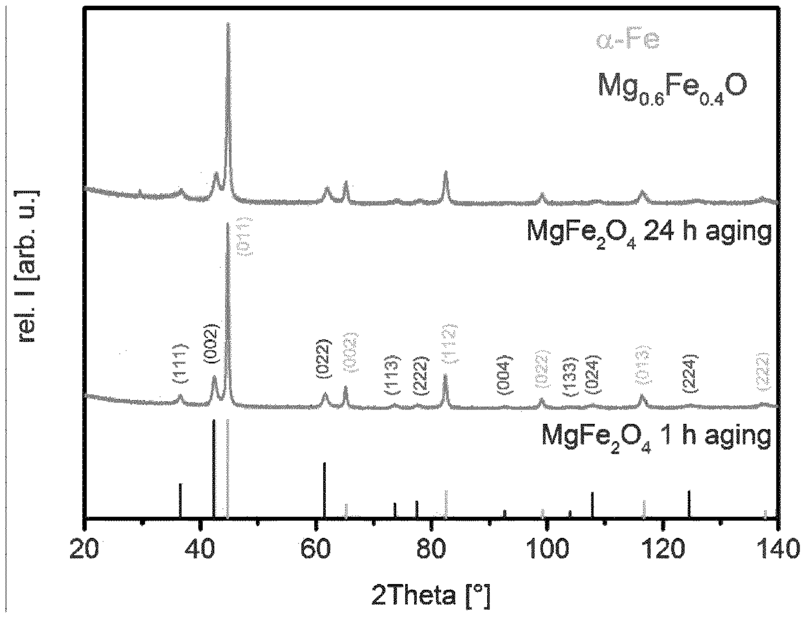
α-Fe
$Mg_{0.6}Fe_{0.4}O$
$MgFe_2O_4$ 24 h aging
$MgFe_2O_4$ 1 h aging
(111)
(002)
(011)
(022)
(002)
(113)
(222)
(112)
(004)
(022)
(133)
(024)
(013)
(224)
(222)
rel. I [arb. u.]
2Theta [°]
20
40
60
80
100
120
140

Fig. 13

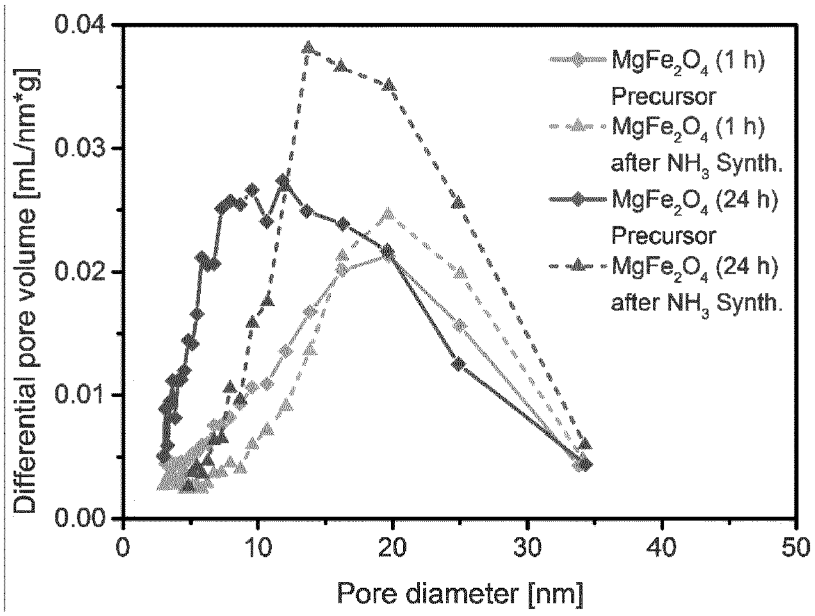
$MgFe_2O_4$ (1 h) Precursor
$MgFe_2O_4$ (1 h) after $NH_3$ Synth.
$MgFe_2O_4$ (24 h) Precursor
$MgFe_2O_4$ (24 h) after $NH_3$ Synth.
Differential pore volume [mL/nm*g]
0.00
0.01
0.02
0.03
0.04
Pore diameter [nm]
0
10
20
30
40
50

Fig. 14

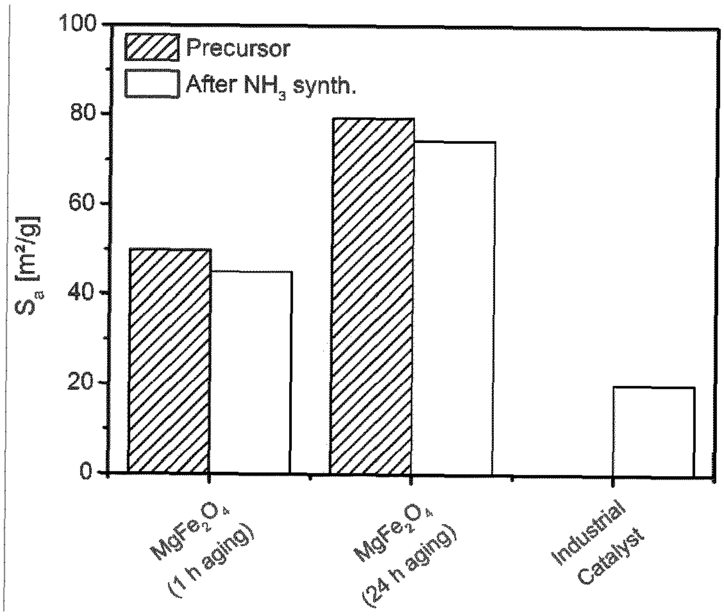
100
80
60
40
20
0
$S_a$ [m²/g]
Precursor
After $NH_3$ synth.
$MgFe_2O_4$ (1 h aging)
$MgFe_2O_4$ (24 h aging)
Industrial Catalyst

Fig. 15

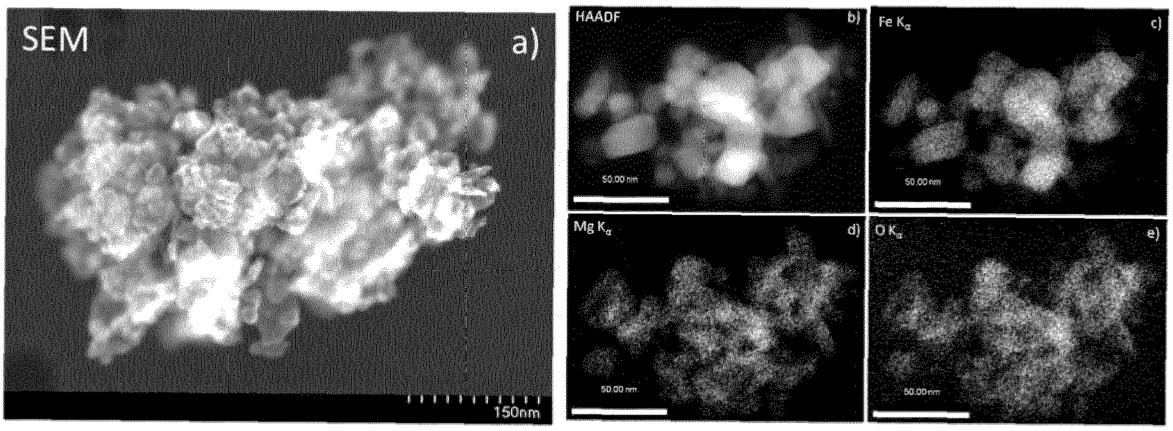
SEM
a)
150nm
HAADF
b)
Fe $K_\alpha$
c)
Mg $K_\alpha$
d)
O $K_\alpha$
e)
50.00 nm

Fig. 16

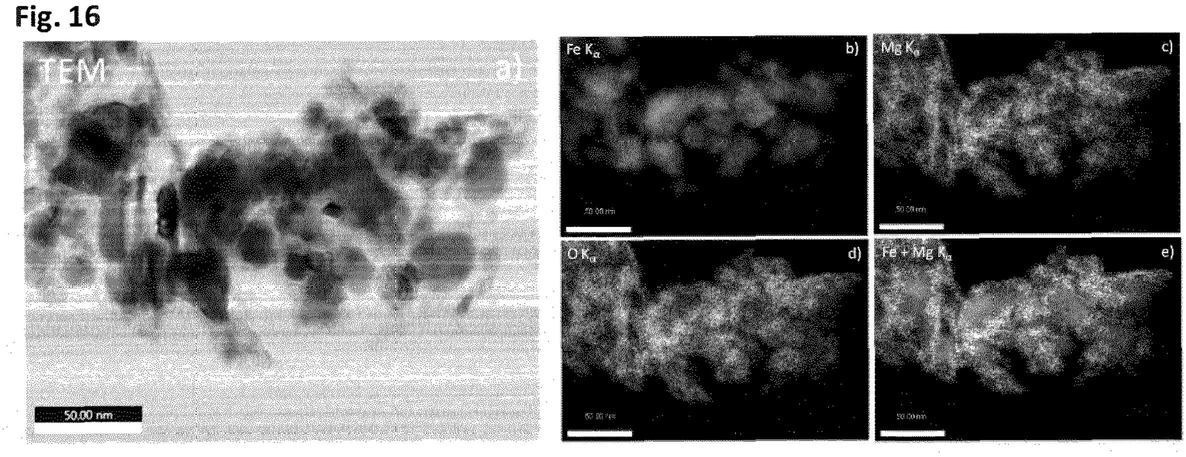
TEM
a)
50.00 nm
Fe Kα
b)
Mg Kα
c)
O Kα
d)
Fe + Mg Kα
e)

Fig. 17

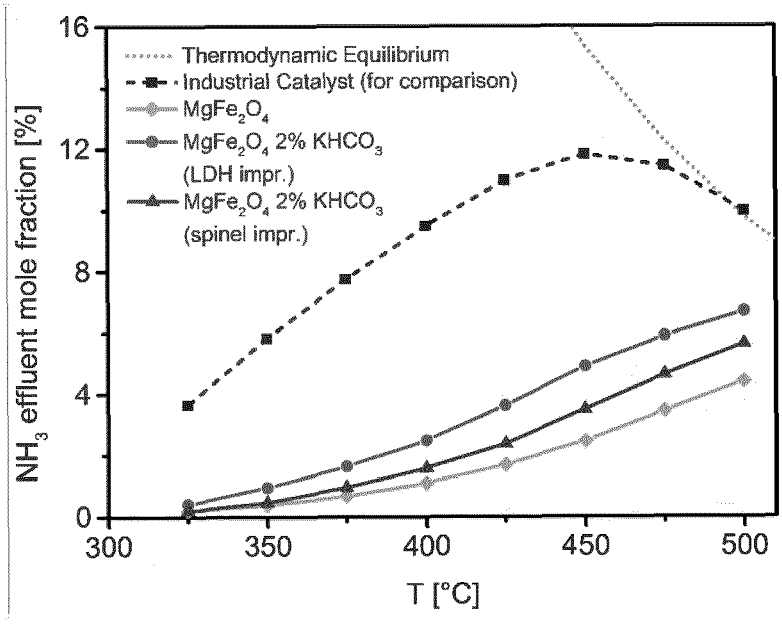
Thermodynamic Equilibrium
Industrial Catalyst (for comparison)
MgFe2O4
MgFe2O4 2% KHCO3
(LDH impr.)
MgFe2O4 2% KHCO3
(spinel impr.)
NH3 effluent mole fraction [%]
T [°C]
0
4
8
12
16
300
350
400
450
500

Fig. 18

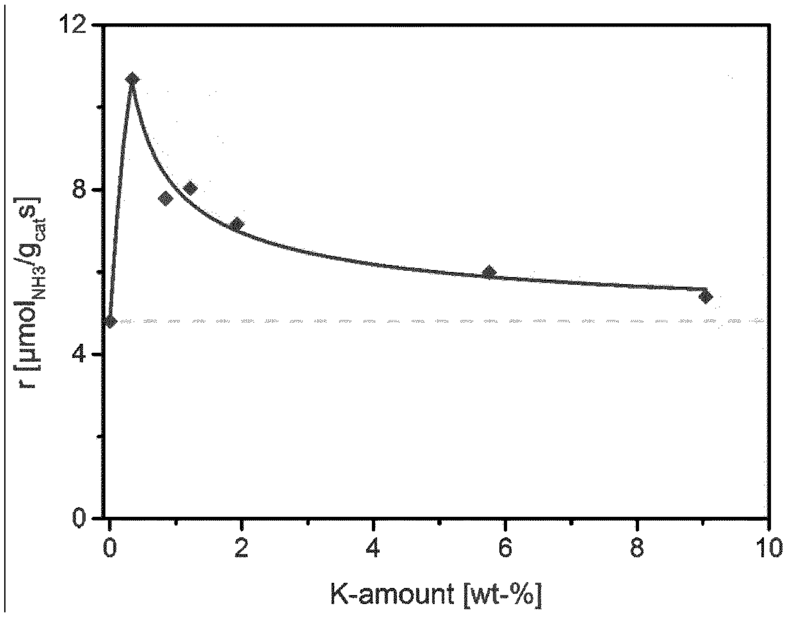
r [µmol$_{NH3}$/g$_{cat}$s]
K-amount [wt-%]
0
2
4
6
8
10
0
4
8
12

Fig. 19

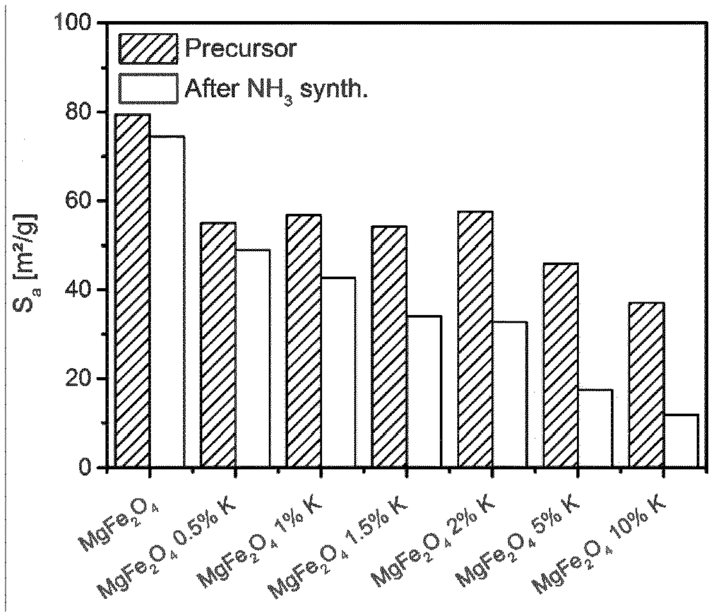
Precursor
After NH$_3$ synth.
S$_a$ [m²/g]
0
20
40
60
80
100
MgFe$_2$O$_4$
MgFe$_2$O$_4$ 0.5% K
MgFe$_2$O$_4$ 1% K
MgFe$_2$O$_4$ 1.5% K
MgFe$_2$O$_4$ 2% K
MgFe$_2$O$_4$ 5% K
MgFe$_2$O$_4$ 10% K

Fig. 20

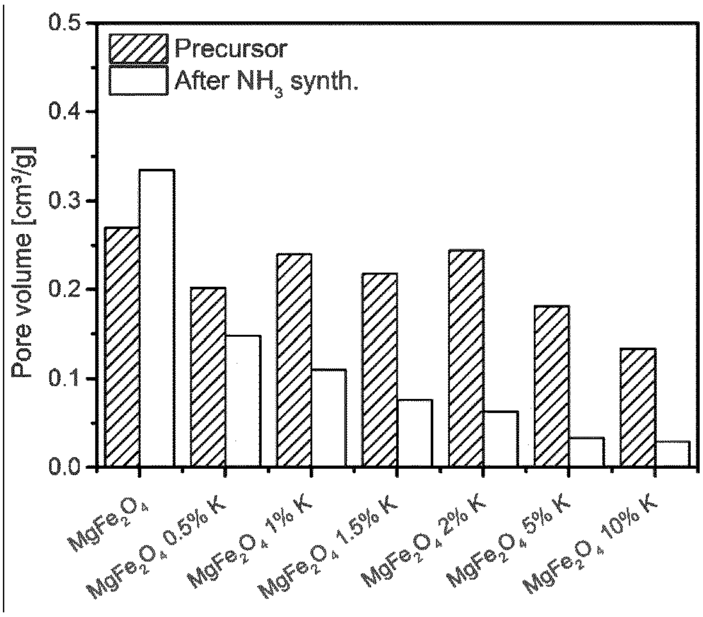
Precursor
After $NH_3$ synth.
Pore volume [cm³/g]
0.0
0.1
0.2
0.3
0.4
0.5
$MgFe_2O_4$
$MgFe_2O_4$ 0.5% K
$MgFe_2O_4$ 1% K
$MgFe_2O_4$ 1.5% K
$MgFe_2O_4$ 2% K
$MgFe_2O_4$ 5% K
$MgFe_2O_4$ 10% K

Fig. 21

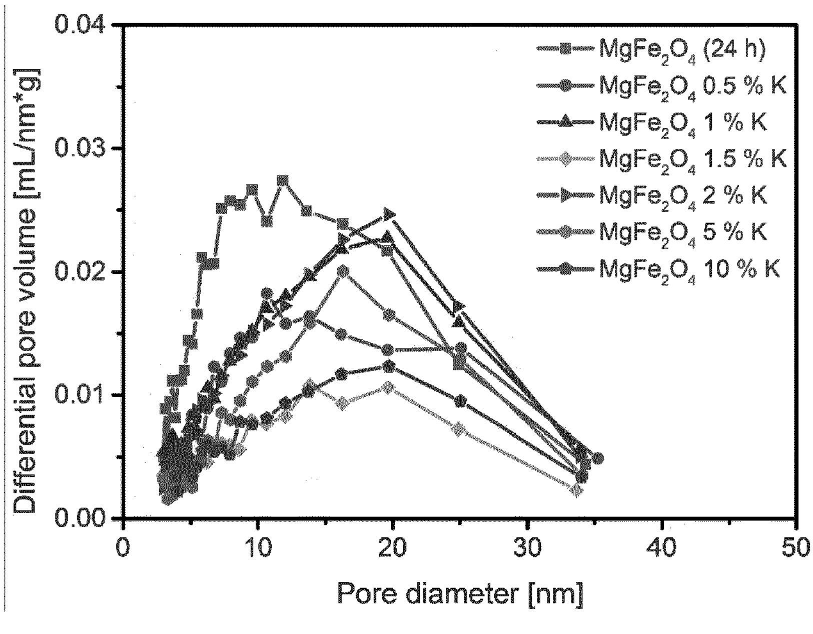
$MgFe_2O_4$ (24 h)
$MgFe_2O_4$ 0.5 % K
$MgFe_2O_4$ 1 % K
$MgFe_2O_4$ 1.5 % K
$MgFe_2O_4$ 2 % K
$MgFe_2O_4$ 5 % K
$MgFe_2O_4$ 10 % K
Differential pore volume [mL/nm*g]
0.00
0.01
0.02
0.03
0.04
0
10
20
30
40
50
Pore diameter [nm]

Fig. 22

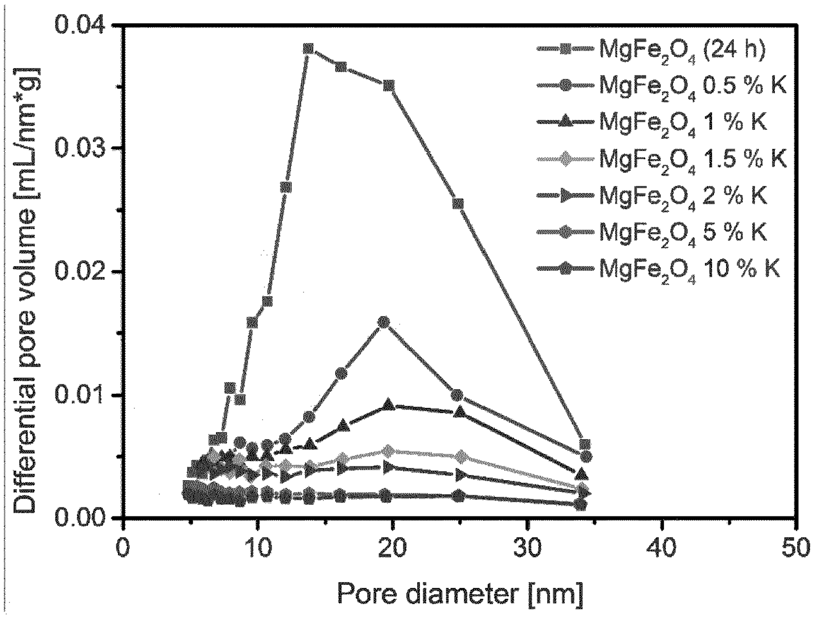

Differential pore volume [mL/nm*g]
Pore diameter [nm]
0.00
0.01
0.02
0.03
0.04
0
10
20
30
40
50
MgFe2O4 (24 h)
MgFe2O4 0.5 % K
MgFe2O4 1 % K
MgFe2O4 1.5 % K
MgFe2O4 2 % K
MgFe2O4 5 % K
MgFe2O4 10 % K


Fig. 23

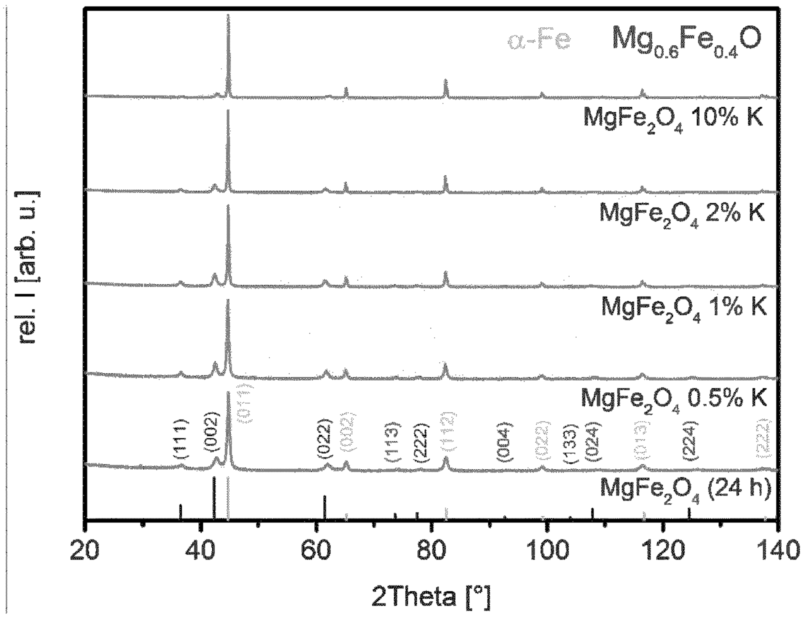

α-Fe
Mg0.6Fe0.4O
MgFe2O4 10% K
MgFe2O4 2% K
MgFe2O4 1% K
MgFe2O4 0.5% K
MgFe2O4 (24 h)
(111)
(002)
(011)
(022)
(002)
(113)
(222)
(112)
(004)
(022)
(133)
(024)
(013)
(224)
(222)
rel. I [arb. u.]
2Theta [°]
20
40
60
80
100
120
140

Fig. 24

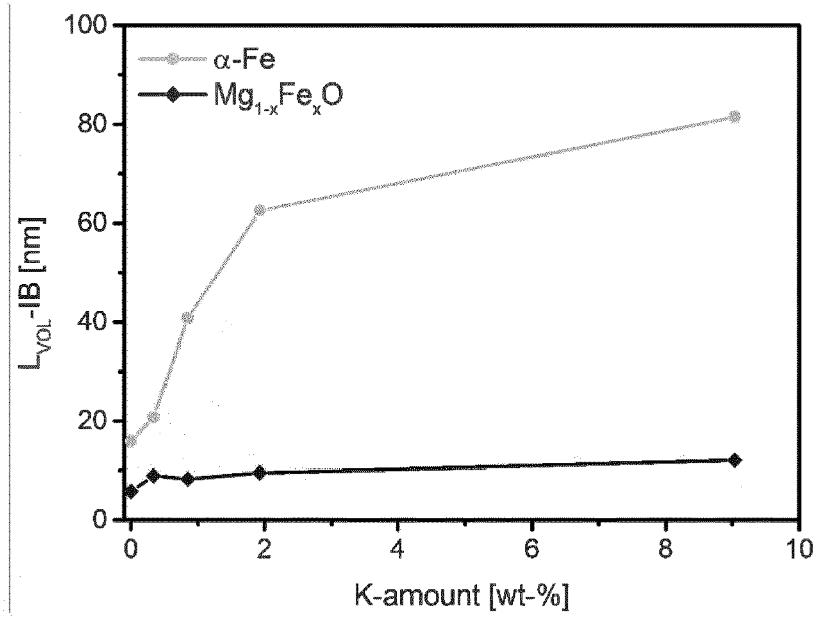
α-Fe
Mg1-xFexO
LVOL-IB [nm]
K-amount [wt-%]
0
20
40
60
80
100
0
2
4
6
8
10

Fig. 25

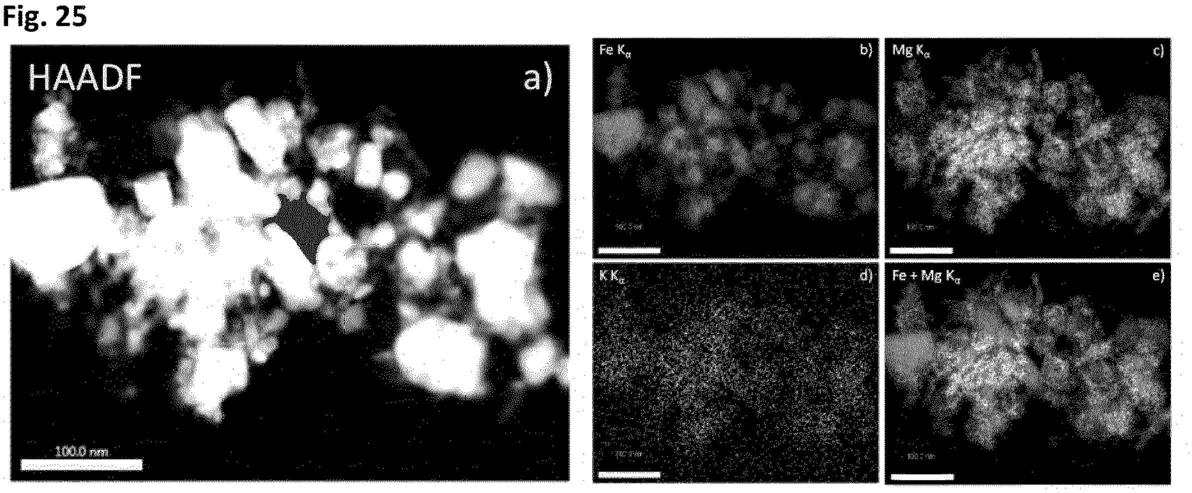
HAADF
a)
100.0 nm
Fe Kα
b)
Mg Kα
c)
K Kα
d)
Fe + Mg Kα
e)

Fig. 26

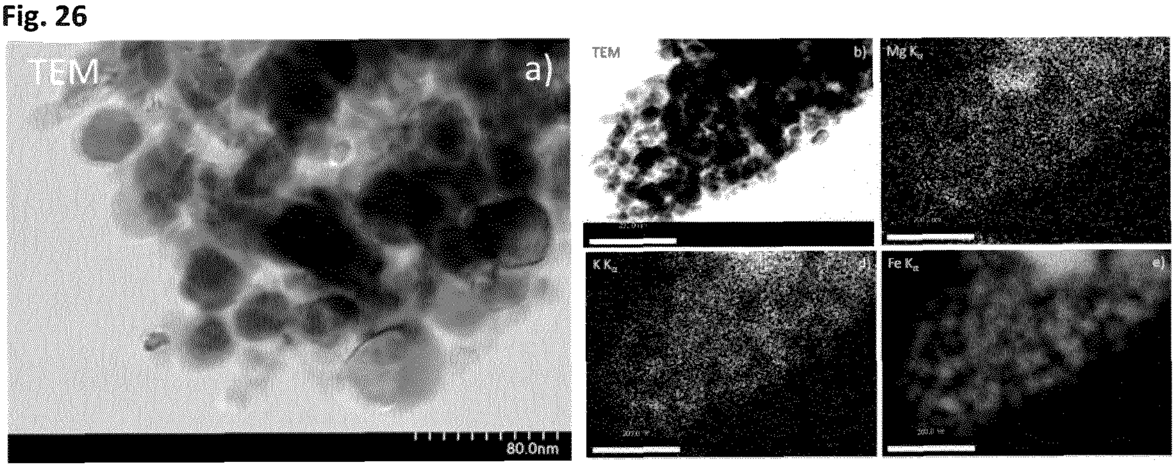
TEM
a)
80.0nm
TEM
b)
Mg Kα
c)
K Kα
d)
Fe Kα
e)

Fig. 27

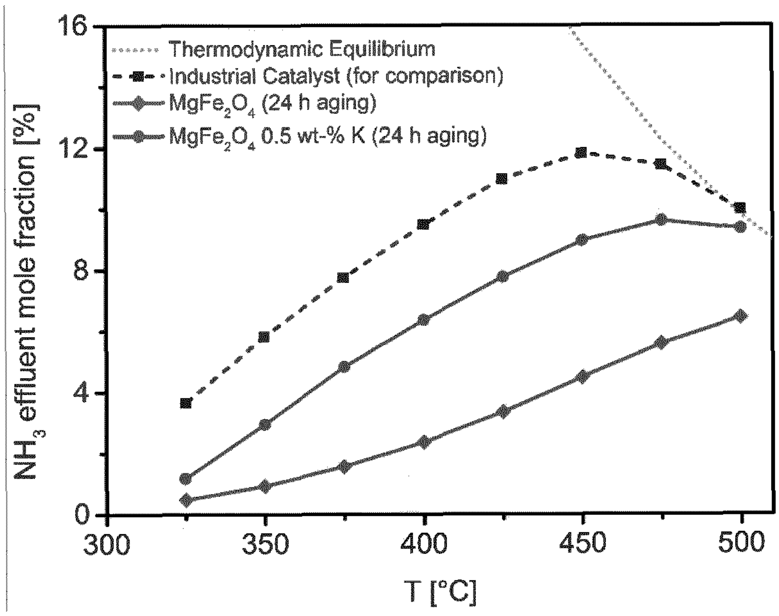
Thermodynamic Equilibrium
Industrial Catalyst (for comparison)
MgFe2O4 (24 h aging)
MgFe2O4 0.5 wt-% K (24 h aging)
NH3 effluent mole fraction [%]
T [°C]
0
4
8
12
16
300
350
400
450
500

Fig. 28

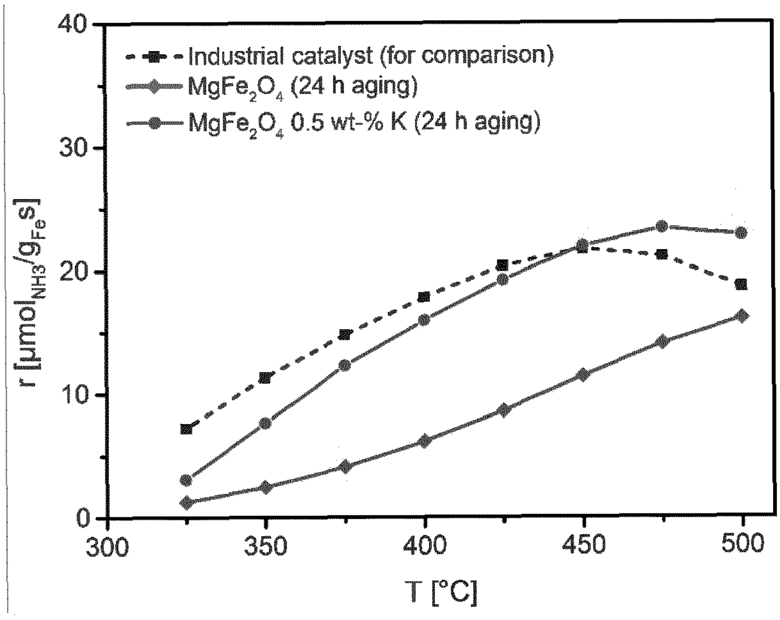
Industrial catalyst (for comparison)
MgFe2O4 (24 h aging)
MgFe2O4 0.5 wt-% K (24 h aging)
r [µmolNH3/gFes]
T [°C]
0
10
20
30
40
300
350
400
450
500

Fig. 29

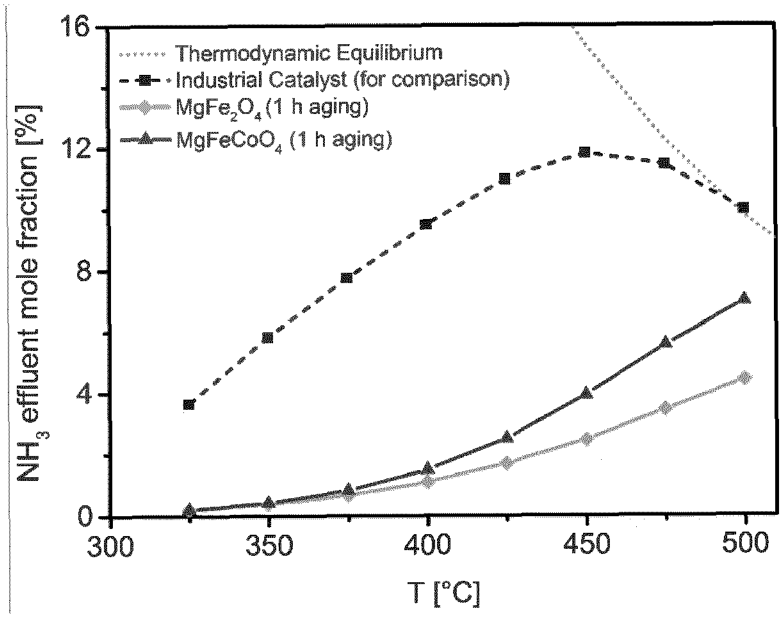
Thermodynamic Equilibrium
Industrial Catalyst (for comparison)
MgFe2O4 (1 h aging)
MgFeCoO4 (1 h aging)
NH3 effluent mole fraction [%]
T [°C]
0
4
8
12
16
300
350
400
450
500

Fig. 30

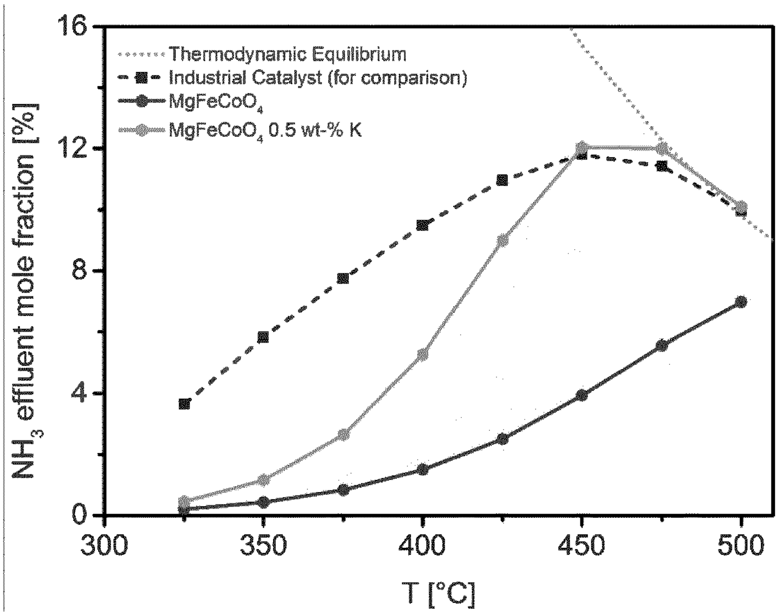
Thermodynamic Equilibrium
Industrial Catalyst (for comparison)
MgFeCoO4
MgFeCoO4 0.5 wt-% K
NH3 effluent mole fraction [%]
T [°C]
0
4
8
12
16
300
350
400
450
500

Fig. 31

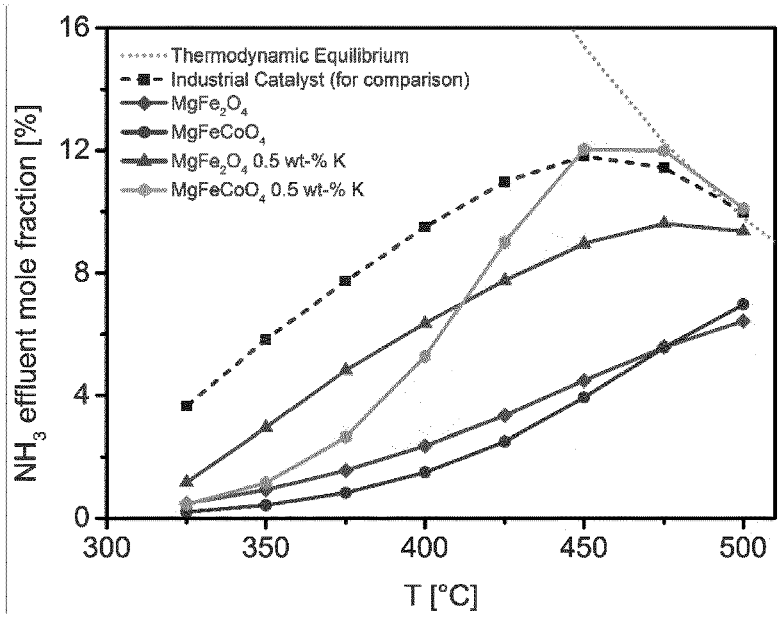
Thermodynamic Equilibrium
Industrial Catalyst (for comparison)
MgFe2O4
MgFeCoO4
MgFe2O4 0.5 wt-% K
MgFeCoO4 0.5 wt-% K
NH3 effluent mole fraction [%]
T [°C]
0
4
8
12
16
300
350
400
450
500

Fig. 32

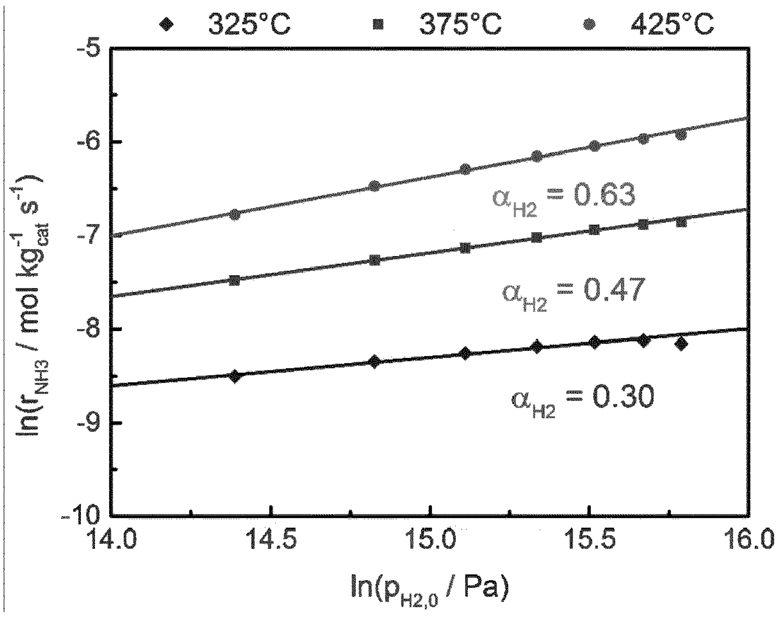
325°C
375°C
425°C
-5
-6
-7
-8
-9
-10
14.0
14.5
15.0
15.5
16.0
$\alpha_{H2}$ = 0.63
$\alpha_{H2}$ = 0.47
$\alpha_{H2}$ = 0.30
$\ln(r_{NH3}$ / mol $kg_{cat}^{-1}$ $s^{-1})$
$\ln(p_{H2,0}$ / Pa)

Fig. 33

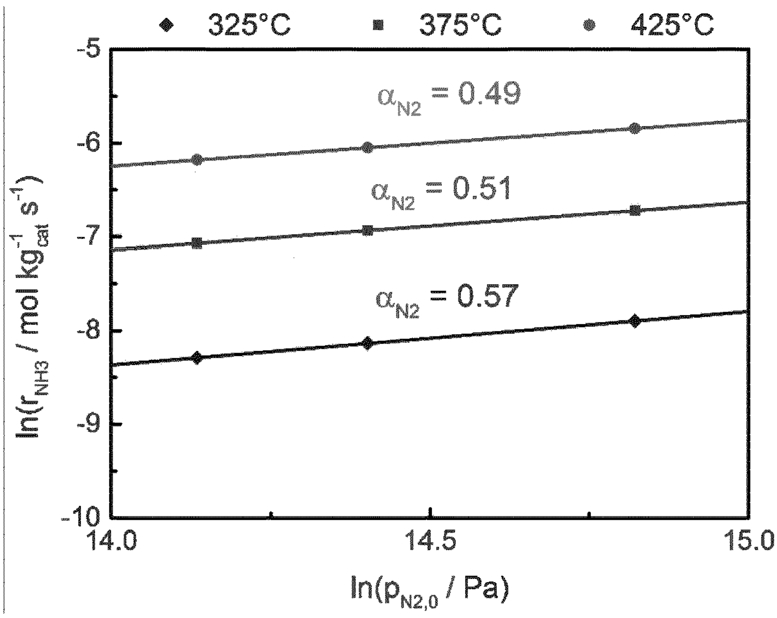
325°C
375°C
425°C
-5
-6
-7
-8
-9
-10
14.0
14.5
15.0
$\alpha_{N2}$ = 0.49
$\alpha_{N2}$ = 0.51
$\alpha_{N2}$ = 0.57
$\ln(r_{NH3}$ / mol $kg_{cat}^{-1}$ $s^{-1})$
$\ln(p_{N2,0}$ / Pa)

Fig. 34

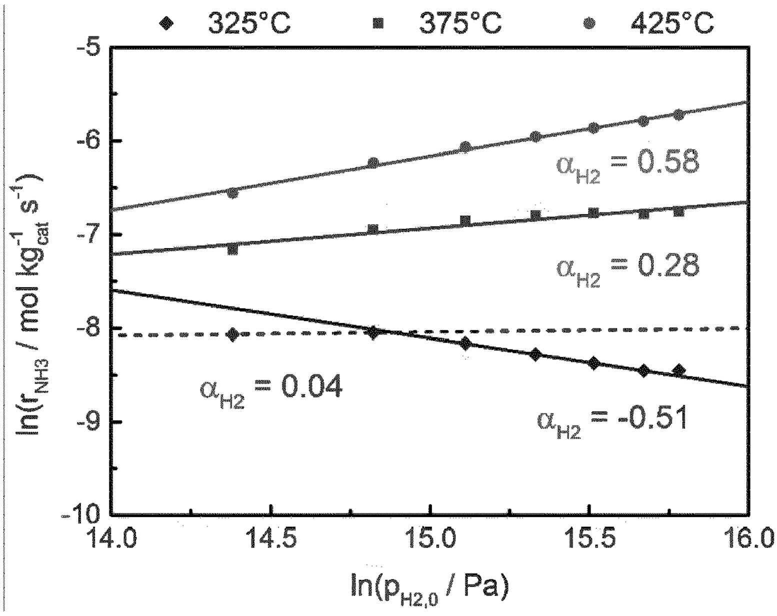
325°C
375°C
425°C
$\alpha_{H2}$ = 0.58
$\alpha_{H2}$ = 0.28
$\alpha_{H2}$ = 0.04
$\alpha_{H2}$ = -0.51
ln($r_{NH3}$ / mol $kg_{cat}^{-1}$ $s^{-1}$)
ln($p_{H2,0}$ / Pa)
-5
-6
-7
-8
-9
-10
14.0
14.5
15.0
15.5
16.0

Fig. 35

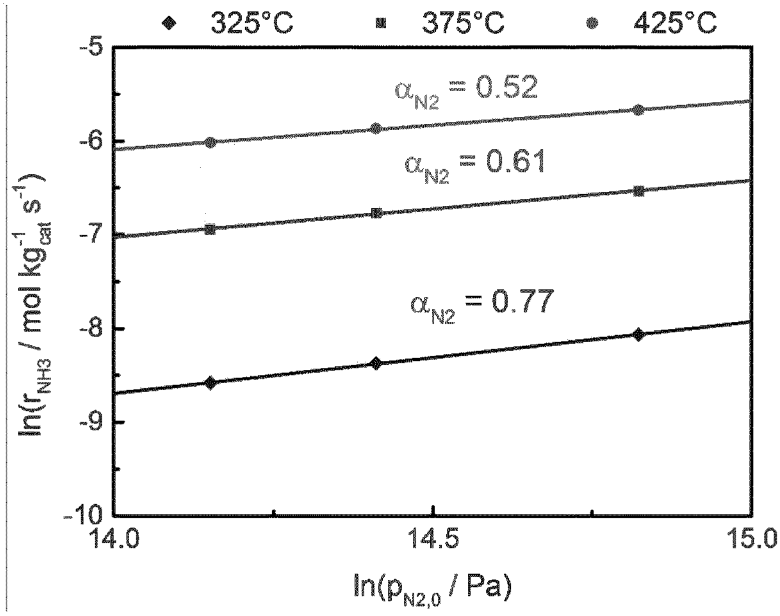
325°C
375°C
425°C
$\alpha_{N2}$ = 0.52
$\alpha_{N2}$ = 0.61
$\alpha_{N2}$ = 0.77
ln($r_{NH3}$ / mol $kg_{cat}^{-1}$ $s^{-1}$)
ln($p_{N2,0}$ / Pa)
-5
-6
-7
-8
-9
-10
14.0
14.5
15.0

Fig. 36

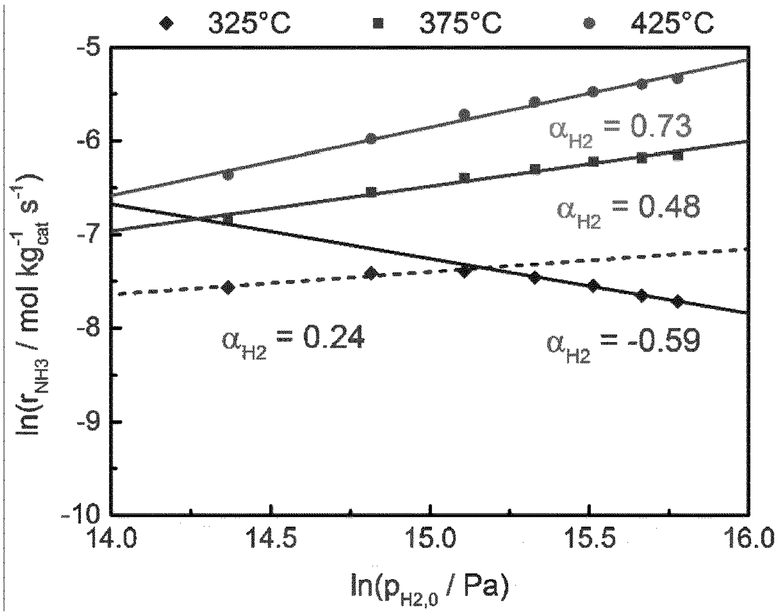
325°C
375°C
425°C
$\alpha_{H2}$ = 0.73
$\alpha_{H2}$ = 0.48
$\alpha_{H2}$ = 0.24
$\alpha_{H2}$ = -0.59
$\ln(r_{NH3}$ / mol $kg_{cat}^{-1}$ $s^{-1})$
$\ln(p_{H2,0}$ / Pa)
-5
-6
-7
-8
-9
-10
14.0
14.5
15.0
15.5
16.0

Fig. 37

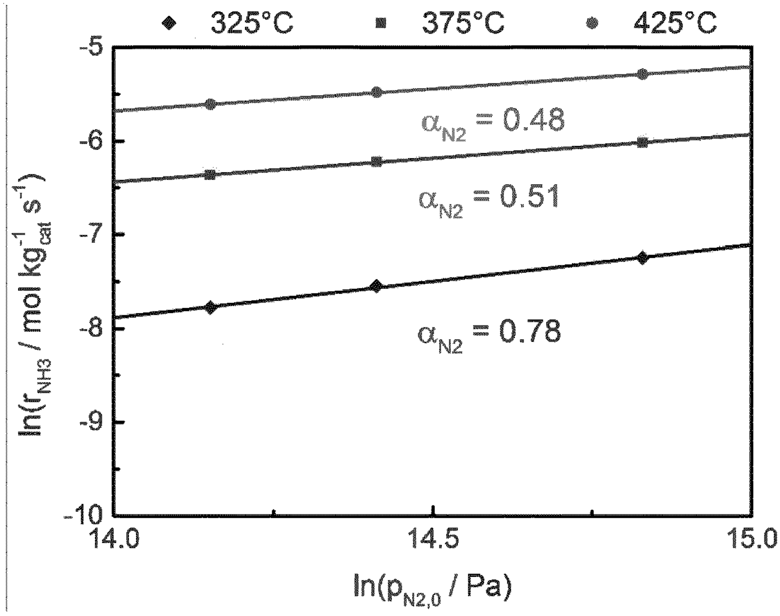
325°C
375°C
425°C
$\alpha_{N2}$ = 0.48
$\alpha_{N2}$ = 0.51
$\alpha_{N2}$ = 0.78
$\ln(r_{NH3}$ / mol $kg_{cat}^{-1}$ $s^{-1})$
$\ln(p_{N2,0}$ / Pa)
-5
-6
-7
-8
-9
-10
14.0
14.5
15.0

Fig. 38

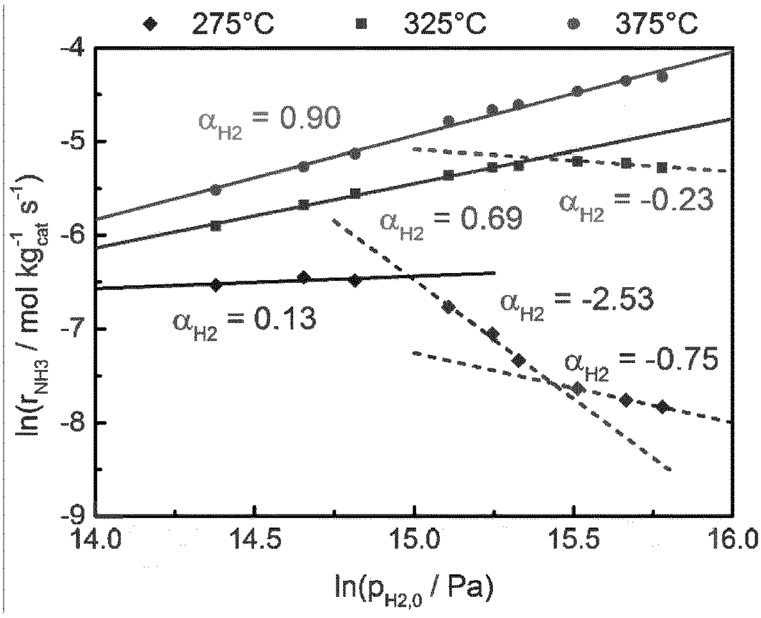
275°C
325°C
375°C
$\alpha_{H2}$ = 0.90
$\alpha_{H2}$ = 0.69
$\alpha_{H2}$ = -0.23
$\alpha_{H2}$ = -2.53
$\alpha_{H2}$ = 0.13
$\alpha_{H2}$ = -0.75
ln($r_{NH3}$ / mol $kg_{cat}^{-1}$ $s^{-1}$)
ln($p_{H2,0}$ / Pa)
-4
-5
-6
-7
-8
-9
14.0
14.5
15.0
15.5
16.0

Fig. 39

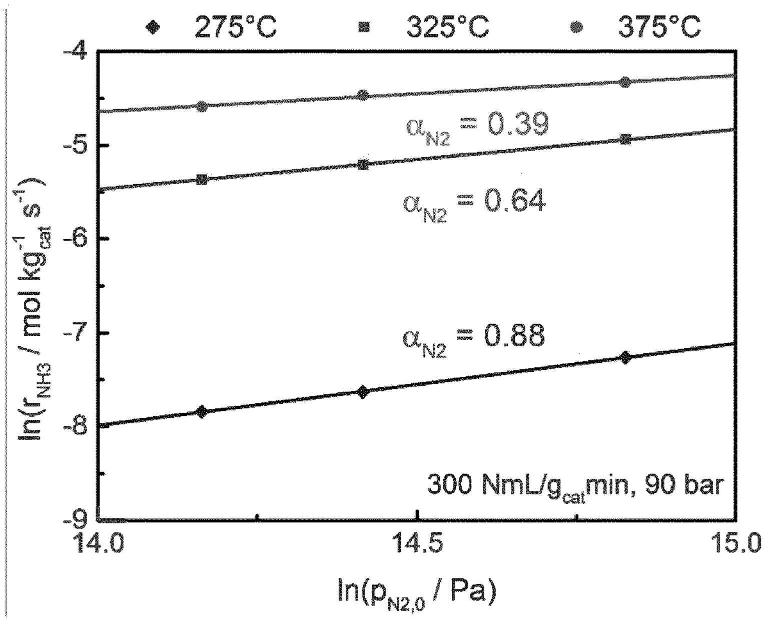
275°C
325°C
375°C
$\alpha_{N2}$ = 0.39
$\alpha_{N2}$ = 0.64
$\alpha_{N2}$ = 0.88
300 NmL/$g_{cat}$min, 90 bar
ln($r_{NH3}$ / mol $kg_{cat}^{-1}$ $s^{-1}$)
ln($p_{N2,0}$ / Pa)
-4
-5
-6
-7
-8
-9
14.0
14.5
15.0

Fig. 40

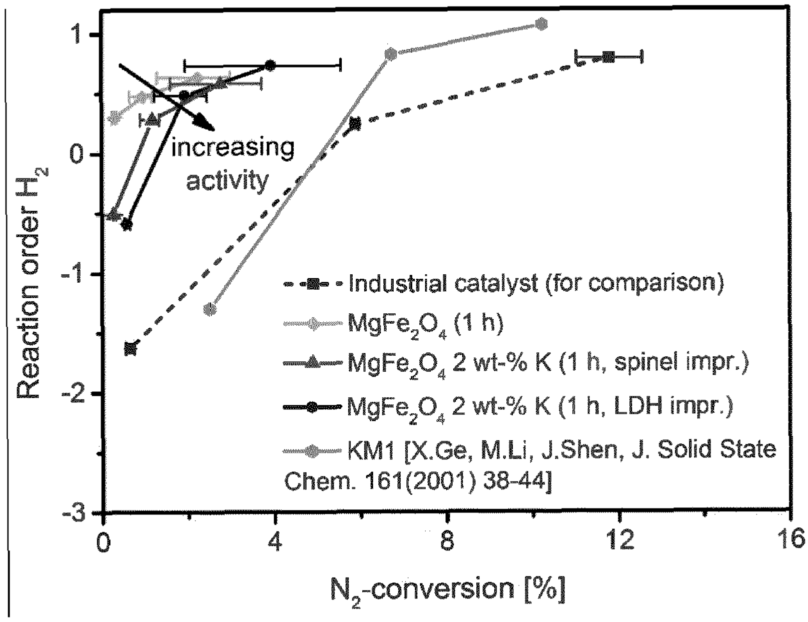
Reaction order $H_2$
$N_2$-conversion [%]
increasing activity
Industrial catalyst (for comparison)
$MgFe_2O_4$ (1 h)
$MgFe_2O_4$ 2 wt-% K (1 h, spinel impr.)
$MgFe_2O_4$ 2 wt-% K (1 h, LDH impr.)
KM1 [X.Ge, M.Li, J.Shen, J. Solid State Chem. 161(2001) 38-44]

Fig. 41

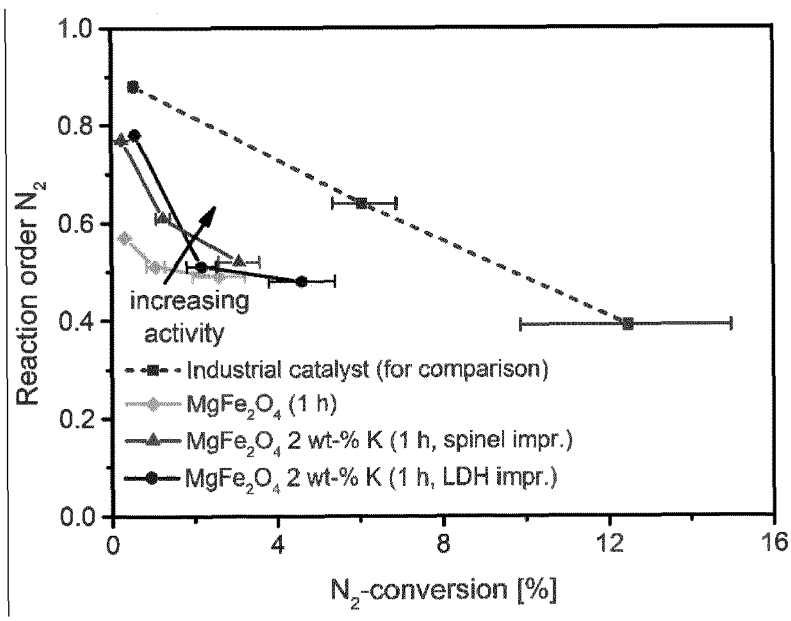
Reaction order $N_2$
$N_2$-conversion [%]
increasing activity
Industrial catalyst (for comparison)
$MgFe_2O_4$ (1 h)
$MgFe_2O_4$ 2 wt-% K (1 h, spinel impr.)
$MgFe_2O_4$ 2 wt-% K (1 h, LDH impr.)

Fig. 42

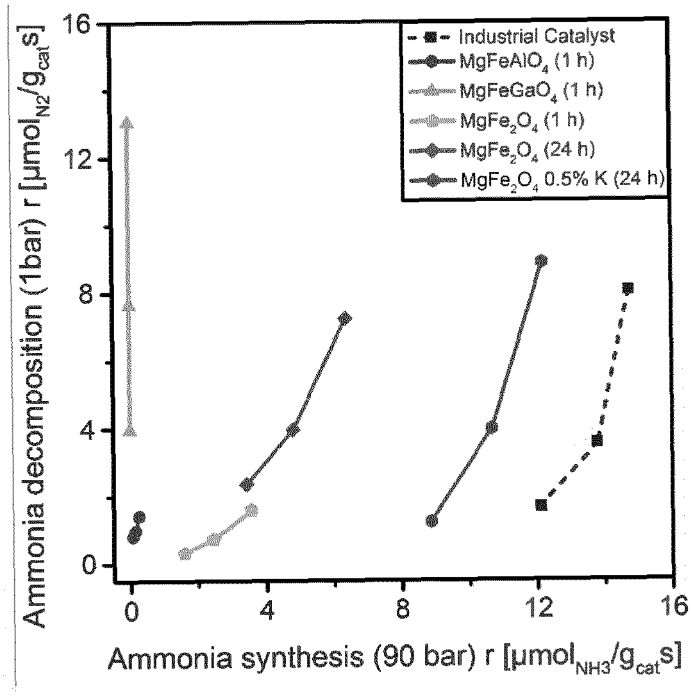
Industrial Catalyst
MgFeAlO4 (1 h)
MgFeGaO4 (1 h)
MgFe2O4 (1 h)
MgFe2O4 (24 h)
MgFe2O4 0.5% K (24 h)
Ammonia decomposition (1bar) r [µmolN2/gcats]
Ammonia synthesis (90 bar) r [µmolNH3/gcats]
0
4
8
12
16

Europäisches Patentamt
European Patent Office
Office européen des brevets

# EUROPEAN SEARCH REPORT

Application Number
EP 22 15 9972

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | OBALOVA L ET AL: "Effect of potassium in calcined Co-Mn-Al layered double hydroxide on the catalytic decomposition of N"2O", APPLIED CATALYSIS B. ENVIRONMENTAL, ELSEVIER, AMSTERDAM, NL, vol. 90, no. 1-2, 25 July 2009 (2009-07-25), pages 132-140, XP026139922, ISSN: 0926-3373, DOI: 10.1016/J.APCATB.2009.03.002 [retrieved on 2009-03-13] * abstract * * page 132, right-hand column, line 26 - page 133, right-hand column, line 32; figures 1a,1b,3 * ----- | 1-15 | INV. B01J23/00 B01J23/78 B01J37/18 B01J27/236 C01B21/00 C01C1/00 |
| X | REIN DENISE ET AL: "The roles of Co-precipitation pH, phase-purity and alloy formation for the ammonia decomposition activity of Ga-promoted Fe/MgO catalysts", APPLIED CATALYSIS A: GENERAL, vol. 548, 5 September 2017 (2017-09-05), pages 52-61, XP085246073, ISSN: 0926-860X, DOI: 10.1016/J.APCATA.2017.09.004 * abstract * * page 53, left-hand column, line 36 - right-hand column, line 7 * * page 54, left-hand column, lines 28-36 * * page 59, right-hand column, line 14 - page 60, left-hand column, line 7 * * figures 1a,1b,8a,8b * ----- | 1-14 | |

| TECHNICAL FIELDS SEARCHED (IPC) |
|---|
| B01J |
| C01B |
| C01C |

The present search report has been drawn up for all claims

1

| Place of search | Date of completion of the search | Examiner |
|---|---|---|
| Munich | 21 July 2022 | Fischbach, Malaika |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **H. LIU.** *Catalysis Today,* 2017, vol. 297, 276-291
- Structure and Surface Chemistry of Industrial Ammonia Synthesis Catalysts. **P. STOLTZE.** Ammonia Catalysis and Manufacture. Springer, 1995
- **R. SCHLÖGL.** Handbook of Heterogeneous Catalysis. Wiley-VCH, 2008
- **B. FASTRUP.** *Catal. Lett.,* 1992, vol. 14, 233-239
- **J. FOLKE.** *Chem. Ing. Tech.,* 2020, vol. 92, 1567-1573
- **K. ORTEGA.** *ChemCatChem,* 2017, vol. 9, 659-671
- *Journal of Catalysis,* 2005, vol. 230, 309-312
- **ORTEGA.** *ChemCatChem,* 2017, vol. 9, 659-671
- M. Appl, Ammonia, 2. Production. Ullmann's Encyclopedia of Industrial Chemistry. 2012
- M. Appl, Ammonia, 2. Production. *Ullmann's Encyclopedia of Industrial Chemistry,* 2012
- *J. Solid State Chem.,* 2001, vol. 161, 38-44
- **R. E. DINNEBIER ; A. LEINEWEBER ; J. S. O. EVANS.** Rietveld Refinement Practical Powder Diffraction Pattern Analysis using TOPAS. De Gruyter, 2018
- *ChemCatChem,* 2017, vol. 9, 659-671
- **K.F. ORTEGA ; D. REIN ; C. LETTMANN ; J. HEESE ; F. OZCAN ; M. HEIDELMANN ; J. FOLKE ; K. KÄHLER ; R. SCHLÖGL ; M. BEHRENS.** *ChemCatChem,* 2017, vol. 9, 659-671
- *Chem. Ing. Tech.,* 2020, vol. 92, 1567-1573
- **M. APPL, AMMONIA, 2. PRODUCTION.** Ullmann's Encyclopedia of Industrial Chemistry. 2012
- *Physica Scripta,* 1987, vol. 36, 824-864
- *Journal of Catalysis,* 1999, vol. 188, 83-89